Europäisches Patentamt

(19) European Patent Office

Office européen des brevets

(11) Publication number: **0 076 456**
**B1**

# (12) EUROPEAN PATENT SPECIFICATION

(45) Date of publication of patent specification: **17.12.86**

(21) Application number: **82108979.4**

(22) Date of filing: **28.09.82**

(51) Int. Cl.$^4$: **C 04 B 35/46**, H 01 G 4/12, H 01 B 3/12

(54) Dielectric ceramic materials with insulated boundaries between crystal grains, and process for preparation.

(30) Priority: 01.10.81 JP 156402/81
04.12.81 JP 195439/81
08.12.81 JP 197312/81
08.12.81 JP 197313/81
11.12.81 JP 200499/81
16.12.81 JP 201692/81
16.12.81 JP 201693/81
16.12.81 JP 201694/81
16.12.81 JP 201695/81

(43) Date of publication of application:
13.04.83 Bulletin 83/15

(45) Publication of the grant of the patent
17.12.86 Bulletin 86/51

(84) Designated Contracting States:
DE FR GB IT NL

(56) References cited:
DE-A-3 037 968
GB-A-2 015 977
US-A-3 933 668
US-A-3 933 668
CHEMICAL ABSTRACTS, vol.83, no.12, 22nd
September 1975, page 651, no. 107135p,
Columbus, Ohio, US

(73) Proprietor: Taiyo Yuden Co., Ltd.
2-12, Ueno 1-chome
Taito-ku Tokyo (JP)

(72) Inventor: Kiyoshi, Murase
127-14, Hanatakamachi
Takasaki-shi Gunma-ken (JP)
Inventor: Nobutatsu, Yamaoka
226-7, Nakasatomi Harunamachi
Gunma-gun Gunma-ken (JP)
Inventor: Masayuki, Fujimoto
7-15-13, Hachiyamamachi Shibuya-ku
Tokyo (JP)
Inventor: Kazuji, Onigata
5-9-5, Annaka
Annaka-shi Gunma-ken (JP)

(74) Representative: Wey, Hans-Heinrich, Dipl.-Ing.
et al
Patentanwälte Müller-Börner & Wey
Widenmayerstrasse 49
D-8000 München 22 (DE)

(56) References cited:
CHEMICAL ABSTRACTS vol. 88, no. 24, June
1978, page 739, no. 181285g, COLUMBUS;
Ohio, US

Courier Press, Leamington Spa, England.

Description

Our invention relates to ceramic materials in general and, in particular, to those composed principally of strontium titanate ($SrTiO_3$) and especially well suited for use as dielectrics of capacitors. Still more particularly, our invention pertains to ceramic materials of polycrystalline structure having electrically insulated boundaries between the crystal grains with a view to an increase in apparent relative dielectric constant. The invention also particularly concerns a process for the fabrication of coherent bodies of such ceramic materials.

The polycrystalline ceramics having insulated intergranular boundaries are generally referred to as the "boundary layer ceramics" in the art. An example is described and claimed in United States Patent 3,933,668 issued to Takahashi et al. on January 20, 1976. The boundary layer ceramic according to this U.S. Patent consists essentially of a major proportion of $SrTiO_3$, a minor proportion of niobium oxide ($Nb_2O_5$) or tantalum oxide ($Ta_2O_5$), and a minor proportion of germanium dioxide ($GeO_2$) or zinc oxide (ZnO). The polycrystalline ceramic of this fundamental composition has further diffused therein bismuth trioxide ($Bi_2O_3$) or its admixture with litharge (PbO) and boric oxide ($B_2O_3$) for the insulation of the boundaries between its crystal grains.

An objection to this known boundary layer ceramic is that its crystal grains average in diameter only from about 40 to 60 micrometers (μm). Its apparent relative dielectric constant is therefore up to 75,000 or so. Although this value is satisfactory for most intended applications of the material, there are strong demands today for ceramics with still higher relative dielectric constants.

Our invention meets the present day demands for ceramics with such extremely high relative dielectric constants by making the crystal grains of boundary layer ceramics much greater in size than the prior art. This task has not been solved up to now, though the grain growth effect of $SiO_2$ and $Al_2O_3$ on $SrTiO_3$ was disclosed in GB—A—2 015 977.

The invention may be summarized as a boundary layer ceramic having insulated boundaries between its constituent crystal grains, composed of primary and secondary ingredients forming in combination a polycrystalline ceramic proper, and insulating substances dispersed in the intergranular boundaries of the ceramic proper. The primary ingredients comprise approximately 90.68 to 99.88 percent by weight $SrTiO_3$, approximately 0.07 to 5.32 percent by weight of at least one of $Nb_2O_5$, tungstic oxide ($WO_3$) and $Ta_2O_5$, and approximately 0.02 to 4.00 percent by weight of at least one of $GeO_2$, ZnO and black copper oxide (CuO), the percentages of these primary ingredients being relative to each other. The secondary ingredients comprise approximately 0.02 to 0.10 part by weight silica ($SiO_2$) and approximately 0.01 to 0.03 part by weight aluminum oxide ($Al_2O_3$) with respect to 100 parts by weight of the listed primary ingredients, the ratio in weight of $SiO_2$ to $Al_2O_3$ being approximately from 1.5 to 5.0. The insulating substances comprise approximately 0.02 to 2.90 percent by weight PbO, approximately 0.10 to 4.38 percent by weight $Bi_2O_3$, and approximately 0.001 to 0.18 percent by weight $B_2O_3$. The percentages of the insulating substances are all with respect to the total weight of the noted primary and secondary ingredients in use.

Of the above ingredients of the boundary layer ceramics in accordance with our invention, the group of metal oxides, $Nb_2O_5$, $WO_3$ and $Ta_2O_5$, function principally to make the ceramics semiconductive. The other group of oxides, $GeO_2$, ZnO and CuO, are effective primarily to accelerate the growth of the crystal grains.

Used in the above specified ranges of proportions, the secondary ingredients $SiO_2$ and $Al_2O_3$ both serve to make the crystal grains of the ceramics greater in size than hitherto, namely from 60 to 120 micrometers (μm) in diameter. Generally, the greater the crystal grains of ceramics in size, the higher are their relative dielectric constants. The apparent relative dielectric constants of the ceramics in accordance with our invention are not less than 80.000. As has been ascertained by experiment, moreover, the dielectric loss tangents (the tangents of the dielectric loss angles) of the ceramics in accordance with our invention are not more than one percent ($1\times10^{-2}$), and their resistivities are not less than $1.0\times10^{11}$ ohm-centimeters. The ceramics with these characteristics are admirably well suited for use as dielectrics of capacitors.

It will of course be understood that the listed ingredients of the ceramics in accordance with our invention perform not just the above recited functions by themselves. They intricately interact to make up the ceramics of the highly favorable electrical properties.

Our invention also provides a method of fabricating coherent bodies of the above ceramic compositions. The method dictates the preparation, first of all, of uninsulated ceramic bodies composed of the primary and secondary ingredients set forth previously. Then the three insulating substances, PbO, $Bi_2O_3$ and $B_2O_3$, are suitably layered on the uninsulated ceramic bodies, which are then heated to cause diffusion of the insulating substances throughout the intergranular boundaries of the ceramic bodies.

Preferably, the uninsulated ceramic bodies are prepared by firing moldings of the primary and secondary ingredients in a reductive atmosphere. On these uninsulated ceramic bodies are then coated a paste of the insulating substances. Then the coated bodies are heated in an oxidative atmosphere to cause diffusion of the insulating substances. The use of a rubber-lined bowl mill is recommended for blending together the primary and secondary ingredients as it makes possible the accurate proportioning of $SiO_2$ and $Al_2O_3$, which is essential to increase the size of the crystal grains to a desired degree.

The above and other features and advantages of this invention and the manner of attaining them will become more apparent and the invention itself will best be understood, from a study of the following description taken together with the attached drawings, in which:—

Figure 1 is a highly diagrammatic section through a body of insulated boundary layer ceramic material in accordance with our invention, the ceramic body being shown electroded for use as a capacitor; and

Figure 2 is a graphic representation of the temperature dependencies of the relative dielectric constants of test pieces of various ceramic compositions in accordance with our invention.

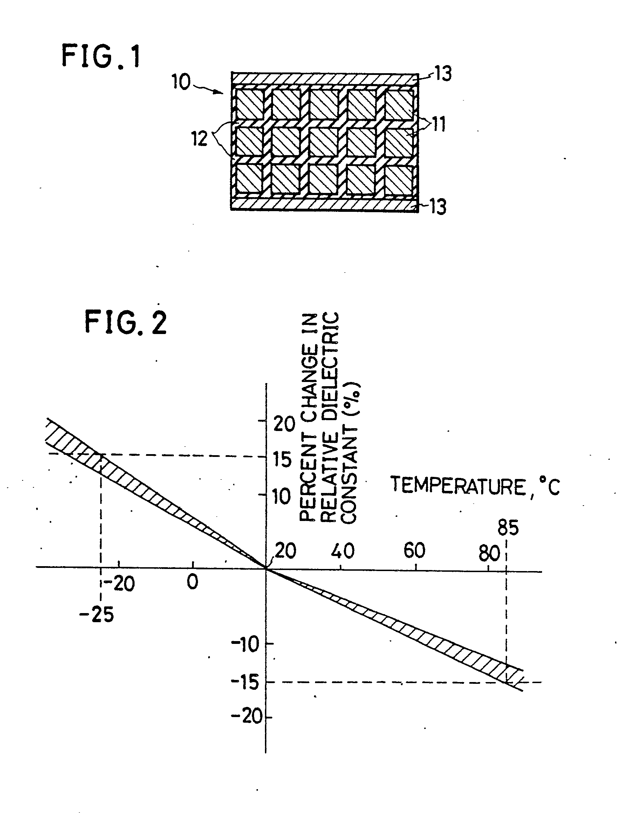

Although the showing of Figure 1 is highly diagrammatic, it will nevertheless be seen that the boundary layer ceramic body 10 of our invention is of polycrystalline structure, composed of an aggregate of semiconductive crystal grains 11 isolated from one another by boundary layers 12. Diffused throughout these boundary layers are PbO, $Bi_2O_3$ and $B_2O_3$ which serve to insulate the crystal grains 11 from one another. The ceramic body 10 can be converted into a capacitor by being electroded as at 13. These electrodes may be formed by coating a commercial silver paste on the opposite faces of the ceramic body 10 and then by firing the coatings.

Presented hereinbelow are Examples dealing with specific compositions of the insulated boundary layer ceramics, method of their preparation, and electrical properties of capacitors made with use of the ceramics. As will be specifically pointed out in the course of the description of these Examples, some of them fall outside the purview of our invention. Such noninventive Examples are given to clearly distinguish the advantages of our invention and to give support to the claimed numerical limitations.

Hereinafter in this specification all percentages and parts are by weight unless otherwise specified.

Examples 1—48

$SrTiO_3$ of the industrial grade (containing practically negligible amounts of impurities such as barium, iron, manganese, calcium, sodium and potassium) was admixed with two other primary ingredients $Nb_2O_5$ and $GeO_2$ and the secondary ingredients $SiO_2$ and $Al_2O_3$ in various sets of proportions specified in Table 1. In order to avoid intrusion of foreign matter, these admixtures were blended wet in a rubber-lined bowl mill. After being dried, the admixtures were pasted with polyvinyl alcohol, an organic binder, and the pastes were molded under pressure into test discs. Then the test discs were heated to and held at 1000°C for one hour thereby removing the binder therefrom by evaporation. Then the test discs were fired in a temperature range of 1350°C to 1450°C for two to four hours in a weakly reductive atmosphere of 99 percent by volume of molecular nitrogen ($N_2$) and one percent by volume of molecular hydrogen ($H_2$). Thus were prepared the semiconductive ceramic test discs each having a diameter of approximately eight millimeters and a thickness of approximately 0.4 millimeter.

The test discs are polycrystalline, comprising a myriad of crystal grains 11 as in Figure 1. These crystal grains are, however, not yet insulated from one another, so that we will refer to the discs at this stage as the uninsulated ceramic test discs. It will be appreciated that the use of the rubber-lined bowl mill serves to prevent the introduction of impurities, as from a ceramic-made bowl, into the ceramic materials, making possible the precise proportioning of $SiO_2$ and $Al_2O_3$ which are both used in extremely small quantities.

Then, in order to insulate the crystal grains of the uninsulated ceramic test discs from each other, there was prepared a mixture of 50 wt.% PbO, 45 wt.% $Bi_2O_3$, and five wt.% $B_2O_3$, all in finely divided form. The mixture was pasted with nitrocellulose and butyl "Carbitol" (trademark for diethylene glycol mono-n-butyl ether). This paste was screen-printed on one face of each uninsulated ceramic test disc, at a rate of 10 milligrams (10 percent) for each 100 milligrams of the uninsulated ceramic test discs.

Then the coated test discs were heated to and held at a constant temperature in the range from 1150°C to 1300°C for two hours in an oxidizing atmosphere. This heat treatment caused diffusion of PbO, $Bi_2O_3$ and $B_2O_3$ throughout the intergranular boundaries of the ceramic test discs. The insulated boundary layers thus formed are indicated at 12 in Figure 1. Thus was completed the fabrication of the insulated boundary layer ceramic test discs in accordance with our invention.

For testing the electrical properties of the test discs, these were further processed into test capacitors by coating a commercial silver paste on their opposite faces and by firing them. Figure 1 shows at 13 the pair of electrodes thus formed on each test disc.

In the foregoing process of the fabrication of the insulated boundary layer ceramic test discs, the secondary ingredients $SiO_2$ and $Al_2O_3$ are both wholly retained in the completed products in the initial proportions. However, the insulating substances PbO, $Bi_2O_3$ and $B_2O_3$ partly evaporate on being heated after having been coated on the uninsulated ceramic test discs, the remainders of the substances being diffused in the intergranular boundaries of the test discs. The remaining (actually diffused) percentages of the insulating substances are subject to change depending upon the substances themselves and on the compositions of the test discs. In these particular Examples the PbO remained at rates ranging from 0.27 to 0.86 milligram (0.27 to 0.86 percent), the $Bi_2O_3$ at rates ranging from 0.51 to 1.60 milligrams (0.51 to 1.60 percent), and the $B_2O_3$ at rates ranging from 0.01 to 0.06 milligram (0.01 to 0.06 percent), for each 100 milligrams of the test discs.

The boundary layer ceramic test capacitors prepared as above were tested as to apparent relative dielectric constants ($\varepsilon$), dielectric loss tangents (tan $\delta$), and resistivities ($\rho$). Table 1 gives the results. In this and all the following tables each listed value is the average of 30 samples. Also, in all the tables given herein, relative dielectric constants and dielectric loss tangents were both measured at one kilohertz, and resistivities were measured upon lapse of one minute after application of a direct current at 50 volts. The

3

dielectric loss tangents in the tables are expressed in percent: therefore, for the actual values, the tabulated figures should be multiplied by $10^{-2}$.

It will also be noted from Table 1 that the percentages of the three primary ingredients, $SrTiO_3$, $Nb_2O_5$ and $GeO_2$, sum up to 100 in each Example. The same holds true with the various combinations of three principal ingredients employed in all the Examples given in the subsequent tables. Further, in this and all the following tables, the proportions of the secondary ingredients $SiO_2$ and $Al_2O_3$ are expressed in parts with respect to 100 parts of the three primary ingredients combined.

TABLE 1

| | Primary ingredients (100 wt. parts) | | | Secondary ingredients | | | Electrical properties | | |
|---|---|---|---|---|---|---|---|---|---|
| Examples | $SrTiO_3$, wt.% | $Nb_2O_5$, wt.% | $GeO_2$, wt.% | $SiO_2$, wt. part | $Al_2O_3$, wt. part | $\dfrac{SiO_2}{Al_2O_3}$ | $\varepsilon$, $\times 10^4$ | tan $\delta$, % | $\rho$ $\times 10^{11}$ $\Omega$-cm |
| 1 | 97.67 | 1.33 | 1.00 | — | — | — | 7.5 | 0.4 | 3.5 |
| 2 | 97.67 | 1.33 | 1.00 | 0.020 | 0.020 | 1.0 | 7.8 | 0.5 | 1.3 |
| 3 | 93.10 | 4.80 | 2.10 | 0.022 | 0.017 | 1.3 | 7.8 | 0.5 | 1.3 |
| 4 | 97.67 | 1.33 | 1.00 | 0.040 | 0.030 | 1.3 | 7.9 | 0.7 | 1.4 |
| 5 | 99.70 | 0.14 | 0.16 | 0.035 | 0.025 | 1.4 | 7.8 | 0.6 | 1.7 |
| 6 | 97.67 | 1.33 | 1.00 | 0.015 | 0.010 | 1.5 | 7.7 | 0.4 | 2.6 |
| 7 | 97.67 | 1.33 | 1.00 | 0.030 | 0.020 | 1.5 | 11.6 | 0.6 | 1.8 |
| 8 | 95.53 | 1.47 | 3.00 | 0.045 | 0.030 | 1.5 | 11.8 | 0.5 | 1.4 |
| 9 | 97.67 | 1.33 | 1.00 | 0.060 | 0.040 | 1.5 | 7.9 | 0.5 | 1.3 |
| 10 | 97.47 | 0.53 | 2.00 | 0.050 | 0.030 | 1.7 | 11.6 | 0.5 | 1.4 |
| 11 | 97.67 | 1.33 | 1.00 | 0.050 | 0.030 | 1.7 | 12.0 | 0.6 | 1.3 |
| 12 | 90.68 | 5.32 | 4.00 | 0.040 | 0.020 | 2.0 | 9.7 | 0.4 | 2.0 |
| 13 | 93.10 | 4.80 | 2.10 | 0.020 | 0.010 | 2.0 | 10.8 | 0.6 | 1.2 |
| 14 | 95.53 | 1.47 | 3.00 | 0.020 | 0.010 | 2.0 | 10.3 | 0.5 | 1.5 |
| 15 | 97.67 | 1.33 | 1.00 | 0.020 | 0.010 | 2.0 | 9.7 | 0.4 | 2.0 |
| 16 | 97.67 | 1.33 | 1.00 | 0.050 | 0.025 | 2.0 | 11.8 | 0.6 | 1.5 |
| 17 | 98.03 | 1.47 | 0.50 | 0.040 | 0.020 | 2.0 | 11.2 | 0.5 | 1.2 |
| 18 | 99.83 | 0.07 | 0.05 | 0.040 | 0.020 | 2.0 | 10.9 | 0.4 | 1.4 |
| 19 | 95.93 | 0.07 | 4.00 | 0.060 | 0.030 | 2.0 | 9.6 | 0.5 | 1.7 |
| 20 | 99.70 | 0.14 | 0.16 | 0.080 | 0.040 | 2.0 | 7.8 | 0.6 | 1.5 |
| 21 | 97.67 | 1.33 | 1.00 | 0.030 | 0.012 | 2.5 | 10.1 | 0.5 | 1.8 |
| 22 | 93.19 | 4.80 | 2.01 | 0.080 | 0.030 | 2.7 | 11.0 | 0.5 | 1.3 |
| 23 | 93.40 | 2.80 | 3.80 | 0.080 | 0.030 | 2.7 | 10.2 | 0.5 | 1.3 |
| 24 | 99.88 | 0.07 | 0.05 | 0.080 | 0.030 | 2.7 | 10.1 | 0.4 | 1.5 |
| 25 | 95.53 | 1.47 | 3.00 | 0.030 | 0.010 | 3.0 | 10.6 | 0.4 | 1.5 |

TABLE 1 (cont.).

| | Primary ingredients (100 wt. parts) | | | Secondary ingredients | | | Electrical properties | | |
|---|---|---|---|---|---|---|---|---|---|
| Examples | $SrTiO_3$, wt.% | $Nb_2O_5$, wt.% | $GeO_2$, wt.% | $SiO_2$, wt. part | $Al_2O_3$, wt. part | $\dfrac{SiO_2}{Al_2O_3}$ | $\varepsilon$, $\times 10^4$ | tan $\delta$, % | $\rho$ $\times 10^{11}\,\Omega$-cm |
| 26 | 98.03 | 1.47 | 0.50 | 0.060 | 0.030 | 3.0 | 10.5 | 0.4 | 1.3 |
| 27 | 93.40 | 2.80 | 3.80 | 0.060 | 0.020 | 3.0 | 11.0 | 0.6 | 1.3 |
| 28 | 97.67 | 1.33 | 1.00 | 0.060 | 0.020 | 3.0 | 12.9 | 0.5 | 1.5 |
| 29 | 97.67 | 1.33 | 1.00 | 0.090 | 0.028 | 3.2 | 12.2 | 0.5 | 1.3 |
| 30 | 97.67 | 1.33 | 1.00 | 0.100 | 0.030 | 3.3 | 11.2 | 0.6 | 1.8 |
| 31 | 97.47 | 0.53 | 2.00 | 0.100 | 0.030 | 3.3 | 12.3 | 0.6 | 1.3 |
| 32 | 94.63 | 5.32 | 0.05 | 0.100 | 0.030 | 3.3 | 10.4 | 0.6 | 1.4 |
| 33 | 97.67 | 1.33 | 1.00 | 0.020 | 0.005 | 4.0 | 7.9 | 0.4 | 2.2 |
| 34 | 94.63 | 5.32 | 0.05 | 0.040 | 0.010 | 4.0 | 10.9 | 0.4 | 1.4 |
| 35 | 90.68 | 5.32 | 4.00 | 0.080 | 0.020 | 4.0 | 11.3 | 0.4 | 1.9 |
| 36 | 97.67 | 1.33 | 1.00 | 0.080 | 0.020 | 4.0 | 12.6 | 0.5 | 1.7 |
| 37 | 97.67 | 1.33 | 1.00 | 0.120 | 0.030 | 4.0 | 7.9 | 0.5 | 1.3 |
| 38 | 97.67 | 1.33 | 1.00 | 0.050 | 0.010 | 5.0 | 15.3 | 0.8 | 1.0 |
| 39 | 95.53 | 1.47 | 3.00 | 0.075 | 0.015 | 5.0 | 13.5 | 0.6 | 1.0 |
| 40 | 93.40 | 2.80 | 3.80 | 0.075 | 0.015 | 5.0 | 13.4 | 0.6 | 1.2 |
| 41 | 97.67 | 1.33 | 1.00 | 0.100 | 0.020 | 5.0 | 11.6 | 0.5 | 1.8 |
| 42 | 95.93 | 0.07 | 4.00 | 0.100 | 0.020 | 5.0 | 11.2 | 0.4 | 1.7 |
| 43 | 99.88 | 0.07 | 0.05 | 0.090 | 0.017 | 5.3 | 13.7 | 0.6 | 0.3 |
| 44 | 97.67 | 1.33 | 1.00 | 0.055 | 0.010 | 5.5 | 18.4 | 1.5 | 0.1 |
| 45 | 93.40 | 2.80 | 3.80 | 0.080 | 0.014 | 5.7 | 14.1 | 0.8 | 0.3 |
| 46 | 97.67 | 1.33 | 1.00 | 0.060 | 0.010 | 6.0 | 19.3 | 2.0 | 0.1 |
| 47 | 91.20 | 5.32 | 3.48 | 0.120 | 0.020 | 6.0 | 7.4 | 0.6 | 1.6 |
| 48 | 95.53 | 1.47 | 3.00 | 0.090 | 0.012 | 7.5 | 12.0 | 0.7 | 0.5 |

Of the forty-eight Examples of Table 1, Examples 7, 8, 10—19, 21—32, 34—36, and 38—42 represent ceramic compositions complying with the teachings of our invention. The relative proportions of the three primary ingredients in use, $SrTiO_3$, $Nb_2O_5$ and $GeO_2$, of these Examples are from 90.68 to 99.88 percent, from 0.07 to 5.32 percent, and from 0.05 to 4.00 percent respectively. Their $SiO_2$ and $Al_2O_3$ contents are from 0.02 to 0.10 part, and from 0.01 to 0.03 part, respectively, with respect to 100 parts of the primary ingredients. The ratios in weight of $SiO_2$ to $Al_2O_3$ are from 1.5 to 5.0.

The crystal grains of the ceramic test discs of the above inventive Examples averaged from 60 to 120 micrometers in diameter. As is seen from Table 1, the boundary layer ceramic test capacitors of the inventive Examples have apparent relative dielectric constants ranging from 96,000 to as high as 153,000, dielectric loss tangents of as small as 0.4 to 0.8 percent, and resistivities of one to $2\times10^{11}$ ohm-centimeters.

5

The ceramic compositions of Examples 1—6, 9, 20, 33, 37, and 43—48, on the other hand, do not conform to the principles of our invention. A consideration of Table 1 will show that if the weight ratio of $SiO_2$ to $Al_2O_3$ is not more than 1.5, the apparent relative dielectric constants of the resulting capacitors fall short of 80,000. If this weight ratio exceeds 5.0, on the other hand, then the resulting capacitors have dielectric loss tangents of over 1.0 percent or resistivities of less than $1.0 \times 10^{11}$ ohm-centimeters. Also, if the proportion of $SiO_2$ is less than about 0.02 part or more than about 0.10 part with respect to 100 parts of the primary ingredients, the apparent relative dielectric constants of the resulting capacitors become less than 80,000. The apparent relative dielectric constants do not exceed 80,000, either, if the proportion of $Al_2O_3$ is less than about 0.01 part or more than about 0.03 part.

We conclude from the above tabulated results that, for the boundary layer ceramics composed principally of $SrTiO_3$, $Nb_2O_5$ and $GeO_2$ in accordance with our invention, the contents of the secondary ingredients $SiO_2$ and $Al_2O_3$ should be from about 0.02 to about 0.10 part, and from about 0.01 to about 0.03 part, respectively, with respect to 100 parts of the primary ingredients. Further the weight ratio of $SiO_2$ to $Al_2O_3$ should be from about 1.5 to about 5.0. Experiment has proved that capacitors of no favorable electrical properties are obtainable from boundary layer ceramics whose proportions of the three primary ingredients fall outside the ranges of our invention, even if their $SiO_2$ and $Al_2O_3$ contents and the weight ratios thereof are within the ranges of our invention.

We measured the temperature dependencies of the apparent relative dielectric constants of the above inventive Examples. The results were as graphically represented in Figure 2. With the apparent relative dielectric constants at 20°C taken as a criterion, the percent variations of the dielectric constants of all the tested Examples with temperatures fell within the hatched regions of the graph. That is, the percent variations of the dielectric constants were plus or minus 15 in the temperature range of −25°C to +85°C.

Examples 49—79

Uninsulated ceramic test discs were fabricated by use of the same ingredients, and in the same proportions, as in Examples 8, 18, 22, 31, 35, 36 and 42, and through the same procedure as in Examples 1—48. Then the three insulating substances, PbO, $Bi_2O_3$ and $B_2O_3$, in the various sets of proportions given in Table 2 were thermally diffused throughout the intergranular boundaries of the test discs through the same procedure as in Examples 1—48. The thus insulated boundary layer ceramic test discs were then processed into test capacitors through the same procedure as in Examples 1—48.

Measured by the same methods as in Examples 1—48, the three electrical properties in question of the above prepared test capacitors were as given in Table 2. In this table the column labelled "Ceramic" represents, of course, the uninsulated ceramics composed only of the primary ingredients $SrTiO_3$, $Nb_2O_5$ and $GeO_2$ and the secondary ingredients $SiO_2$ and $Al_2O_3$.

TABLE 2

| Examples | Ceramic | Insulating substances | | | Electrical properties | | |
|---|---|---|---|---|---|---|---|
| | | PbO, wt.% | $Bi_2O_3$, wt.% | $B_2O_3$, wt.% | $\varepsilon$, $\times 10^4$ | tan $\delta$, % | $\rho$, $\times 10^{11}$ $\Omega$-cm |
| | Same as: | | | | | | |
| 49 | Example 8 | 32 | 58 | 10 | 11.0 | 0.5 | 1.5 |
| 50 | Example 8 | 52 | 36 | 12 | 13.3 | 1.1 | 1.0 |
| 51 | Example 8 | 35 | 64 | 1 | 10.5 | 0.8 | 0.5 |
| 52 | Example 8 | 61 | 37 | 2 | 12.8 | 0.7 | 1.4 |
| 53 | Example 18 | 59 | 40 | 1 | 11.0 | 1.1 | 0.2 |
| 54 | Example 18 | 48 | 50 | 2 | 10.3 | 0.4 | 1.4 |
| 55 | Example 18 | 35 | 63 | 2 | 10.2 | 0.4 | 1.5 |
| 56 | Example 22 | 45 | 50 | 5 | 10.5 | 0.4 | 1.5 |
| 57 | Example 22 | 34 | 64 | 2 | 10.2 | 0.5 | 1.6 |
| 58 | Example 22 | 60 | 30 | 10 | 12.6 | 1.1 | 0.1 |
| 59 | Example 31 | 45 | 53 | 2 | 12.4 | 0.4 | 1.6 |

TABLE 2 (cont.).

| Examples | Ceramic | Insulating substances | | | Electrical properties | | |
|---|---|---|---|---|---|---|---|
| | | PbO, wt.% | $Bi_2O_3$, wt.% | $B_2O_3$, wt.% | $\varepsilon$, $\times 10^4$ | tan $\delta$, % | $\rho$, $\times 10^{11}$ $\Omega$-cm |
| 60 | Example 31 | 59 | 31 | 10 | 11.9 | 0.5 | 1.5 |
| 61 | Example 31 | 61 | 31 | 8 | 12.0 | 0.6 | 1.2 |
| 62 | Example 35 | 45 | 53 | 2 | 10.6 | 0.5 | 1.4 |
| 63 | Example 35 | 61 | 34 | 5 | 11.8 | 0.6 | 1.3 |
| 64 | Example 35 | 55 | 37 | 8 | 11.4 | 0.5 | 1.4 |
| 65 | Example 35 | 34 | 56 | 10 | 10.8 | 0.6 | 1.5 |
| 66 | Example 36 | 32 | 65 | 3 | 9.6 | 1.2 | 1.0 |
| 67 | Example 36 | 45 | 54 | 1 | 11.7 | 0.8 | 0.3 |
| 68 | Example 36 | 30 | 60 | 10 | 7.8 | 1.1 | 1.6 |
| 69 | Example 36 | 45 | 45 | 10 | 12.0 | 0.5 | 1.6 |
| 70 | Example 36 | 45 | 43 | 12 | 13.5 | 1.2 | 1.0 |
| 71 | Example 36 | 34 | 64 | 2 | 10.5 | 0.5 | 1.4 |
| 72 | Example 36 | 32 | 58 | 10 | 11.4 | 0.5 | 1.3 |
| 73 | Example 36 | 38 | 57 | 5 | 11.5 | 0.4 | 1.3 |
| 74 | Example 36 | 62 | 31 | 7 | 12.9 | 1.2 | 0.4 |
| 75 | Example 36 | 61 | 34 | 5 | 12.4 | 0.8 | 1.0 |
| 76 | Example 36 | 63 | 35 | 2 | 11.3 | 1.5 | 0.05 |
| 77 | Example 42 | 32 | 64 | 4 | 10.6 | 0.6 | 1.7 |
| 78 | Example 42 | 45 | 53 | 2 | 11.1 | 0.4 | 1.5 |
| 79 | Example 42 | 61 | 37 | 2 | 12.1 | 0.6 | 1.2 |

Consider Examples 49, 52, 54—57, 59, 62—65, 69, 71—73, 75, and 77—79 of Table 2. The relative proportions of the insulating substances PbO, $Bi_2O_3$ and $B_2O_3$ in these Examples all fall within the ranges from 32 to 61 percent, from 34 to 64 percent, and from two to 10 percent, respectively. The apparent relative dielectric constants of all these inventive Examples are sufficiently high, and their dielectric loss tangents and resistivities are also favorable. In Examples 50, 51, 53, 58, 60, 61, 66, 67, 68, 70, 74 and 76, on the other hand, the relative proportions of PbO, $Bi_2O_3$ and $B_2O_3$ all fall outside the above ranges. All these noninventive Examples are unsatisfactory in one or more of the three electrical properties.

We conclude from the results of Table 2 that the ranges of the relative proportions of the three insulating substances PbO, $Bi_2O_3$ and $B_2O_3$ should be from about 32 to about 61 percent, from about 34 to about 64 percent, and from about two to about 10 percent, respectively, for the ceramic compositions now under consideration.

We measured the percentages of the insulating substances remaining diffused in the ceramic test discs of the above inventive Examples after the heat treatment. PbO remained at rates ranging from 0.06 to 1.45 percent, $Bi_2O_3$ at rates ranging from 0.23 to 2.17 percent, and $B_2O_3$ at rates ranging from 0.002 to 0.09 percent.

Example 80

In this Example it was intended to ascertain the percentages of the three insulating substances to remain diffused in the boundary layer ceramics composed principally of $SrTiO_3$, $Nb_2O_5$ and $GeO_2$, for the provision of capacitors of favorable properties. The relative proportions of the insulating substances in use were within the ranges specified in connection with Examples 49—79. The pasted mixture of the insulating substances was coated on uninsulated ceramic test discs (prepared through the same procedure as in Examples 1—48, with the proportions of the ingredients in conformity with our invention) in various amounts ranging from one to 15 percent of the weight of the test discs. The coated discs were heated at various temperatures ranging from 1150°C to 1300°C for various lengths of time ranging from one to four hours, thereby preparing a number of insulated boundary layer ceramic test discs containing various amounts of the insulating substances. Then the test discs were processed into test capacitors through the same procedure as in Examples 1—48.

Of the thus fabricated test capacitors, those having an apparent relative dielectric constant of over 80,000, a dielectric loss tangent of not more than one percent, and a resistivity of not less than $1.0 \times 10^{11}$ ohm-centimeters were picked up. The PbO, $Bi_2O_3$ and $B_2O_3$ contents of these test capacitors with the favorable electrical properties ranged from 0.03 to 2.90 percent, from 0.11 to 4.34 percent, and from 0.001 to 0.18 percent, respectively, with respect to the weight of the uninsulated ceramic discs (i.e., those composed of the primary ingredients $SrTiO_3$, $Nb_2O_5$ and $GeO_2$ and the secondary ingredients $SiO_2$ and $Al_2O_3$).

Examples 81—114

As the primary ingredients there were employed $SrTiO_3$, $WO_3$ and ZnO. Insulated boundary layer ceramic test capacitors were prepared by use of these primary ingredients and the secondary ingredients $SiO_2$ and $Al_2O_3$, in various sets of proportions given in Table 3, and of the insulating substances PbO, $Bi_2O_3$ and $B_2O_3$, through the same procedure as in Examples 1—48. The electrical properties of these test capacitors, measured by the same methods as in Examples 1—48, were as set forth also in Table 3.

As has been stated, the percentages of the insulating substances remaining diffused in the ceramic test discs are subject to change depending upon the ceramic compositions. In these Examples, using $SrTiO_3$, $WO_3$ and ZnO as the main ingredients, PbO, $Bi_2O_3$ and $B_2O_3$ remained at percentages ranging from 0.31 to 0.80, from 0.57 to 1.48, and from 0.01 to 0.06, respectively, relative to the weight of the ceramic test discs in the uninsulated state.

TABLE 3

| | Primary ingredients (100 wt. parts) | | | Secondary ingredients | | | Electrical properties | | |
|---|---|---|---|---|---|---|---|---|---|
| Examples | $SrTiO_3$, wt.% | $WO_3$, wt.% | ZnO, wt.% | $SiO_2$, wt. part | $Al_2O_3$, wt. part | $\dfrac{SiO_2}{Al_2O_3}$ | $\varepsilon$, $\times 10^4$ | tan $\delta$, % | $\rho$, $\times 10^{11}$ $\Omega$-cm |
| 81 | 98.20 | 1.00 | 0.80 | — | — | — | 6.4 | 0.3 | 1.8 |
| 82 | 95.20 | 2.30 | 2.50 | 0.024 | 0.028 | 0.9 | 5.9 | 0.7 | 1.8 |
| 83 | 99.80 | 0.15 | 0.05 | 0.020 | 0.020 | 1.0 | 5.8 | 0.5 | 1.8 |
| 84 | 98.25 | 0.35 | 1.40 | 0.040 | 0.030 | 1.3 | 6.4 | 0.6 | 1.7 |
| 85 | 99.20 | 0.50 | 0.30 | 0.024 | 0.018 | 1.3 | 6.3 | 0.5 | 1.7 |
| 86 | 97.65 | 2.30 | 0.05 | 0.034 | 0.025 | 1.4 | 6.2 | 0.6 | 1.7 |
| 87 | 97.35 | 0.15 | 2.50 | 0.015 | 0.010 | 1.5 | 5.9 | 0.4 | 1.7 |
| 88 | 98.55 | 1.35 | 0.10 | 0.021 | 0.014 | 1.5 | 8.5 | 0.5 | 1.6 |
| 89 | 97.35 | 0.15 | 2.50 | 0.030 | 0.020 | 1.5 | 8.9 | 0.5 | 1.5 |
| 90 | 97.65 | 2.30 | 0.05 | 0.045 | 0.030 | 1.5 | 9.1 | 0.6 | 1.6 |
| 91 | 98.20 | 1.00 | 0.80 | 0.040 | 0.025 | 1.6 | 9.7 | 0.5 | 1.5 |
| 92 | 95.20 | 2.30 | 2.50 | 0.060 | 0.035 | 1.7 | 5.9 | 0.6 | 1.7 |
| 93 | 99.80 | 0.15 | 2.50 | 0.052 | 0.028 | 1.9 | 8.7 | 0.6 | 1.6 |

8

TABLE 3  (contd.)

| | Primary ingredients (100 wt. parts) | | | Secondary ingredients | | | Electrical properties | | |
|---|---|---|---|---|---|---|---|---|---|
| Examples | $SrTiO_3$, wt.% | $WO_3$, wt.% | ZnO, wt.% | $SiO_2$, wt. part | $Al_2O_3$, wt. part | $\dfrac{SiO_2}{Al_2O_3}$ | $\varepsilon$, $\times 10^4$ | tan $\delta$, % | $\rho$, $\times 10^{11}$ $\Omega$-cm |
| 94 | 99.20 | 0.50 | 0.30 | 0.020 | 0.010 | 2.0 | 8.1 | 0.4 | 1.6 |
| 95 | 98.25 | 0.35 | 1.40 | 0.043 | 0.020 | 2.2 | 9.8 | 0.5 | 1.5 |
| 96 | 97.35 | 0.15 | 2.50 | 0.070 | 0.030 | 2.3 | 9.3 | 0.6 | 1.5 |
| 97 | 99.67 | 0.18 | 0.15 | 0.078 | 0.031 | 2.5 | 6.0 | 0.6 | 1.7 |
| 98 | 97.65 | 2.30 | 0.05 | 0.032 | 0.012 | 2.7 | 8.1 | 0.4 | 1.5 |
| 99 | 96.20 | 2.00 | 1.80 | 0.095 | 0.035 | 2.7 | 6.0 | 0.7 | 1.7 |
| 100 | 98.55 | 1.35 | 0.10 | 0.060 | 0.020 | 3.0 | 10.6 | 0.5 | 1.5 |
| 101 | 99.80 | 0.15 | 0.05 | 0.090 | 0.028 | 3.2 | 9.1 | 0.6 | 1.5 |
| 102 | 98.25 | 0.35 | 1.40 | 0.100 | 0.030 | 3.3 | 9.1 | 0.6 | 1.5 |
| 103 | 97.65 | 2.30 | 0.05 | 0.102 | 0.026 | 3.9 | 6.2 | 0.7 | 1.6 |
| 104 | 98.20 | 1.00 | 0.80 | 0.020 | 0.005 | 4.0 | 6.5 | 0.3 | 1.7 |
| 105 | 96.20 | 2.00 | 1.80 | 0.040 | 0.010 | 4.0 | 9.4 | 0.4 | 1.5 |
| 106 | 99.20 | 0.50 | 0.30 | 0.080 | 0.020 | 4.0 | 10.2 | 0.5 | 1.5 |
| 107 | 95.20 | 2.30 | 2.50 | 0.070 | 0.015 | 4.7 | 11.7 | 0.6 | 1.3 |
| 108 | 97.35 | 0.15 | 2.50 | 0.040 | 0.008 | 5.0 | 6.0 | 0.4 | 1.8 |
| 109 | 99.67 | 0.18 | 0.15 | 0.050 | 0.010 | 5.0 | 11.6 | 0.5 | 1.4 |
| 110 | 97.65 | 2.30 | 0.05 | 0.100 | 0.020 | 5.0 | 9.2 | 0.5 | 1.5 |
| 111 | 98.55 | 1.35 | 0.10 | 0.080 | 0.015 | 5.3 | 11.5 | 1.2 | 0.1 |
| 112 | 97.35 | 0.15 | 2.50 | 0.055 | 0.010 | 5.5 | 14.3 | 1.0 | 0.1 |
| 113 | 96.20 | 2.00 | 1.80 | 0.090 | 0.010 | 6.0 | 9.6 | 0.9 | 0.4 |
| 114 | 99.80 | 0.15 | 0.05 | 0.095 | 0.012 | 7.9 | 7.5 | 0.9 | 0.6 |

As is seen from Table 3, Examples 88—91, 93—96, 98, 100—102, 105—107, 109 and 110 have ceramic compositions within the scope of our invention. The $SrTiO_3$, $WO_3$ and ZnO contents of all these Examples fall within the ranges from 95.20 to 99.80 percent, from 0.15 to 2.30 percent, and from 0.05 to 2.50 percent, respectively. The $SiO_2$ and $Al_2O_3$ contents of the Examples range from 0.02 to 0.10 part, and from 0.01 to 0.03 part, respectively, with respect to 100 parts of the primary ingredients, and the ratios in weight of $SiO_2$ to $Al_2O_3$ are in the range from 1.5 to 5.0.

The crystal grains of the above inventive Examples were from 60 to 120 micrometers in diameter. The apparent relative dielectric constants of the Examples range from 81,000 to 117,000, their dielectric loss tangents from 0.4 to 0.6 percent, and their resistivities from 1.3 to $1.6 \times 10^{11}$ ohm-centimeters.

Let us consider the other, noninventive Examples 81—87, 92, 97, 99, 103, 104, 108, and 111—114. In those Examples whose weight ratio of $SiO_2$ to $Al_2O_3$ is less than 1.5, the apparent relative dielectric constant becomes less than 80,000. If the weight ratio of $SiO_2$ to $Al_2O_3$ exceeds 5.0, on the other hand, then the dielectric loss tangent becomes more than 1.0 percent, or the resistivity becomes less than $1.0 \times 10^{11}$

9

**0 076 456**

ohm-centimeters. Examples containing less than 0.02 part $SiO_2$ with respect to 100 parts of the primary ingredients have apparent relative dielectric constants of less than 80,000. The apparent relative dielectric constant also becomes poor if the $SiO_2$ content exceeds 0.1 part with respect to 100 parts of the primary ingredients. Examples containing less than 0.01 part, or more than 0.03 part, $Al_2O_3$ with respect to 100 parts of the primary ingredients also have apparent relative dielectric constants of not more than 80,000.

From the foregoing results we conclude that the proportions of $SiO_2$ and $Al_2O_3$ in the boundary layer ceramics composed principally of $SrTiO_3$, $WO_3$ and ZnO should be from about 0.02 to about 0.10 part, and from about 0.01 to about 0.03 part, respectively, with respect to 100 parts of the principal ingredients, and that the weight ratio of the $SiO_2$ content to that of $Al_2O_3$ should be from about 1.5 to about 5.0. These conclusions presuppose, of course, that the proportions of the three primary ingredients are within the ranges of the invention set forth previously.

We measured the temperature dependencies of the apparent relative dielectric constants of the above inventive Examples. The results were the same as those in the graph of Figure 2, with the percent variations of the dielectric constants of all the inventive Examples with temperatures falling within the hatched areas of the graph.

Examples 115—152

Uninsulated ceramic test discs were fabricated by use of the same ingredients, and in the same proportions, as in Examples 88, 91, 93, 96, 100, 102, 107, 109 and 110, and through the same procedure as in Examples 1—48. Then the three insulating substances, PbO, $Bi_2O_3$ and $B_2O_3$, in the various sets of proportions specified in Table 4 were diffused throughout the intergranular boundaries of the test discs by the same method as in Examples 1—48. The insulated boundary layer ceramic test discs were then processed into test capacitors also through the same procedure as in Examples 1—48.

Measured by the same methods as in Examples 1—48, the three electrical properties in question of the thus prepared test capacitors were as set forth in Table 4. In this table the column labelled "Ceramic" represents the uninsulated ceramics composed of the main ingredients $SrTiO_3$, $WO_3$ and ZnO and the auxiliary ingredients $SiO_2$ and $Al_2O_3$.

TABLE 4

| Examples | Ceramic | Insulating substances | | | Electrical properties | | |
|---|---|---|---|---|---|---|---|
| | | PbO, wt.% | $Bi_2O_3$, wt.% | $B_2O_3$, wt.% | $\varepsilon$, $\times 10^4$ | tan $\delta$, % | $\rho$, $\times 10^{11}$ Ω-cm |
| | Same as: | | | | | | |
| 115 | Example 88 | 35 | 55 | 10 | 8.1 | 0.6 | 1.7 |
| 116 | Example 88 | 45 | 52 | 3 | 8.0 | 0.5 | 1.7 |
| 117 | Example 88 | 54 | 36 | 10 | 8.9 | 0.6 | 1.6 |
| 118 | Example 91 | 34 | 59 | 7 | 8.8 | 1.2 | 1.6 |
| 119 | Example 91 | 39 | 52 | 9 | 9.3 | 0.6 | 1.5 |
| 120 | Example 91 | 50 | 40 | 10 | 9.9 | 0.6 | 1.5 |
| 121 | Example 91 | 54 | 44 | 2 | 9.2 | 0.5 | 1.5 |
| 122 | Example 93 | 35 | 55 | 10 | 8.3 | 0.7 | 1.6 |
| 123 | Example 93 | 45 | 52 | 3 | 8.1 | 0.6 | 1.5 |
| 124 | Example 93 | 54 | 44 | 2 | 8.6 | 0.6 | 1.5 |
| 125 | Example 96 | 38 | 57 | 5 | 8.6 | 0.5 | 1.6 |
| 126 | Example 96 | 45 | 45 | 10 | 9.1 | 0.6 | 1.6 |
| 127 | Example 96 | 55 | 43 | 2 | 8.3 | 0.8 | 0.2 |
| 128 | Example 96 | 54 | 40 | 6 | 9.2 | 0.5 | 1.5 |
| 129 | Example 100 | 35 | 58 | 7 | 9.9 | 0.5 | 1.5 |

10

TABLE 4 (cont.).

| Examples | Ceramic | Insulating substances | | | Electrical properties | | |
|---|---|---|---|---|---|---|---|
| | | PbO, wt.% | $Bi_2O_3$, wt.% | $B_2O_3$, wt.% | $\varepsilon$, $\times 10^4$ | tan $\delta$, % | $\rho$, $\times 10^{11}$ $\Omega$-cm |
| 130 | Example 100 | 40 | 58 | 2 | 9.9 | 0.5 | 1.4 |
| 131 | Example 100 | 45 | 47 | 8 | 10.2 | 0.6 | 1.5 |
| 132 | Example 100 | 53 | 38 | 9 | 10.5 | 0.6 | 1.5 |
| 133 | Example 100 | 55 | 35 | 10 | 11.3 | 0.7 | 0.1 |
| 134 | Example 102 | 34 | 55 | 11 | 7.9 | 1.2 | 1.3 |
| 135 | Example 102 | 39 | 52 | 9 | 8.7 | 0.5 | 1.6 |
| 136 | Example 102 | 45 | 52 | 3 | 8.5 | 0.5 | 1.6 |
| 137 | Example 102 | 50 | 40 | 10 | 9.3 | 0.5 | 1.5 |
| 138 | Example 107 | 35 | 58 | 7 | 10.9 | 0.7 | 1.4 |
| 139 | Example 107 | 40 | 58 | 2 | 10.8 | 0.7 | 1.3 |
| 140 | Example 107 | 53 | 38 | 9 | 11.6 | 0.6 | 1.3 |
| 141 | Example 107 | 54 | 45 | 1 | 10.6 | 0.6 | 0.3 |
| 142 | Example 109 | 38 | 57 | 5 | 10.8 | 0.5 | 1.3 |
| 143 | Example 109 | 41 | 58 | 1 | 9.4 | 1.3 | 1.4 |
| 144 | Example 109 | 45 | 45 | 10 | 11.4 | 0.5 | 1.4 |
| 145 | Example 109 | 50 | 38 | 12 | 12.5 | 1.5 | 1.2 |
| 146 | Example 109 | 54 | 44 | 2 | 11.0 | 0.6 | 1.4 |
| 147 | Example 110 | 35 | 55 | 10 | 8.7 | 0.5 | 1.6 |
| 148 | Example 110 | 40 | 58 | 2 | 8.6 | 0.4 | 1.6 |
| 149 | Example 110 | 40 | 49 | 11 | 8.0 | 1.2 | 1.6 |
| 150 | Example 110 | 45 | 52 | 3 | 8.5 | 0.4 | 1.6 |
| 151 | Example 110 | 50 | 40 | 10 | 9.4 | 0.5 | 1.5 |
| 152 | Example 110 | 54 | 36 | 10 | 9.7 | 0.5 | 1.5 |

In Examples 115—117, 119—126, 128—132, 135—140, 142, 144, 146—148, and 150—152, the relative proportions of PbO, $Bi_2O_3$ and $B_2O_3$ range from 35 to 54 percent, from 36 to 58 percent, and from two to 10 percent, respectively. The apparent relative dielectric constants of all these Examples are sufficiently high, and their dielectric loss tangents and resistivities are also favorable. In Examples 118, 127, 133, 134, 141, 143, 145 and 149, on the other hand, the relative proportions of PbO, $Bi_2O_3$ and $B_2O_3$ all fall outside the above ranges. The electrical properties of these noninventive Examples are unsatisfactory.

Thus, for the ceramics composed principally of $SrTiO_3$, $WO_3$ and ZnO, the relative proportions of the insulating substances PbO, $Bi_2O_3$ and $B_2O_3$ should be in the ranges from about 35 to about 54 percent, from about 36 to about 58 percent, and from about two to about 10 percent, respectively.

We measured the percentages of the insulating substances remaining diffused in the ceramic test discs of the inventive Examples after the heat treatment. PbO remained at rates ranging from 0.07 to 1.54

percent, $Bi_2O_3$ at rates ranging from 0.22 to 2.37 percent, and $B_2O_3$ at rates ranging from 0.002 to 0.10 percent.

Example 153

In this Example there were ascertained the percentages of the three insulating substances to remain diffused in the boundary layer ceramics composed principally of $SrTiO_3$, $WO_3$ and $ZnO$, for the provision of capacitors of favorable electrical properties. The relative proportions of the insulating substances in use were within the desired ranges specified in connection with Examples 115—152. The pasted mixture of $PbO$, $Bi_2O_3$ and $B_2O_3$ was coated on uninsulated ceramic test discs in various amounts ranging from one to 15 wt.% of the test discs. The uninsulated test discs were composed principally of $SrTiO_3$, $WO_3$ and $ZnO$, with their proportions within the ranges of our invention set forth in connection with Examples 81—114, and were prepared through the same procedure as in Examples 1—48. The above coated discs were heated at various temperatures ranging from 1150°C to 1300°C for various lengths of time ranging from one to four hours. Thus were fabricated a number of insulated boundary layer ceramic test discs having the three insulating substances remaining diffused throughout their intergranular boundaries in various percentages. Then the test discs were processed into test capacitors through the same procedure as in Examples 1—48.

From among the thus prepared test capacitors we picked up those having an apparent relative dielectric constant of over 80,000, a dielectric loss tangent of not more than one percent, and a resistivity of not less than $1.0 \times 10^{11}$ ohm-centimeters. The $PbO$, $Bi_2O_3$ and $B_2O_3$ contents of these test capacitors with the favorable electrical properties ranged from 0.03 to 2.75 percent, from 0.11 to 4.23 percent, and from 0.001 to 0.18 percent, respectively, with respect to the weight of the uninsulated test discs.

Examples 154—187

As the primary ingredients there was employed a combination of $SrTiO_3$, $Ta_2O_5$ and $CuO$. Insulated boundary layer ceramic test capacitors were prepared by use of these principal ingredients and the secondary ingredients $SiO_2$ and $Al_2O_3$, in various sets of proportions represented in Table 5, and of the insulating substances $PbO$, $Bi_2O_3$ and $B_2O_3$, through the same procedure as in Examples 1—48. Measured by the same methods as in Examples 1—48, the electrical properties of these test capacitors were as set forth also in Table 5.

We measured the percentages of the three insulating substances actually remaining diffused in the boundary layer ceramic test discs of the above compositions consisting primarily of $SrTiO_3$, $Ta_2O_5$ and $CuO$. $PbO$, $Bi_2O_3$ and $B_2O_3$ remained at percentages ranging from 0.28 to 0.86, from 0.49 to 1.50, and from 0.01 to 0.06, respectively, relative to the weight of the ceramic test discs in the uninsulated state.

TABLE 5

| | Primary ingredients (100 wt. parts) | | | Secondary ingredients | | | Electrical properties | | |
|---|---|---|---|---|---|---|---|---|---|
| Examples | $SrTiO_3$, wt.% | $Ta_2O_5$, wt.% | $CuO$, wt.% | $SiO_2$, wt. part | $Al_2O_3$, wt. part | $\dfrac{SiO_2}{Al_2O_3}$ | $\varepsilon$, $\times 10^4$ | tan $\delta$, % | $\rho$, $\times 10^{11}$ $\Omega$-cm |
| 154 | 98.30 | 1.20 | 0.50 | — | — | — | 6.2 | 0.6 | 1.5 |
| 155 | 95.20 | 3.30 | 1.50 | 0.024 | 0.028 | 0.9 | 5.9 | 0.8 | 1.5 |
| 156 | 99.65 | 0.33 | 0.02 | 0.020 | 0.020 | 1.0 | 6.2 | 0.7 | 1.5 |
| 157 | 97.40 | 2.50 | 0.10 | 0.040 | 0.030 | 1.3 | 6.3 | 0.7 | 1.5 |
| 158 | 98.17 | 0.33 | 1.50 | 0.024 | 0.018 | 1.3 | 6.1 | 0.6 | 1.5 |
| 159 | 96.68 | 3.30 | 0.02 | 0.034 | 0.025 | 1.4 | 6.0 | 0.7 | 1.5 |
| 160 | 96.60 | 2.00 | 1.40 | 0.015 | 0.010 | 1.5 | 5.9 | 0.6 | 1.5 |
| 161 | 98.30 | 1.20 | 0.50 | 0.021 | 0.014 | 1.5 | 8.4 | 0.6 | 1.4 |
| 162 | 98.17 | 0.33 | 1.50 | 0.030 | 0.020 | 1.5 | 9.1 | 0.6 | 1.4 |
| 163 | 95.20 | 3.30 | 1.50 | 0.045 | 0.030 | 1.5 | 8.6 | 0.7 | 1.5 |
| 164 | 99.30 | 0.50 | 0.20 | 0.040 | 0.025 | 1.6 | 9.4 | 0.6 | 1.3 |

TABLE 5 (cont.).

| Examples | Primary ingredients (100 wt. parts) | | | Secondary ingredients | | | Electrical properties | | |
|---|---|---|---|---|---|---|---|---|---|
| | $SrTiO_3$, wt.% | $Ta_2O_5$, wt.% | CuO, wt.% | $SiO_2$, wt. part | $Al_2O_3$, wt. part | $\dfrac{SiO_2}{Al_2O_3}$ | $\varepsilon$, $\times 10^4$ | tan $\delta$, % | $\rho$, $\times 10^{11}$ $\Omega$-cm |
| 165 | 99.65 | 0.33 | 0.02 | 0.060 | 0.035 | 1.7 | 6.3 | 0.7 | 1.5 |
| 166 | 96.60 | 2.00 | 1.40 | 0.052 | 0.028 | 1.9 | 9.0 | 0.6 | 1.4 |
| 167 | 98.30 | 1.20 | 0.50 | 0.020 | 0.010 | 2.0 | 8.5 | 0.5 | 1.4 |
| 168 | 96.68 | 3.30 | 0.02 | 0.043 | 0.020 | 2.2 | 9.2 | 0.5 | 1.4 |
| 169 | 99.35 | 0.80 | 0.65 | 0.070 | 0.030 | 2.3 | 9.7 | 0.6 | 1.3 |
| 170 | 97.40 | 2.50 | 0.10 | 0.078 | 0.031 | 2.5 | 6.3 | 0.6 | 1.5 |
| 171 | 95.20 | 3.30 | 1.50 | 0.032 | 0.012 | 2.7 | 8.2 | 0.5 | 1.5 |
| 172 | 99.35 | 0.80 | 0.65 | 0.095 | 0.035 | 2.7 | 6.3 | 0.7 | 1.4 |
| 173 | 99.65 | 0.33 | 0.02 | 0.060 | 0.020 | 3.0 | 10.6 | 0.5 | 1.3 |
| 174 | 96.60 | 2.00 | 1.40 | 0.090 | 0.028 | 3.2 | 9.4 | 0.6 | 1.4 |
| 175 | 98.17 | 0.33 | 1.50 | 0.100 | 0.030 | 3.3 | 8.7 | 0.6 | 1.3 |
| 176 | 97.40 | 2.50 | 0.10 | 0.102 | 0.026 | 3.9 | 6.3 | 0.7 | 1.4 |
| 177 | 98.30 | 1.20 | 0.50 | 0.020 | 0.005 | 4.0 | 6.3 | 0.6 | 1.5 |
| 178 | 97.40 | 2.50 | 0.10 | 0.040 | 0.010 | 4.0 | 9.9 | 0.6 | 1.4 |
| 179 | 96.68 | 3.30 | 0.02 | 0.080 | 0.020 | 4.0 | 9.7 | 0.6 | 1.4 |
| 180 | 99.65 | 0.33 | 0.02 | 0.070 | 0.015 | 4.7 | 12.9 | 0.7 | 1.1 |
| 181 | 98.30 | 1.20 | 0.50 | 0.040 | 0.008 | 5.0 | 6.4 | 0.6 | 1.5 |
| 182 | 99.35 | 0.80 | 0.65 | 0.050 | 0.010 | 5.0 | 13.6 | 0.6 | 1.0 |
| 183 | 99.30 | 0.50 | 0.20 | 0.100 | 0.020 | 5.0 | 9.4 | 0.6 | 1.3 |
| 184 | 96.60 | 2.00 | 1.40 | 0.080 | 0.015 | 5.3 | 13.7 | 1.5 | 0.05 |
| 185 | 97.40 | 2.50 | 0.10 | 0.055 | 0.010 | 5.5 | 15.1 | 1.4 | 0.05 |
| 186 | 98.17 | 0.33 | 1.50 | 0.090 | 0.015 | 6.0 | 10.3 | 1.2 | 0.2 |
| 187 | 96.68 | 3.30 | 0.02 | 0.095 | 0.012 | 7.9 | 7.8 | 1.2 | 0.9 |

Examples 161—164, 166—169, 171, 173—175, 178—180, 182 and 183 are in conformity with the principles of our invention. The relative proportions of the three primary ingredients, $SrTiO_3$, $Ta_2O_5$ and CuO in all these Examples are in the ranges from 95.18 to 99.65 percent, from 0.33 to 3.32 percent, and from 0.02 to 1.50 percent, respectively. The $SiO_2$ and $Al_2O_3$ contents of the Examples range from 0.02 to 0.10 part, and from 0.01 to 0.03 part, respectively, with respect to 100 parts of the primary ingredients. The ratios in weight of $SiO_2$ to $Al_2O_3$ range from 1.5 to 5.0.

The crystal grains of these inventive Examples averaged from 60 to 120 micrometers in diameters. The apparent relative dielectric constants of the Examples were in the range from 82,000 to 136,000, their dielectric loss tangents from 0.5 to 0.7 percent, and their resistivities over $1.0 \times 10^{11}$ ohm-centimeters.

The other Examples, 154—160, 165, 170, 172, 176, 177, 181, and 184—187, are not in conformity with the principles of our invention. As will be noted from these noninventive Examples, the apparent relative dielectric constant becomes less than 80,000 if the weight ratio of $SiO_2$ to $Al_2O_3$ falls short of 1.5. If the weight ratio of $SiO_2$ to $Al_2O_3$ exceeds 5.0, on the other hand, then the dielectric loss tangent becomes more than 1.0 percent, or the resistivity becomes less than $1.0 \times 10^{11}$ ohm-centimeters. Also the apparent relative dielectric constant does not become greater than 80,000 if the proportion of $SiO_2$ is less than 0.02 part or more than 0.10 part with respect to 100 parts of the primary ingredients. Similarly the apparent relative dielectric constant becomes low if the proportion of $Al_2O_3$ is less than 0.01 part or more than 0.03 part with respect to 100 parts of the primary ingredients.

Consequently, for the boundary layer ceramics composed principally of $SrTiO_3$, $Ta_2O_5$ and $CuO$ in accordance with our invention, the proportions of $SiO_2$ and $Al_2O_3$ should be from about 0.02 to about 0.10 part, and from about 0.01 to about 0.03 part, respectively, with respect to 100 parts of the principal ingredients. Further the weight ratio of $SiO_2$ to $Al_2O_3$ should be from about 1.5 to about 5.0. In drawing these conclusions we presuppose, of course, that the proportions of the three principal ingredients are within the ranges of our invention.

We measured the temperature dependencies of the apparent relative dielectric constants of the above inventive Examples. The results were the same as those in the graph of Figure 2, with the percent variations of the dielectric constants of all the inventive Examples with temperatures falling within the hatched areas of the graph.

Examples 188—227

Uninsulated ceramic test discs were fabricated by use of the same ingredients, in the same proportions, as in Examples 163, 167, 169, 173, 175, 179, 182 and 183, and through the same procedure as in Examples 1—48. Then the three insulating substances in the various sets of proportions set forth in Table 6 were diffused throughout the intergranular boundaries of the test discs by the same method as in Examples 1—48. The insulated boundary layer ceramic test discs were then processed into test capacitors through the same procedure as in Examples 1—48.

Measured by the same methods as in Examples 1—48, the electrical properties in question of the thus prepared test capacitors were as given in Table 6. In this table the column labelled "Ceramic" indicates the uninsulated ceramics composed of the primary ingredients $SrTiO_3$, $Ta_2O_5$ and $CuO$ and the secondary ingredients $SiO_2$ and $Al_2O_3$.

TABLE 6

| | | Insulating substances | | | Electrical properties | | |
|---|---|---|---|---|---|---|---|
| Examples | Ceramic | PbO, wt.% | $Bi_2O_3$, wt.% | $B_2O_3$, wt.% | $\varepsilon$, $\times 10^4$ | tan $\delta$, % | $\rho$, $\times 10^{11}$ $\Omega$-cm |
| | Same as: | | | | | | |
| 188 | Example 163 | 34 | 56 | 10 | 7.9 | 0.7 | 1.5 |
| 189 | Example 163 | 35 | 55 | 10 | 8.2 | 0.6 | 1.4 |
| 190 | Example 163 | 45 | 52 | 3 | 8.0 | 0.6 | 1.4 |
| 191 | Example 163 | 50 | 40 | 10 | 8.8 | 0.7 | 1.4 |
| 192 | Example 167 | 38 | 57 | 5 | 8.0 | 0.6 | 1.4 |
| 193 | Example 167 | 45 | 47 | 8 | 8.2 | 0.6 | 1.4 |
| 194 | Example 167 | 53 | 38 | 9 | 8.4 | 0.7 | 1.4 |
| 195 | Example 169 | 34 | 59 | 7 | 8.8 | 1.1 | 1.4 |
| 196 | Example 169 | 35 | 58 | 7 | 9.0 | 0.7 | 1.4 |
| 197 | Example 169 | 40 | 58 | 2 | 9.0 | 0.7 | 1.4 |
| 198 | Example 169 | 45 | 45 | 10 | 9.5 | 0.6 | 1.3 |
| 199 | Example 169 | 54 | 44 | 2 | 9.2 | 0.6 | 1.3 |
| 200 | Example 173 | 35 | 58 | 7 | 9.9 | 0.7 | 1.3 |

TABLE 6 (cont.).

| | | Insulating substances | | | Electrical properties | | |
|---|---|---|---|---|---|---|---|
| Examples | Ceramic | PbO, wt.% | $Bi_2O_3$, wt.% | $B_2O_3$, wt.% | $\varepsilon$, $\times10^4$ | tan $\delta$, % | $\rho$, $\times10^{11}$ $\Omega$-cm |
| 201 | Example 173 | 39 | 52 | 9 | 10.2 | 0.7 | 1.3 |
| 202 | Example 173 | 47 | 52 | 1 | 9.3 | 0.7 | 0.2 |
| 203 | Example 173 | 50 | 40 | 10 | 10.8 | 0.6 | 1.3 |
| 204 | Example 173 | 55 | 40 | 5 | 10.4 | 0.8 | 0.6 |
| 205 | Example 175 | 39 | 52 | 9 | 8.4 | 0.7 | 1.4 |
| 206 | Example 175 | 40 | 49 | 11 | 8.5 | 1.2 | 1.5 |
| 207 | Example 175 | 53 | 38 | 9 | 8.6 | 0.7 | 1.4 |
| 208 | Example 175 | 38 | 57 | 5 | 8.1 | 0.7 | 1.4 |
| 209 | Example 175 | 45 | 52 | 3 | 8.1 | 0.6 | 1.3 |
| 210 | Example 175 | 50 | 40 | 10 | 8.9 | 0.6 | 1.3 |
| 211 | Example 179 | 40 | 58 | 2 | 9.0 | 0.7 | 1.5 |
| 212 | Example 179 | 45 | 45 | 10 | 9.5 | 0.6 | 1.4 |
| 213 | Example 179 | 54 | 44 | 2 | 9.2 | 0.6 | 1.4 |
| 214 | Example 179 | 54 | 40 | 6 | 9.6 | 0.6 | 1.4 |
| 215 | Example 179 | 35 | 55 | 10 | 9.2 | 0.7 | 1.4 |
| 216 | Example 179 | 45 | 52 | 3 | 9.0 | 0.6 | 1.4 |
| 217 | Example 179 | 50 | 40 | 10 | 9.9 | 0.6 | 1.5 |
| 218 | Example 179 | 54 | 36 | 10 | 10.2 | 0.7 | 0.5 |
| 219 | Example 182 | 38 | 57 | 5 | 12.6 | 0.6 | 1.3 |
| 220 | Example 182 | 45 | 45 | 10 | 13.3 | 0.6 | 1.3 |
| 221 | Example 182 | 54 | 45 | 1 | 12.1 | 0.8 | 0.3 |
| 222 | Example 182 | 54 | 44 | 2 | 12.9 | 0.6 | 1.3 |
| 223 | Example 183 | 40 | 58 | 2 | 8.7 | 0.6 | 1.4 |
| 224 | Example 183 | 39 | 52 | 9 | 7.0 | 0.6 | 1.4 |
| 225 | Example 183 | 45 | 52 | 3 | 8.7 | 0.6 | 1.4 |
| 226 | Example 183 | 50 | 40 | 10 | 9.6 | 0.6 | 1.4 |
| 227 | Example 183 | 50 | 38 | 12 | 10.2 | 1.1 | 1.1 |

In Examples 189—194, 196—201, 203, 205, 207—217, 219, 220, and 222—226 the relative proportions of PbO, $Bi_2O_3$ and $B_2O_3$ range from 35—54 percent, from 37 to 58 percent, and from two to 10 percent, respectively. The apparent relative dielectric constants of all these inventive Examples are sufficiently high,

# 0 076 456

and their dielectric loss tangents and resistivities are also favorable. In Examples 188, 195, 202, 204, 206, 218, 221 and 227, on the other hand, the relative proportions of the insulating substances all fall outside the above ranges. The electrical properties of these noninventive Examples are unsatisfactory.

Thus, for the boundary layer ceramics composed primarily of $SrTiO_3$, $Ta_2O_5$ and CuO, the relative proportions of the three insulating substances, PbO, $Bi_2O_3$ and $B_2O_3$, should be in the ranges from about 35 to about 54 percent, from about 37 to about 58 percent, and from about two to about 10 percent, respectively.

We measured the percentages of the insulating substances remaining diffused in the ceramic test discs of the above inventive Examples after the heat treatment. PbO remained at rates ranging from 0.07 to 1.65 percent, $Bi_2O_3$ at rates ranging from 0.23 to 2.53 percent, and $B_2O_3$ at rates ranging from 0.002 to 0.11 percent.

## Example 228

This Example was intended to ascertain the percentages of the three insulating substances to remain diffused in the boundary layer ceramics composed mainly of $SrTiO_3$, $Ta_2O_5$ and CuO, for the provision of capacitors of favorable electrical properties. The relative proportions of the insulating substances in use were within the desired ranges set forth in connection with Examples 188—227. The pasted mixture of the insulating substances was coated on uninsulated test discs in various amounts ranging from one to 15 wt.% of the test discs. The uninsulated ceramic test discs were composed principally of $SrTiO_3$, $Ta_2O_5$ and CuO, with their relative proportions within the desired ranges set forth in connection with Examples 154—187, and were prepared through the same procedure as in Examples 1—48. The above coated discs were heated at various temperatures ranging from 1150°C to 1300°C for various lengths of time ranging from one to four hours. Thus were prepared a number of insulated boundary layer ceramic test discs having the three insulating substances remaining diffused in their intergranular boundaries at various percentages. Then the test discs were processed into test capacitors through the same procedure as in Examples 1—48.

From among the thus prepared test capacitors we chose those having an apparent relative dielectric constant of over 80,000, a dielectric loss tangent of not more than one percent, and a resistivity of not less than $1.0 \times 10^{11}$ ohm-centimeters. The PbO, $Bi_2O_3$ and $B_2O_3$ contents of these test capacitors with the favorable electrical properties ranged from 0.03 to 2.75 percent, from 0.11 to 4.22 percent, and from 0.001 to 0.18 percent, respectively, with respect to the weight of the uninsulated test discs composed of the primary ingredients $SrTiO_3$, $Ta_2O_5$ and CuO and the secondary ingredients $SiO_2$ and $Al_2O_3$.

## Examples 229—262

In these Examples we tested a combination of $SrTiO_3$, $WO_3$ and $GeO_2$ as the primary ingredients. Insulated boundary layer ceramic test capacitors were prepared by use of these primary ingredients and the secondary ingredients $SiO_2$ and $Al_2O_3$, in various sets of proportions represented in Table 7, and of the insulating substances PbO, $Bi_2O_3$ and $B_2O_3$, through the same procedure as in Examples 1—48. Measured by the same methods as in Examples 1—48, the electrical properties of these test capacitors were as represented also in Table 7.

We also measured the percentages of the three insulating substances actually remaining diffused in the boundary layer ceramic test discs of the above compositions consisting primarily of $SrTiO_3$, $WO_3$ and $GeO_2$. PbO, $Bi_2O_3$ and $B_2O_3$ remained at percentages ranging from 0.31 to 0.86, from 0.57 to 1.61, and from 0.01 to 0.06, respectively, relative to the weight of the ceramic discs in the uninsulated state.

TABLE 7

| | Primary ingredients (100 wt. parts) | | | Secondary ingredients | | | Electrical properties | | |
|---|---|---|---|---|---|---|---|---|---|
| Examples | $SrTiO_3$, wt.% | $WO_3$, wt.% | $GeO_2$, wt.% | $SiO_2$, wt. part | $Al_2O_3$, wt. part | $\dfrac{SiO_2}{Al_2O_3}$ | $\varepsilon$, $\times 10^4$ | tan δ, % | $\rho$, $\times 10^{11}$ Ω-cm |
| 229 | 98.65 | 1.25 | 0.10 | — | — | — | 6.5 | 0.5 | 2.0 |
| 230 | 94.50 | 2.50 | 3.00 | 0.024 | 0.028 | 0.9 | 6.0 | 0.7 | 2.0 |
| 231 | 99.82 | 0.13 | 0.05 | 0.020 | 0.020 | 1.0 | 6.1 | 0.6 | 2.0 |
| 232 | 99.10 | 0.50 | 0.40 | 0.040 | 0.030 | 1.3 | 6.4 | 0.6 | 2.0 |
| 233 | 96.87 | 0.13 | 3.00 | 0.024 | 0.018 | 1.3 | 6.0 | 0.5 | 2.0 |
| 234 | 97.45 | 2.50 | 0.05 | 0.034 | 0.025 | 1.4 | 6.1 | 0.6 | 2.0 |

16

TABLE 7 (cont.).

| Examples | Primary ingredients (100 wt. parts) | | | Secondary ingredients | | | Electrical properties | | |
|---|---|---|---|---|---|---|---|---|---|
| | $SrTiO_3$, wt.% | $WO_3$, wt.% | $GeO_2$, wt.% | $SiO_2$, wt. part | $Al_2O_3$, wt. part | $\dfrac{SiO_2}{Al_2O_3}$ | $\varepsilon$, $\times 10^4$ | tan δ, % | $\rho$, $\times 10^{11}\,\Omega\text{-cm}$ |
| 235 | 96.70 | 2.00 | 1.30 | 0.015 | 0.010 | 1.5 | 6.2 | 0.5 | 2.0 |
| 236 | 99.63 | 0.22 | 0.15 | 0.021 | 0.014 | 1.5 | 8.4 | 0.5 | 1.8 |
| 237 | 96.87 | 0.13 | 3.00 | 0.030 | 0.020 | 1.5 | 8.9 | 0.5 | 1.8 |
| 238 | 94.50 | 2.50 | 3.00 | 0.045 | 0.030 | 1.5 | 8.8 | 0.5 | 1.8 |
| 239 | 98.65 | 1.25 | 0.10 | 0.040 | 0.025 | 1.6 | 9.9 | 0.5 | 1.7 |
| 240 | 99.82 | 0.13 | 0.05 | 0.060 | 0.035 | 1.7 | 6.1 | 0.6 | 1.6 |
| 241 | 96.70 | 2.00 | 1.30 | 0.052 | 0.028 | 1.9 | 9.5 | 0.5 | 1.7 |
| 242 | 99.82 | 0.13 | 0.05 | 0.020 | 0.010 | 2.0 | 8.5 | 0.4 | 1.8 |
| 243 | 97.45 | 2.50 | 0.05 | 0.043 | 0.020 | 2.2 | 9.4 | 0.5 | 1.7 |
| 244 | 98.53 | 0.17 | 1.30 | 0.070 | 0.030 | 2.3 | 9.9 | 0.5 | 1.6 |
| 245 | 99.10 | 0.50 | 0.40 | 0.078 | 0.031 | 2.5 | 6.4 | 0.6 | 2.0 |
| 246 | 94.50 | 2.50 | 3.00 | 0.032 | 0.012 | 2.7 | 8.4 | 0.4 | 1.8 |
| 247 | 98.53 | 0.17 | 1.30 | 0.095 | 0.035 | 2.7 | 6.4 | 0.6 | 1.8 |
| 248 | 99.63 | 0.22 | 0.15 | 0.060 | 0.020 | 3.0 | 10.2 | 0.4 | 1.6 |
| 249 | 96.70 | 2.00 | 1.30 | 0.090 | 0.028 | 3.2 | 9.9 | 0.6 | 1.6 |
| 250 | 98.53 | 0.17 | 1.30 | 0.100 | 0.030 | 3.3 | 8.6 | 0.6 | 1.7 |
| 251 | 99.10 | 0.50 | 0.40 | 0.102 | 0.026 | 3.9 | 6.4 | 0.6 | 1.8 |
| 252 | 99.63 | 0.22 | 0.15 | 0.020 | 0.005 | 4.0 | 6.2 | 0.5 | 2.0 |
| 253 | 99.10 | 0.50 | 0.40 | 0.040 | 0.010 | 4.0 | 10.0 | 0.5 | 1.6 |
| 254 | 97.45 | 2.50 | 0.05 | 0.080 | 0.020 | 4.0 | 9.8 | 0.5 | 1.6 |
| 255 | 99.82 | 0.13 | 0.05 | 0.070 | 0.015 | 4.7 | 12.7 | 0.5 | 1.3 |
| 256 | 99.63 | 0.22 | 0.15 | 0.040 | 0.008 | 5.0 | 6.2 | 0.5 | 2.0 |
| 257 | 98.53 | 0.17 | 1.30 | 0.050 | 0.010 | 5.0 | 13.9 | 0.5 | 1.1 |
| 258 | 98.65 | 1.25 | 0.10 | 0.100 | 0.020 | 5.0 | 9.8 | 0.6 | 1.6 |
| 259 | 96.70 | 2.00 | 1.30 | 0.080 | 0.015 | 5.3 | 14.3 | 1.2 | 0.1 |
| 260 | 99.10 | 0.50 | 0.40 | 0.055 | 0.010 | 5.5 | 15.3 | 1.3 | 0.1 |
| 261 | 96.87 | 0.13 | 3.00 | 0.090 | 0.015 | 6.0 | 10.1 | 1.0 | 0.7 |
| 262 | 97.45 | 2.50 | 0.05 | 0.095 | 0.012 | 7.9 | 7.9 | 0.9 | 0.8 |

17

Examples 236—239, 241—244, 246, 248—250, 253—255, 257, and 258 comply with the principles of our invention. The relative proportions of the three primary ingredients, $SrTiO_3$, $WO_3$ and $GeO_2$, in all these inventive Examples are in the ranges from 94.50 to 99.82 percent, from 0.13 to 2.50 percent, and from 0.05 to 3.00 percent, respectively. The $SiO_2$ and $Al_2O_3$ contents of the inventive Examples range from 0.02 to 0.10 part, and from 0.01 to 0.03 part, respectively, with respect to 100 parts of the primary ingredients, and the ratios in weight of $SiO_2$ to $Al_2O_3$ range from 1.5 to 5.0.

The crystal grains of the above inventive Examples averaged from 60 to 120 micrometers in diameter. The apparent relative dielectric constants of the Examples were in the range from 84,000 to 139,000, their dielectric loss tangents from 0.4 to 0.6 percent, and their resistivities over $1.1 \times 10^{11}$ ohm-centimeters.

The remaining Examples, 229—235, 240, 245, 247, 251, 252, 256, and 259—262, fall outside the purview of our invention. As will be noted from these noninventive Examples, the apparent relative dielectric constant becomes less than 80,000 if the weight ratio of $SiO_2$ to $Al_2O_3$ is less than 1.5. If the weight ratio of $SiO_2$ to $Al_2O_3$ exceeds 5.0, on the other hand, then either the dielectric loss tangent becomes more than 1.0 percent, or the resistivity becomes less than $1.0 \times 10^{11}$ ohm-centimeters. Also the apparent relative dielectric constant does not become greater than 80,000 if the proportion of $SiO_2$ is less than 0.02 part or more than 0.10 part with respect to 100 parts of the primary ingredients. Similarly the apparent relative dielectric constant becomes low if the proportion of $Al_2O_3$ is less than 0.01 part or more than 0.03 part with respect to 100 parts of the primary ingredients.

We conclude from the foregoing results of Table 7 that, for the boundary layer ceramics composed principally of $SrTiO_3$, $WO_3$ and $GeO_2$ in accordance with our invention, the proportions of $SiO_2$ and $Al_2O_3$ should be from about 0.02 to about 0.10 part, and from about 0.01 to about 0.03 part, respectively, with respect to 100 parts of the primary ingredients. Further the weight ratio of $SiO_2$ to $Al_2O_3$ should be from about 1.5 to about 5.0. These conclusions presuppose, of course, that the relative proportions of the three primary ingredients are within the ranges of our invention.

We measured the temperature dependencies of the apparent relative dielectric constants of the above inventive Examples. The results were also as in the graph of Figure 2, with the percent variations of the dielectric constants of all the inventive Examples with temperatures falling within the hatched areas of the graph.

Examples 263—297

Uninsulated ceramic test discs were fabricated by use of the same ingredients, and in the same proportions, as in Examples 238, 242, 244, 248, 250, 254, 257 and 258, and through the same procedure as in Examples 1—48. Then, in the various sets of proportions set forth in Table 8, the three insulating substances were diffused throughout the intergranular boundaries of the test discs by the same method as in Examples 1—48. The insulated ceramic test discs were then processed into test capacitors through the same procedure as in Examples 1—48.

Measured by the same methods as in Examples 1—48, the electrical properties of the thus prepared test capacitors were as given in Table 8. In this table the column labelled "Ceramic" indicates the uninsulated ceramics composed of the primary ingredients $SrTiO_3$, $WO_3$ and $GeO_2$ and the secondary ingredients $SiO_2$ and $Al_2O_3$.

TABLE 8

| Examples | Ceramic | Insulating substances | | | Electrical properties | | |
|---|---|---|---|---|---|---|---|
| | | PbO, wt.% | $Bi_2O_3$, wt.% | $B_2O_3$, wt.% | $\varepsilon$, $\times 10^4$ | tan $\delta$, % | $\rho$, $\times 10^{11}$ $\Omega$-cm |
| | Same as: | | | | | | |
| 263 | Example 238 | 31 | 59 | 10 | 8.2 | 1.2 | 1.8 |
| 264 | Example 238 | 35 | 60 | 5 | 8.2 | 0.8 | 1.8 |
| 265 | Example 238 | 39 | 52 | 9 | 8.4 | 0.6 | 1.8 |
| 266 | Example 238 | 54 | 44 | 2 | 8.4 | 0.5 | 1.7 |
| 267 | Example 238 | 61 | 34 | 5 | 8.5 | 0.6 | 1.7 |
| 268 | Example 242 | 32 | 58 | 10 | 8.0 | 0.9 | 1.8 |
| 269 | Example 242 | 40 | 59 | 1 | 8.0 | 0.9 | 0.8 |
| 270 | Example 242 | 45 | 47 | 8 | 8.2 | 0.6 | 1.8 |

TABLE 8 (cont.).

| Examples | Ceramic | Insulating substances | | | Electrical properties | | |
|---|---|---|---|---|---|---|---|
| | | PbO, wt.% | $Bi_2O_3$, wt.% | $B_2O_3$, wt.% | $\varepsilon$, $\times 10^4$ | tan $\delta$, % | $\rho$, $\times 10^{11}$ $\Omega$-cm |
| 271 | Example 242 | 54 | 40 | 6 | 8.4 | 0.5 | 1.8 |
| 272 | Example 242 | 61 | 37 | 2 | 8.1 | 0.6 | 1.7 |
| 273 | Example 244 | 34 | 59 | 7 | 9.0 | 0.6 | 1.6 |
| 274 | Example 244 | 45 | 52 | 3 | 9.2 | 0.5 | 1.6 |
| 275 | Example 244 | 54 | 45 | 1 | 8.8 | 0.6 | 0.5 |
| 276 | Example 244 | 58 | 32 | 10 | 10.7 | 0.5 | 1.5 |
| 277 | Example 248 | 40 | 58 | 2 | 9.5 | 0.7 | 1.6 |
| 278 | Example 248 | 40 | 49 | 11 | 8.6 | 1.2 | 1.1 |
| 279 | Example 248 | 50 | 40 | 10 | 10.4 | 0.5 | 1.5 |
| 280 | Example 248 | 55 | 40 | 5 | 10.0 | 0.5 | 1.5 |
| 281 | Example 250 | 35 | 55 | 10 | 8.2 | 0.7 | 1.7 |
| 282 | Example 250 | 37 | 61 | 2 | 8.1 | 1.1 | 1.6 |
| 283 | Example 250 | 54 | 36 | 10 | 9.0 | 0.6 | 1.6 |
| 284 | Example 250 | 61 | 37 | 2 | 8.2 | 0.6 | 1.6 |
| 285 | Example 254 | 38 | 57 | 5 | 9.1 | 0.7 | 1.7 |
| 286 | Example 254 | 45 | 45 | 10 | 9.6 | 0.6 | 1.6 |
| 287 | Example 254 | 55 | 40 | 5 | 9.6 | 0.6 | 1.6 |
| 288 | Example 254 | 59 | 31 | 10 | 10.7 | 0.6 | 0.5 |
| 289 | Example 254 | 61 | 34 | 5 | 9.5 | 0.7 | 1.5 |
| 290 | Example 257 | 32 | 58 | 10 | 12.9 | 0.6 | 1.2 |
| 291 | Example 257 | 40 | 58 | 2 | 12.9 | 0.6 | 1.2 |
| 292 | Example 257 | 53 | 38 | 9 | 13.8 | 0.5 | 1.0 |
| 293 | Example 257 | 61 | 31 | 8 | 15.4 | 0.6 | 0.2 |
| 294 | Example 258 | 35 | 60 | 5 | 9.1 | 0.7 | 1.7 |
| 295 | Example 258 | 39 | 52 | 9 | 9.4 | 0.6 | 1.6 |
| 296 | Example 258 | 54 | 44 | 2 | 9.3 | 0.6 | 1.6 |
| 297 | Example 258 | 63 | 35 | 2 | 9.5 | 0.8 | 0.6 |

In Examples 264—268, 270—274, 276, 277, 279—281, 283—292, and 294—296 the relative proportions of PbO, $Bi_2O_3$ and $B_2O_3$ are in the ranges from 32 to 61 percent, from 32 to 60 percent, and from two to 10 percent, respectively. The apparent relative dielectric constants of all these inventive Examples are sufficiently high, and their dielectric loss tangents and resistivities are also favorable. In Examples 263, 269, 275, 278, 282, 293 and 297, on the other hand, the relative proportions of PbO, $Bi_2O_3$ and $B_2O_3$ all fall outside the above ranges. The electrical properties of these noninventive Examples are unsatisfactory.

Thus, for the boundary layer ceramics composed primarily of $SrTiO_3$, $WO_3$ and $GeO_2$, the relative proportions of the three insulating substances, PbO, $Bi_2O_3$ and $B_2O_3$, should be in the ranges from about 32 to about 61 percent, from about 32 to about 60 percent, and from about two to about 10 percent, respectively.

We measured the percentages of the insulating substances remaining diffused in the ceramic test discs of the above inventive Examples after the heat treatment. PbO remained at rates ranging from 0.06 to 1.45 percent, $Bi_2O_3$ at rates ranging from 0.21 to 2.14 percent, and $B_2O_3$ at rates ranging from 0.002 to 0.10 percent.

Example 298

This Example was intended to ascertain the percentages of the three insulating substances to remain diffused in the boundary layer ceramics composed principally of $SrTiO_3$, $WO_3$ and $GeO_2$, for the provision of capacitors of favorable electrical properties. The relative proportions of the insulating substances in use were within the desired ranges set forth in connection with Examples 263—297. The pasted mixture of PbO, $Bi_2O_3$ and $B_2O_3$ was coated on uninsulated test discs in various amounts ranging from one to 15 wt.% of the test discs. The uninsulated ceramic test discs were composed primarily of $SrTiO_3$, $WO_3$ and $GeO_2$, with their relative proportions within the desired ranges specified in connection with Examples 229—262, and were prepared through the same procedure as in Examples 1—48. The above coated discs were heated at various temperatures ranging from 1150°C to 1300°C for various lengths of time ranging from one to four hours. Thus were prepared a number of insulated boundary layer ceramic test discs having the three insulating substances remaining diffused throughout their intergranular boundaries at various percentages. Then the test discs were processed into test capacitors through the same procedure as in Examples 1—48.

From among the thus prepared test capacitors we picked up those having an apparent relative dielectric constant of over 80,000, a dielectric loss tangent of not more than one percent, and a resistivity of not less than $1.0 \times 10^{11}$ ohm-centimeters. The PbO, $Bi_2O_3$ and $B_2O_3$ contents of these test capacitors with the favorable electrical properties ranged from 0.03 to 2.90 percent, from 0.10 to 4.28 percent, and from 0.001 to 0.18 percent, respectively, with respect to the weight of the uninsulated test discs composed of the primary ingredients $SrTiO_3$, $WO_3$ and $GeO_2$ and the secondary ingredients $SiO_2$ and $Al_2O_3$.

Examples 299—332

As the primary ingredients there was tried a combination of $SrTiO_3$, $Nb_2O_5$ and ZnO. Insulated boundary layer ceramic test capacitors were prepared by use of these primary ingredients and the secondary ingredients $SiO_2$ and $Al_2O_3$, in various sets of proportions specified in Table 9, and of the insulating substances PbO, $Bi_2O_3$ and $B_2O_3$, through the same procedure as in Examples 1—48. Measured by the same methods as in Examples 1—48, the electrical properties of these test capacitors were as represented also in Table 9.

We also measured the percentages of the three insulating substances remaining diffused in the boundary layer ceramic test discs of the above compositions consisting primarily of $SrTiO_3$, $Nb_2O_5$ and ZnO. PbO, $Bi_2O_3$ and $B_2O_3$ remained at percentages ranging from 0.27 to 0.79, from 0.51 to 1.48, and from 0.01 to 0.04, respectively, with respect to the weight of the ceramic discs in the uninsulated state.

TABLE 9

| Examples | Primary ingredients (100 wt. parts) | | | Secondary ingredients | | | Electrical properties | | |
|---|---|---|---|---|---|---|---|---|---|
| | $SrTiO_3$, wt.% | $Nb_2O_5$, wt.% | ZnO wt.% | $SiO_2$, wt. part | $Al_2O_3$, wt. part | $\dfrac{SiO_2}{Al_2O_3}$ | $\varepsilon$, $\times 10^4$ | tan $\delta$, % | $\rho$, $\times 10^{11}$ $\Omega$-cm |
| 299 | 98.45 | 1.05 | 0.50 | — | — | — | 6.3 | 0.7 | 1.5 |
| 300 | 91.20 | 5.30 | 3.50 | 0.024 | 0.028 | 0.9 | 5.8 | 0.8 | 1.5 |
| 301 | 99.82 | 0.13 | 0.05 | 0.020 | 0.020 | 1.0 | 6.1 | 0.7 | 1.5 |
| 302 | 93.50 | 4.50 | 2.00 | 0.040 | 0.030 | 1.3 | 6.1 | 0.7 | 1.5 |
| 303 | 97.35 | 2.50 | 0.15 | 0.024 | 0.018 | 1.3 | 6.3 | 0.5 | 1.5 |
| 304 | 94.65 | 5.30 | 0.05 | 0.034 | 0.025 | 1.4 | 6.0 | 0.7 | 1.5 |

20

TABLE 9 (cont.).

| Examples | Primary ingredients (100 wt. parts) | | | Secondary ingredients | | | Electrical properties | | |
|---|---|---|---|---|---|---|---|---|---|
| | $SrTiO_3$, wt.% | $Nb_2O_5$, wt.% | ZnO wt.% | $SiO_2$, wt. part | $Al_2O_3$, wt. part | $\dfrac{SiO_2}{Al_2O_3}$ | $\varepsilon$, $\times 10^4$ | tan $\delta$, % | $\rho$, $\times 10^{11}$ $\Omega$-cm |
| 305 | 96.37 | 0.13 | 3.50 | 0.015 | 0.010 | 1.5 | 5.8 | 0.7 | 1.5 |
| 306 | 99.75 | 0.20 | 0.05 | 0.021 | 0.014 | 1.5 | 8.5 | 0.6 | 1.5 |
| 307 | 96.37 | 0.13 | 3.50 | 0.030 | 0.020 | 1.5 | 8.8 | 0.6 | 1.5 |
| 308 | 94.65 | 5.30 | 0.05 | 0.045 | 0.030 | 1.5 | 8.8 | 0.6 | 1.5 |
| 309 | 98.45 | 1.05 | 0.50 | 0.040 | 0.025 | 1.6 | 9.6 | 0.6 | 1.4 |
| 310 | 91.20 | 5.30 | 3.50 | 0.060 | 0.035 | 1.7 | 5.8 | 0.8 | 1.4 |
| 311 | 99.82 | 0.13 | 0.05 | 0.052 | 0.028 | 1.9 | 9.2 | 0.6 | 1.4 |
| 312 | 97.35 | 2.50 | 0.15 | 0.020 | 0.010 | 2.0 | 8.7 | 0.6 | 1.5 |
| 313 | 93.50 | 4.50 | 2.00 | 0.043 | 0.020 | 2.2 | 9.4 | 0.5 | 1.4 |
| 314 | 96.37 | 0.13 | 3.50 | 0.070 | 0.030 | 2.3 | 9.1 | 0.6 | 1.4 |
| 315 | 98.10 | 0.40 | 1.50 | 0.078 | 0.031 | 2.5 | 6.2 | 0.7 | 1.4 |
| 316 | 94.65 | 5.30 | 0.05 | 0.032 | 0.012 | 2.7 | 8.4 | 0.6 | 1.5 |
| 317 | 98.45 | 1.05 | 0.50 | 0.095 | 0.035 | 2.7 | 6.4 | 0.7 | 1.4 |
| 318 | 93.50 | 4.50 | 2.00 | 0.060 | 0.020 | 3.0 | 10.1 | 0.5 | 1.4 |
| 319 | 91.20 | 5.30 | 3.50 | 0.090 | 0.028 | 3.2 | 9.1 | 0.6 | 1.4 |
| 320 | 97.35 | 2.50 | 0.15 | 0.100 | 0.030 | 3.3 | 9.0 | 0.7 | 1.4 |
| 321 | 98.45 | 1.05 | 0.50 | 0.102 | 0.026 | 3.9 | 6.4 | 0.7 | 1.5 |
| 322 | 97.35 | 2.50 | 0.15 | 0.020 | 0.005 | 4.0 | 6.3 | 0.7 | 1.5 |
| 323 | 98.10 | 0.40 | 1.50 | 0.040 | 0.010 | 4.0 | 9.7 | 0.6 | 1.4 |
| 324 | 99.82 | 0.13 | 0.05 | 0.080 | 0.020 | 4.0 | 9.8 | 0.6 | 1.4 |
| 325 | 98.45 | 1.05 | 0.50 | 0.070 | 0.015 | 4.7 | 13.3 | 0.7 | 1.2 |
| 326 | 93.50 | 4.50 | 2.00 | 0.040 | 0.008 | 5.0 | 6.1 | 0.7 | 1.5 |
| 327 | 91.20 | 5.30 | 3.50 | 0.050 | 0.010 | 5.0 | 12.5 | 0.6 | 1.0 |
| 328 | 99.75 | 0.20 | 0.05 | 0.100 | 0.020 | 5.0 | 9.4 | 0.6 | 1.4 |
| 329 | 97.35 | 2.50 | 0.15 | 0.080 | 0.015 | 5.3 | 14.3 | 1.4 | 0.1 |
| 330 | 96.37 | 0.13 | 3.50 | 0.055 | 0.010 | 5.5 | 14.1 | 1.4 | 0.1 |
| 331 | 98.45 | 1.05 | 0.50 | 0.090 | 0.015 | 6.0 | 10.8 | 1.2 | 0.7 |
| 332 | 98.10 | 0.40 | 1.50 | 0.095 | 0.012 | 7.9 | 8.1 | 1.0 | 0.8 |

21

Examples 306—309, 311—314, 316, 318—320, 323—325, 327, and 328 are in conformity with the principles of our invention. The relative proportions of the primary ingredients $SrTiO_3$, $Nb_2O_5$ and ZnO in all these inventive Examples are in the ranges from 91.18 to 99.82 percent, from 0.13 to 5.32 percent, and from 0.05 to 3.50 percent, respectively. The $SiO_2$ and $Al_2O_3$ contents of the inventive Examples range from 0.02 to 0.10 part, and from 0.01 to 0.03 part, respectively, with respect to 100 parts of the primary ingredients, and the ratios in weight of $SiO_2$ to $Al_2O_3$ range from 1.5 to 5.0.

The crystal grains of these inventive Examples averaged from 60 to 120 micrometers in diameter. The apparent relative dielectric constants of the Examples were in the range from 84,000 to 133,000, their dielectric loss tangents from 0.5 to 0.7 percent, and their resistivities over $1.0 \times 10^{11}$ ohm-centimeters.

The other Examples, 299—305, 310, 315, 317, 321, 322, 326, and 329—332, are noninventive. As will be noted from these noninventive Examples, the apparent relative dielectric constant becomes less than 80,000 if the weight ratio of $SiO_2$ to $Al_2O_3$ is less than 1.5. If the weight ratio exceeds 5.0, on the other hand, then either the dielectric loss tangent becomes more than 1.0 percent, or the resistivity becomes less than $1.0 \times 10^{11}$ ohm-centimeters. Also the apparent relative dielectric constant does not become greater than 80,000 if the proportion of $SiO_2$ is less than 0.02 part or more than 0.10 part with respect to 100 parts of the primary ingredients. Similarly, the apparent relative dielectric constant becomes low if the proportion of $Al_2O_3$ is less than 0.01 part or more than 0.03 part with respect to 100 parts of the primary ingredients.

We conclude from the foregoing results of Table 9 that, for the boundary layer ceramics composed principally of $SrTiO_3$, $Nb_2O_5$ and ZnO in accordance with our invention, the proportions of $SiO_2$ and $Al_2O_3$ should be from about 0.02 to 0.10 part, and from about 0.01 to about 0.03 part, respectively, with respect to 100 parts of the primary ingredients. Further the weight ratio of $SiO_2$ to $Al_2O_3$ should be from about 1.5 to about 5.0. These conclusions presuppose, of course, that the relative proportions of the primary ingredients are within the ranges of our invention.

We measured the temperature dependencies of the apparent relative dielectric constants of the above inventive Examples. The results were also as in the graph of Figure 2, with the percent variations of the dielectric constants of all the inventive Examples with temperatures falling within the hatched areas of the graph.

Examples 333—366

Uninsulated ceramic test discs were fabricated by use of the same ingredients, in the same proportions, as in Examples 308, 312, 313, 314, 320, 324, 327 and 328, and through the same procedure as in Examples 1—48. Then, in the various sets of proportions given in Table 10, the insulating substances PbO, $Bi_2O_3$ and $B_2O_3$ were diffused in the intergranular boundaries of the test discs by the same method as in Examples 1—48. The insulated ceramic test discs were then processed into test capacitors through the same procedure as in Examples 1—48.

Measured by the same methods as in Examples 1—48, the electrical properties in question of the thus prepared test capacitors were as represented in Table 10. In this table the column labelled "Ceramic" indicates the uninsulated ceramics composed of the primary ingredients $SrTiO_3$, $Nb_2O_5$ and ZnO and the auxiliary ingredients, $SiO_2$ and $Al_2O_3$.

TABLE 10

| Examples | Ceramic | Insulating substances | | | Electrical properties | | |
|---|---|---|---|---|---|---|---|
| | | PbO, wt.% | $Bi_2O_3$, wt.% | $B_2O_3$, wt.% | $\varepsilon$, $\times 10^4$ | tan $\delta$, % | $\rho$, $\times 10^{11}$ $\Omega$-cm |
| | Same as: | | | | | | |
| 333 | Example 308 | 30 | 60 | 10 | 8.0 | 0.7 | 1.6 |
| 334 | Example 308 | 38 | 57 | 5 | 8.2 | 0.6 | 1.6 |
| 335 | Example 308 | 50 | 38 | 12 | 9.5 | 1.2 | 1.2 |
| 336 | Example 308 | 61 | 37 | 2 | 8.4 | 0.7 | 1.5 |
| 337 | Example 312 | 35 | 58 | 7 | 8.1 | 0.6 | 1.5 |
| 338 | Example 312 | 45 | 52 | 3 | 8.1 | 0.6 | 1.5 |
| 339 | Example 312 | 50 | 40 | 10 | 8.9 | 0.6 | 1.5 |
| 340 | Example 312 | 61 | 34 | 5 | 8.4 | 0.8 | 0.7 |
| 341 | Example 313 | 35 | 55 | 10 | 8.9 | 0.6 | 1.5 |

**0 076 456**

TABLE 10 (cont.).

| Examples | Ceramic | Insulating substances | | | Electrical properties | | |
|---|---|---|---|---|---|---|---|
| | | PbO, wt.% | $Bi_2O_3$, wt.% | $B_2O_3$, wt.% | $\varepsilon$, $\times 10^4$ | tan $\delta$, % | $\rho$, $\times 10^{11}$ $\Omega$-cm |
| 342 | Example 313 | 45 | 47 | 8 | 9.0 | 0.6 | 1.5 |
| 343 | Example 313 | 54 | 40 | 6 | 9.3 | 0.6 | 1.4 |
| 344 | Example 313 | 54 | 45 | 1 | 8.4 | 0.7 | 0.5 |
| 345 | Example 314 | 34 | 56 | 10 | 8.4 | 0.6 | 1.5 |
| 346 | Example 314 | 45 | 52 | 3 | 8.5 | 0.6 | 1.5 |
| 347 | Example 314 | 61 | 37 | 2 | 8.6 | 0.8 | 1.4 |
| 348 | Example 314 | 62 | 36 | 2 | 8.2 | 0.9 | 0.6 |
| 349 | Example 320 | 29 | 61 | 10 | 7.8 | 1.5 | 1.6 |
| 350 | Example 320 | 35 | 60 | 5 | 8.2 | 0.8 | 1.5 |
| 351 | Example 320 | 45 | 45 | 10 | 8.8 | 0.6 | 1.5 |
| 352 | Example 320 | 60 | 35 | 5 | 8.8 | 0.7 | 1.4 |
| 353 | Example 324 | 30 | 60 | 10 | 8.9 | 0.7 | 1.4 |
| 354 | Example 324 | 40 | 58 | 2 | 9.1 | 0.7 | 1.4 |
| 355 | Example 324 | 40 | 49 | 11 | 8.2 | 1.2 | 1.4 |
| 356 | Example 324 | 61 | 34 | 5 | 9.3 | 0.7 | 0.6 |
| 357 | Example 324 | 61 | 37 | 2 | 9.3 | 0.8 | 1.3 |
| 358 | Example 327 | 34 | 59 | 7 | 11.4 | 0.7 | 1.1 |
| 359 | Example 327 | 38 | 61 | 1 | 10.4 | 1.2 | 0.6 |
| 360 | Example 327 | 45 | 47 | 8 | 12.0 | 0.6 | 1.1 |
| 361 | Example 327 | 54 | 40 | 6 | 12.4 | 0.7 | 1.0 |
| 362 | Example 328 | 35 | 55 | 10 | 8.9 | 0.7 | 1.5 |
| 363 | Example 328 | 47 | 52 | 1 | 8.3 | 0.7 | 0.7 |
| 364 | Example 328 | 53 | 38 | 9 | 9.3 | 0.6 | 1.4 |
| 365 | Example 328 | 55 | 40 | 5 | 9.2 | 0.6 | 1.4 |
| 366 | Example 328 | 61 | 37 | 2 | 8.9 | 0.7 | 1.4 |

In Examples 333, 334, 336—339, 341—343, 345—347, 350—354, 357, 358, 360—362, and 364—366 of Table 10 the relative proportions of PbO, $Bi_2O_3$ and $B_2O_3$ are in the ranges from 30 to 61 percent, from 35 to 60 percent, and from two to 10 percent, respectively. The apparent relative dielectric constants of all these inventive Examples are sufficiently high, and their dielectric loss tangents and resistivities are also favorable. In Examples 335, 340, 344, 348, 349, 355, 356, 359 and 363, on the other hand, the relative proportions of PbO, $Bi_2O_3$ and $B_2O_3$ all fall outside the above ranges. The electrical properties of these noninventive Examples are unsatisfactory.

23

Thus, for the boundary layer ceramics composed primarily of $SrTiO_3$, $Nb_2O_5$ and ZnO, the relative proportions of the insulating substances PbO, $Bi_2O_3$ and $B_2O_3$ should be in the ranges from about 30 to about 61 percent, from about 35 to about 60 percent, and from about two to about 10 percent, respectively.

We measured the percentages of the insulating substances remaining diffused in the ceramic test discs of the above inventive Examples after the heat treatment. PbO remained at rates ranging from 0.06 to 1.45 percent, $Bi_2O_3$ at rates ranging from 0.23 to 2.14 percent, and $B_2O_3$ at rates ranging from 0.002 to 0.09 percent.

Example 367

This Example was intended to ascertain the percentages of the three insulating substances to remain diffused in the boundary layer ceramics composed principally of $SrTiO_3$, $Nb_2O_5$ and ZnO, for the provision of capacitors of favorable electrical properties. The relative proportions of the three insulating substances in use were within the desired ranges set forth in connection with Examples 333—366. The pasted mixture of PbO, $Bi_2O_3$ and $B_2O_3$ was coated on uninsulated test discs in various amounts ranging from one to 15 wt.% of the test discs. The uninsulated ceramic test discs were composed principally of $SrTiO_3$, $Nb_2O_5$ and ZnO, with their relative proportions within the desired ranges specified in connection with Examples 299—332, and were prepared through the same procedure as in Examples 1—48. The above coated discs were heated at various temperatures ranging from 1150°C to 1300°C for various lengths of time ranging from one to four hours. Thus were prepared a number of insulated boundary layer ceramic test discs having the three insulating substances remaining diffused throughout their intergranular boundaries at various percentages. Then the test discs were processed into test capacitors through the same procedure as in Examples 1—48.

From among the thus prepared test capacitors there were chosen those having an apparent relative dielectric constant of over 80,000, a dielectric loss tangent of not more than one percent, and a resistivity of not less than $1.0 \times 10^{11}$ ohm-centimeters. The PbO, $Bi_2O_3$ and $B_2O_3$ contents of these test capacitors with the favorable electrical properties ranged from 0.03 to 2.90 percent, from 0.11 to 4.28 percent, and from 0.001 to 0.18 percent, respectively, with respect to the weight of the uninsulated test discs composed of the primary ingredients $SrTiO_3$, $Nb_2O_5$ and ZnO and the secondary ingredients $SiO_2$ and $Al_2O_3$.

Examples 368—401

$SrTiO_3$, $Ta_2O_5$ and ZnO were used in combination as the primary ingredients. Insulated boundary layer ceramic test capacitors were fabricated by use of these primary ingredients and the secondary ingredients $SiO_2$ and $Al_2O_3$, in various sets of proportions given in Table 11, and of the insulating substances PbO, $Bi_2O_3$ and $B_2O_3$, through the same procedure as in Examples 1—48. Measured by the same methods as in Examples 1—48, the electrical properties of these test capacitors were as represented in Table 11.

We also measured the percentages of the three insulating substances remaining diffused in the boundary layer ceramic test discs of the above compositions consisting primarily of $SrTiO_3$, $Ta_2O_5$ and ZnO. PbO, $Bi_2O_3$ and $B_2O_3$ remained at percentages ranging from 0.27 to 0.79, from 0.51 to 1.50, and from 0.01 to 0.05, respectively, with respect to the weight of the ceramic discs in the uninsulated state.

TABLE 11

| | Primary ingredients (100 wt. parts) | | | Secondary ingredients | | | Electrical properties | | |
|---|---|---|---|---|---|---|---|---|---|
| Examples | $SrTiO_3$, wt.% | $Ta_2O_5$, wt.% | ZnO, wt.% | $SiO_2$, wt. part | $Al_2O_3$, wt. part | $\dfrac{SiO_2}{Al_2O_3}$ | $\varepsilon$, $\times 10^4$ | tan δ, % | $\rho$, $\times 10^{11}$ Ω-cm |
| 368 | 98.50 | 1.20 | 0.30 | — | — | — | 6.7 | 0.6 | 2.0 |
| 369 | 94.50 | 3.00 | 2.50 | 0.024 | 0.028 | 0.9 | 6.0 | 0.8 | 2.0 |
| 370 | 99.62 | 0.33 | 0.05 | 0.020 | 0.020 | 1.0 | 6.3 | 0.7 | 2.0 |
| 371 | 98.14 | 1.80 | 0.06 | 0.040 | 0.030 | 1.3 | 6.5 | 0.8 | 2.0 |
| 372 | 97.17 | 0.33 | 2.50 | 0.024 | 0.018 | 1.3 | 6.1 | 0.6 | 2.0 |
| 373 | 96.95 | 3.00 | 0.05 | 0.034 | 0.025 | 1.4 | 6.3 | 0.6 | 2.0 |
| 374 | 96.25 | 1.75 | 2.00 | 0.015 | 0.010 | 1.5 | 6.4 | 0.6 | 2.0 |
| 375 | 98.50 | 1.20 | 0.30 | 0.021 | 0.014 | 1.5 | 9.2 | 0.5 | 1.7 |

24

# 0 076 456

TABLE 11 (cont.).

| | Primary ingredients (100 wt. parts) | | | Secondary ingredients | | | Electrical properties | | |
|---|---|---|---|---|---|---|---|---|---|
| Examples | $SrTiO_3$, wt.% | $Ta_2O_5$, wt.% | ZnO, wt.% | $SiO_2$, wt. part | $Al_2O_3$, wt. part | $\dfrac{SiO_2}{Al_2O_3}$ | $\varepsilon$, $\times 10^4$ | tan $\delta$, % | $\rho$, $\times 10^{11}$ $\Omega$-cm |
| 376 | 97.17 | 0.33 | 2.50 | 0.030 | 0.020 | 1.5 | 9.1 | 0.6 | 1.7 |
| 377 | 94.50 | 3.00 | 2.50 | 0.045 | 0.030 | 1.5 | 8.8 | 0.6 | 1.8 |
| 378 | 99.40 | 0.50 | 0.10 | 0.040 | 0.025 | 1.6 | 9.9 | 0.6 | 1.6 |
| 379 | 99.62 | 0.33 | 0.05 | 0.060 | 0.035 | 1.7 | 6.3 | 0.8 | 2.0 |
| 380 | 96.25 | 1.75 | 2.00 | 0.052 | 0.028 | 1.9 | 9.8 | 0.6 | 1.6 |
| 381 | 99.62 | 0.33 | 0.05 | 0.020 | 0.010 | 2.0 | 8.7 | 0.5 | 1.8 |
| 382 | 96.95 | 3.00 | 0.05 | 0.043 | 0.020 | 2.2 | 9.7 | 0.5 | 1.7 |
| 383 | 97.80 | 0.70 | 1.50 | 0.070 | 0.030 | 2.3 | 10.2 | 0.6 | 1.6 |
| 384 | 98.14 | 1.80 | 0.06 | 0.078 | 0.031 | 2.5 | 6.5 | 0.6 | 2.0 |
| 385 | 94.50 | 3.00 | 2.50 | 0.032 | 0.012 | 2.7 | 8.4 | 0.5 | 1.8 |
| 386 | 97.80 | 0.70 | 1.50 | 0.095 | 0.035 | 2.7 | 6.5 | 0.7 | 2.0 |
| 387 | 98.50 | 1.20 | 0.30 | 0.060 | 0.020 | 3.0 | 11.3 | 0.5 | 1.5 |
| 388 | 96.25 | 1.75 | 2.00 | 0.090 | 0.028 | 3.2 | 10.2 | 0.5 | 1.6 |
| 389 | 97.17 | 0.33 | 2.50 | 0.100 | 0.030 | 3.3 | 8.7 | 0.6 | 1.8 |
| 390 | 98.14 | 1.80 | 0.06 | 0.102 | 0.026 | 3.9 | 6.5 | 0.6 | 2.0 |
| 391 | 98.50 | 1.20 | 0.30 | 0.020 | 0.005 | 4.0 | 6.8 | 0.6 | 2.0 |
| 392 | 98.14 | 1.80 | 0.06 | 0.040 | 0.010 | 4.0 | 10.2 | 0.5 | 1.7 |
| 393 | 96.95 | 3.00 | 0.05 | 0.080 | 0.020 | 4.0 | 10.2 | 0.6 | 1.6 |
| 394 | 99.62 | 0.33 | 0.05 | 0.070 | 0.015 | 4.7 | 13.1 | 0.6 | 1.2 |
| 395 | 98.50 | 1.20 | 0.30 | 0.040 | 0.008 | 5.0 | 6.8 | 0.6 | 2.0 |
| 396 | 97.80 | 0.70 | 1.50 | 0.050 | 0.010 | 5.0 | 14.3 | 0.5 | 1.1 |
| 397 | 99.40 | 0.50 | 0.10 | 0.100 | 0.020 | 5.0 | 9.8 | 0.6 | 1.6 |
| 398 | 96.25 | 1.75 | 2.00 | 0.080 | 0.015 | 5.3 | 14.8 | 1.3 | 0.1 |
| 399 | 98.14 | 1.80 | 0.06 | 0.055 | 0.010 | 5.5 | 15.6 | 1.5 | 0.1 |
| 400 | 97.17 | 0.33 | 2.50 | 0.090 | 0.015 | 6.0 | 10.3 | 1.1 | 0.9 |
| 401 | 96.95 | 3.00 | 0.05 | 0.095 | 0.012 | 7.9 | 8.2 | 1.0 | 0.8 |

Examples 375—378, 380—383, 385, 387—389, 392—394, 396, and 397 comply with the teachings of our invention. The relative proportions of the three primary ingredients, $SrTiO_3$, $Ta_2O_5$ and ZnO, in all these inventive Examples are in the ranges from 94.50 to 99.62 percent, from 0.33 to 3.00 percent, and from 0.05 to 2.50 percent, respectively. The $SiO_2$ and $Al_2O_3$ contents of the inventive Examples range from 0.02 to 0.10

25

part, and from 0.01 to 0.03 part, respectively, with respect to 100 parts of the primary ingredients, and the ratios in which of $SiO_2$ to $Al_2O_3$ are in the range from 1.5 to 5.0.

The crystal grains of the above inventive Examples averaged in the range from 60 to 120 micrometers in diameter. The apparent relative dielectric constants of the Examples were in the range from 84,000 to 143,000, their dielectric loss tangents not more than 0.6 percent, and their resistivities over $1.1 \times 10^{11}$ ohm-centimeters.

The other Examples, 368—374, 379, 384, 386, 390, 391, 395, and 398—401, fall outside the purview of our invention. As will be noted from these noninventive Examples, the apparent relative dielectric constant becomes less than 80,000 if the weight ratio of $SiO_2$ to $Al_2O_3$ is less than 1.5. If the weight ratio of $SiO_2$ to $Al_2O_3$ exceeds 5.0, on the other hand, then either the dielectric loss tangent becomes more than 1.0 percent, or the resistivity becomes less than $1.0 \times 10^{11}$ ohm-centimeters. Also the apparent relative dielectric constant does not become greater than 80,000 if the proportion of $SiO_2$ is less than 0.02 part or more than 0.10 part with respect to 100 parts of the primary ingredients. Similarly the apparent relative dielectric constant becomes low if the proportion of $Al_2O_3$ is less than 0.01 part or more than 0.03 part with respect to 100 parts of the primary ingredients.

We conclude from the foregoing results of Table 11 that, for the boundary layer ceramics comprising $SrTiO_3$, $Ta_2O_5$ and ZnO in accordance with our invention, the proportions of $SiO_2$ and $Al_2O_3$ should be from about 0.02 to about 0.10 part, and from about 0.01 to about 0.03 part, respectively, with respect to 100 parts of the primary ingredients. Further the weight ratio of $SiO_2$ to $Al_2O_3$ should be from about 1.5 to about 5.0. These conclusions presuppose, of course that the relative proportions of the three primary ingredients are within the ranges of our invention.

We measured the temperature dependencies of the apparent relative dielectric constants of the above inventive Examples. The results were also as in the graph of Figure 2, with the percent variations of the dielectric constants of all the inventive Examples with temperatures falling within the hatched areas of the graph.

Examples 402—435

Uninsulated ceramic test discs were fabricated by use of the same ingredients, in the same proportions, as in Examples 377, 381, 383, 387, 389, 393, 396 and 397, and through the same procedure as in Examples 1—48. Then, in the various sets of proportions given in Table 12, the three insulating substances, PbO, $Bi_2O_3$ and $B_2O_3$, were diffused in the intergranular boundaries of the test discs by the same method as in Examples 1—48. The insulated boundary layer ceramic test discs were then processed into test capacitors through the same procedure as in Examples 1—48.

Measured by the same methods as in Examples 1—48, the three electrical properties in question of the thus prepared test capacitors were as set forth in Table 12. The column labelled "Ceramic" in this table represents the uninsulated ceramics composed of the primary ingredients $SrTiO_3$, $Ta_2O_5$ and ZnO and the auxiliary ingredients $SiO_2$ and $Al_2O_3$.

TABLE 12

| | | Insulating substances | | | Electrical properties | | |
|---|---|---|---|---|---|---|---|
| Examples | Ceramic | PbO, wt.% | $Bi_2O_3$, wt.% | $B_2O_3$, wt.% | $\varepsilon$, $\times 10^4$ | tan $\delta$, % | $\rho$, $\times 10^{11}$ $\Omega$-cm |
| | Same as: | | | | | | |
| 402 | Example 377 | 30 | 60 | 10 | 7.8 | 0.7 | 1.9 |
| 403 | Example 377 | 34 | 64 | 2 | 8.1 | 0.7 | 1.9 |
| 404 | Example 377 | 45 | 45 | 10 | 8.6 | 0.6 | 1.8 |
| 405 | Example 377 | 56 | 42 | 2 | 8.8 | 0.6 | 1.8 |
| 406 | Example 381 | 31 | 66 | 3 | 8.0 | 0.8 | 1.9 |
| 407 | Example 381 | 39 | 52 | 9 | 8.4 | 0.5 | 1.8 |
| 408 | Example 381 | 54 | 45 | 1 | 8.1 | 0.6 | 0.3 |
| 409 | Example 381 | 54 | 40 | 6 | 8.2 | 0.5 | 1.8 |
| 410 | Example 383 | 34 | 56 | 10 | 9.5 | 0.6 | 1.6 |
| 411 | Example 383 | 47 | 52 | 1 | 9.0 | 0.6 | 0.4 |

# 0 076 456

TABLE 12 (cont.).

| Examples | Ceramic | Insulating substances | | | Electrical properties | | |
|---|---|---|---|---|---|---|---|
| | | PbO, wt.% | $Bi_2O_3$, wt.% | $B_2O_3$, wt.% | $\varepsilon$, $\times 10^4$ | tan $\delta$, % | $\rho$, $\times 10^{11}$ $\Omega$-cm |
| 412 | Example 383 | 54 | 36 | 10 | 10.7 | 0.6 | 1.6 |
| 413 | Example 383 | 57 | 41 | 2 | 10.4 | 0.7 | 0.6 |
| 414 | Example 387 | 31 | 59 | 10 | 10.3 | 0.7 | 1.6 |
| 415 | Example 387 | 40 | 58 | 2 | 10.5 | 0.7 | 1.6 |
| 416 | Example 387 | 40 | 49 | 11 | 9.5 | 1.2 | 1.5 |
| 417 | Example 387 | 54 | 44 | 2 | 11.1 | 0.5 | 1.5 |
| 418 | Example 387 | 57 | 33 | 10 | 12.1 | 0.6 | 0.5 |
| 419 | Example 389 | 31 | 67 | 2 | 8.0 | 1.1 | 1.9 |
| 420 | Example 389 | 35 | 58 | 7 | 8.1 | 0.7 | 1.9 |
| 421 | Example 389 | 45 | 52 | 3 | 8.0 | 0.7 | 1.8 |
| 422 | Example 389 | 56 | 34 | 10 | 9.1 | 0.6 | 1.8 |
| 423 | Example 393 | 32 | 66 | 2 | 9.2 | 0.7 | 1.7 |
| 424 | Example 393 | 45 | 47 | 8 | 9.8 | 0.6 | 1.6 |
| 425 | Example 393 | 50 | 40 | 10 | 10.4 | 0.6 | 1.6 |
| 426 | Example 393 | 55 | 40 | 5 | 10.0 | 0.6 | 1.6 |
| 427 | Example 396 | 32 | 64 | 4 | 12.7 | 0.7 | 1.3 |
| 428 | Example 396 | 38 | 57 | 5 | 13.3 | 0.6 | 1.2 |
| 429 | Example 396 | 50 | 38 | 12 | 15.4 | 1.3 | 1.0 |
| 430 | Example 396 | 53 | 38 | 9 | 14.2 | 0.6 | 1.1 |
| 431 | Example 397 | 31 | 62 | 7 | 8.8 | 0.7 | 1.7 |
| 432 | Example 397 | 35 | 55 | 10 | 9.3 | 0.6 | 1.6 |
| 433 | Example 397 | 45 | 52 | 3 | 9.1 | 0.6 | 1.6 |
| 434 | Example 397 | 56 | 42 | 2 | 9.8 | 0.6 | 1.6 |
| 435 | Example 397 | 56 | 34 | 10 | 10.3 | 0.6 | 1.6 |

In Examples 403—407, 409, 410, 412, 414, 415, 427, 420—428, and 430—435 the relative proportions of the insulating substances PbO, $Bi_2O_3$ and $B_2O_3$ are in the ranges from 31 to 56 percent, from 34 to 66 percent, and from two to 10 percent, respectively. The apparent relative dielectric constants of all these inventive Exapmles are sufficiently high, and their dielectric loss tangents and resistivities are also favorable. In Examples 402, 408, 411, 413, 416, 418, 419 and 429, on the other hand, the relative proportions of the insulating substances all fall outside the above ranges. The electrical properties of these noninventive Examples are unsatisfactory.

Thus, for the boundary layer ceramics composed principally of $SrTiO_3$, $Ta_2O_5$ and ZnO, the relative proportions of the three insulating substances, PbO, $Bi_2O_3$ and $B_2O_3$, should be in the ranges from about 31 to 56 percent, from about 34 to about 66 percent, and from about two to about 10 percent, respectively.

27

We measured the percentages of the insulating substances remaining diffused in the ceramic test discs of the above inventive Examples after the heat treatment. PbO remained at rates ranging from 0.06 to 1.79 percent, $Bi_2O_3$ at rates ranging from 0.23 to 2.80 percent, and $B_2O_3$ at rates ranging from 0.002 to 0.12 percent.

Example 436

We examined in this Example the percentages of the three insulating substances to remain diffused in the boundary layer ceramics composed primarily of $SrTiO_3$, $Ta_2O_5$ and ZnO, for the provision of capacitors of favorable electrical properties. The relative proportions of the insulating substances in use were within the desired ranges set forth in connection with Examples 402—435. The pasted mixture of the insulating substances was coated on uninsulated ceramic test discs in various amounts ranging from one to 15 wt.% of the test discs. The uninsulated ceramic test discs were composed principally of $SrTiO_2$, $Ta_2O_5$ and ZnO, with their relative proportions within the desired ranges specified in connection with Examples 368—401, and were prepared through the same procedure as in Examples 1—48. The above coated discs were then heated at various temperaturs ranging from 1150°C to 1300°C for various lengths of time ranging from one to four hours. Thus were prepared a number of insulated boundary layer ceramic test discs having the three insulating substances remaining diffused throughout their intergranular boundaries at various percentages. Then the test discs were processed into test capacitors through the same procedure as in Examples 1—48.

From among the thus prepared test capacitors we picked up those having an apparent relative dielectric constant of over 80,000, a dielectric loss tangent of not more than one percent, and a resistivity of not less than $1.0 \times 10^{11}$ ohm-centimeters. The PbO, $Bi_2O_3$ and $B_2O_3$ contents of these test capacitors with the favorable electrical properties ranged from 0.03 to 2.80 percent, from 0.11 to 4.38 percent, and from 0.001 to 0.18 percent, respectively, with respect to the weight of the uninsulated test discs composed of the primary ingredients $SrTiO_3$, $Ta_2O_5$ and ZnO and the secondary ingredients $SiO_2$ and $Al_2O_3$.

Examples 437—470

We employed $SrTiO_3$, $WO_3$ and CuO as the three primary ingredients in these Examples. Insulated boundary layer ceramic test capacitors were fabricated by use of these primary ingredients and the secondary ingredients $SiO_2$ and $Al_2O_3$, in various sets of proportions specified in Table 13, and of the insulating substances PbO, $Bi_2O_3$ and $B_2O_3$, through the same procedure as in Examples 1—48. Measured by the same methods as in Examples 1—48, the electrical properties of these test capacitors were as represented also in Table 13.

We also measured the percentages of the three insulating substances remaining diffused in the boundary layer ceramic test discs of the above compositions consisting primarily of $SrTiO_3$, $WO_3$ and CuO. PbO, $Bi_2O_3$ and $B_2O_3$ remained at percentages ranging from 0.31 to 0.86, from 0.57 to 1.61, and from 0.01 to 0.06, respectively, with respect to the weight of the ceramic discs in the uninsulated state.

TABLE 13

| | Primary ingredients (100 wt. parts) | | | Secondary ingredients | | | Electrical properties | | |
|---|---|---|---|---|---|---|---|---|---|
| Examples | $SrTiO_3$, wt.% | $WO_3$, wt.% | CuO, wt.% | $SiO_2$, wt. part | $Al_2O_3$, wt. part | $\dfrac{SiO_2}{Al_2O_3}$ | $\varepsilon$, $\times 10^4$ | tan δ, % | $\rho$, $\times 10^{11}$ Ω-cm |
| 437 | 99.30 | 0.50 | 0.20 | — | — | — | 6.5 | 0.6 | 1.8 |
| 438 | 96.70 | 2.30 | 1.00 | 0.024 | 0.028 | 0.9 | 5.9 | 0.8 | 1.8 |
| 439 | 99.83 | 0.15 | 0.02 | 0.020 | 0.020 | 1.0 | 6.2 | 0.7 | 1.8 |
| 440 | 97.15 | 2.00 | 0.85 | 0.040 | 0.030 | 1.3 | 6.2 | 0.7 | 1.8 |
| 441 | 98.20 | 1.70 | 0.10 | 0.024 | 0.018 | 1.3 | 6.2 | 0.6 | 1.8 |
| 442 | 98.68 | 2.30 | 0.02 | 0.034 | 0.025 | 1.4 | 6.1 | 0.6 | 1.8 |
| 443 | 98.85 | 0.15 | 1.00 | 0.015 | 0.010 | 1.5 | 5.8 | 0.6 | 1.8 |
| 444 | 99.30 | 0.50 | 0.20 | 0.021 | 0.014 | 1.5 | 8.9 | 0.5 | 1.7 |
| 445 | 96.70 | 2.30 | 1.00 | 0.030 | 0.020 | 1.5 | 8.8 | 0.6 | 1.7 |

28

TABLE 13 (cont.).

| | Examples | Primary ingredients (100 wt. parts) | | | Secondary ingredients | | | Electrical properties | | |
|---|---|---|---|---|---|---|---|---|---|---|
| | | $SrTiO_3$, wt.% | $WO_3$, wt.% | CuO, wt.% | $SiO_2$, wt. part | $Al_2O_3$ wt. part | $\dfrac{SiO_2}{Al_2O_3}$ | $\varepsilon$, $\times 10^4$ | tan $\delta$, % | $\rho$, $\times 10^{11}\,\Omega$-cm |
| | 446 | 98.20 | 1.70 | 0.10 | 0.045 | 0.030 | 1.5 | 9.1 | 0.6 | 1.6 |
| | 447 | 98.68 | 2.30 | 0.02 | 0.040 | 0.025 | 1.6 | 9.1 | 0.6 | 1.6 |
| | 448 | 99.14 | 0.26 | 0.60 | 0.060 | 0.035 | 1.7 | 6.3 | 0.7 | 1.8 |
| | 449 | 99.69 | 0.26 | 0.05 | 0.052 | 0.028 | 1.9 | 9.6 | 0.6 | 1.6 |
| | 450 | 99.83 | 0.15 | 0.02 | 0.020 | 0.010 | 2.0 | 8.6 | 0.5 | 1.7 |
| | 451 | 97.15 | 2.00 | 0.85 | 0.043 | 0.020 | 2.2 | 9.5 | 0.5 | 1.6 |
| | 452 | 98.85 | 0.15 | 1.00 | 0.070 | 0.030 | 2.3 | 9.1 | 0.6 | 1.6 |
| | 453 | 98.68 | 2.30 | 0.02 | 0.078 | 0.031 | 2.5 | 6.1 | 0.6 | 1.8 |
| | 454 | 96.70 | 2.30 | 1.00 | 0.032 | 0.012 | 2.7 | 8.7 | 0.5 | 1.7 |
| | 455 | 99.30 | 0.50 | 0.20 | 0.095 | 0.035 | 2.7 | 6.6 | 0.7 | 1.8 |
| | 456 | 98.20 | 1.70 | 0.10 | 0.060 | 0.020 | 3.0 | 10.3 | 0.5 | 1.5 |
| | 457 | 99.14 | 0.26 | 0.60 | 0.090 | 0.028 | 3.2 | 9.9 | 0.6 | 1.6 |
| | 458 | 99.69 | 0.26 | 0.05 | 0.100 | 0.030 | 3.3 | 9.2 | 0.6 | 1.6 |
| | 459 | 99.83 | 0.15 | 0.02 | 0.102 | 0.026 | 3.9 | 6.2 | 0.7 | 1.8 |
| | 460 | 97.15 | 2.00 | 0.85 | 0.020 | 0.005 | 4.0 | 6.1 | 0.6 | 1.8 |
| | 461 | 98.85 | 0.15 | 1.00 | 0.040 | 0.010 | 4.0 | 9.3 | 0.6 | 1.6 |
| | 462 | 98.68 | 2.30 | 0.02 | 0.080 | 0.020 | 4.0 | 9.9 | 0.6 | 1.6 |
| | 463 | 99.30 | 0.50 | 0.20 | 0.070 | 0.015 | 4.7 | 14.0 | 0.6 | 1.1 |
| | 464 | 98.20 | 1.70 | 0.10 | 0.040 | 0.008 | 5.0 | 6.3 | 0.6 | 1.8 |
| | 465 | 99.83 | 0.15 | 0.02 | 0.050 | 0.010 | 5.0 | 13.8 | 0.6 | 1.1 |
| | 466 | 99.14 | 0.26 | 0.60 | 0.100 | 0.020 | 5.0 | 9.6 | 0.6 | 1.6 |
| | 467 | 98.85 | 0.15 | 1.00 | 0.080 | 0.015 | 5.3 | 14.1 | 1.2 | 0.1 |
| | 468 | 96.70 | 2.30 | 1.00 | 0.055 | 0.010 | 5.5 | 14.9 | 1.2 | 0.1 |
| | 469 | 98.68 | 2.30 | 0.02 | 0.090 | 0.015 | 6.0 | 10.8 | 1.1 | 0.6 |
| | 470 | 99.69 | 0.26 | 0.05 | 0.095 | 0.012 | 7.9 | 8.3 | 1.0 | 0.9 |

Examples 444—447, 449—452, 454, 456—458, 461—463, 465 and 466 comply with the principles of our invention. The relative proportions of the primary ingredients $SrTiO_3$, $WO_3$ and CuO in all these inventive Examples are in the ranges from 96.70 to 99.83 percent, from 0.15 to 2.30 percent, and from 0.02 to 1.00 percent, respectively. The $SiO_2$ and $Al_2O_3$ contents of the inventive Examples range from 0.02 to 0.10 part, and from 0.01 to 0.03 part, respectively, with respect to 100 parts of the primary ingredients, and the ratios in weight of $SiO_2$ to $Al_2O_3$ are in the range from 1.5 to 5.0.

The crystal grains of the above inventive Examples averaged in the range from 60 to 120 micrometers in diameter. The apparent relative dielectric constants of the Examples were in the range from 86,000 to 140,000, their dielectric loss tangents not more than 0.6 percent, and their resistivities over $1.1 \times 10^{11}$ ohm-centimeters.

Examples 437—443, 448, 453, 455, 459, 460, 464, and 467—470, on the other hand, fall outside the purview of our invention. As will be observed from these noninventive Examples, the apparent relative dielectric constant becomes less than 80,000 if the weight ratio of $SiO_2$ to $Al_2O_3$ is less than 1.5. If the weight ratio of $SiO_2$ to $Al_2O_3$ exceeds 5.0, on the other hand, then either the dielectric loss tangent becomes more than 1.0 percent, or the resistivity becomes less than $1.0 \times 10^{11}$ ohm-centimeters. Also the apparent relative dielectric constant does not become greater than 80,000 if the proportion of $SiO_2$ is less than 0.02 part or more than 0.10 part with respect to 100 parts of the primary ingredients. Similarly, the apparent relative dielectric constant becomes low if the proportion of $Al_2O_3$ is less than 0.01 part or more than 0.03 part with respect to 100 parts of the primary ingredients.

We conclude from the foregoing results of Table 13 that, for the boundary layer ceramics composed principally of $SrTiO_3$, $WO_3$ and CuO in accordance with our invention, the proportions of $SiO_2$ and $Al_2O_3$ should be from about 0.02 to about 0.10 part, and from about 0.01 to 0.03 part, respectively, with respect to 100 parts of the primary ingredients. Further the weight ratio of $SiO_2$ to $Al_2O_3$ should be from about 1.5 to about 5.0. These conclusions presuppose, of course, that the relative proportions of the three primary ingredients in use are within the ranges of our invention.

We measured the temperature dependencies of the apparent relative dielectric constants of the above inventive Examples. The results were also as in the graph of Figure 2, with the percent variations of the dielectric constants of all the inventive Examples with temperatures falling within the hatched areas of the graph.

Examples 471—504

Uninsulated ceramic test discs were fabricated by use of the same ingredients, in the same proportions, as in Examples 446, 450, 452, 454, 458, 462, 465 and 466, and through the same procedure as in Examples 1—48. Then, in the various sets of proportions specified in Table 14, the three insulating substances were diffused throughout the intergranular boundaries of the test discs by the same method as in Examples 1—48. The insulated boundary layer ceramic test discs were then processed into test capacitors through the same procedure as in Examples 1—48.

Measured by the same methods as in Examples 1—48, the three electrical properties in question of the thus prepared test capacitors were as set forth in Table 14. The column labelled "Ceramic" in this table represents the uninsulated ceramics composed of the primary ingredients $SrTiO_3$, $WO_3$ and CuO and the secondary ingredients $SiO_2$ and $Al_2O_3$. .

TABLE 14

| Examples | Ceramic | Insulating substances | | | Electrical properties | | |
|---|---|---|---|---|---|---|---|
| | | PbO, wt.% | $Bi_2O_3$, wt.% | $B_2O_3$, wt.% | $\varepsilon$, $\times 10^4$ | tan $\delta$, % | $\rho$, $\times 10^{11}$ $\Omega$-cm |
| 471 | Same as: Example 446 | 30 | 60 | 10 | 7.9 | 0.8 | 1.7 |
| 472 | Example 446 | 36 | 62 | 2 | 8.4 | 0.8 | 1.7 |
| 473 | Example 446 | 45 | 47 | 8 | 8.5 | 0.6 | 1.6 |
| 474 | Example 446 | 58 | 40 | 2 | 9.3 | 0.6 | 1.6 |
| 475 | Example 450 | 34 | 56 | 10 | 8.1 | 0.6 | 1.6 |
| 476 | Example 450 | 39 | 52 | 9 | 8.3 | 0.6 | 1.6 |
| 477 | Example 450 | 54 | 44 | 2 | 8.4 | 0.6 | 1.6 |
| 478 | Example 450 | 59 | 31 | 10 | 9.4 | 0.6 | 0.2 |
| 479 | Example 452 | 34 | 56 | 10 | 8.6 | 0.7 | 1.7 |
| 480 | Example 452 | 45 | 52 | 3 | 8.5 | 0.6 | 1.6 |
| 481 | Example 452 | 54 | 36 | 10 | 9.6 | 0.6 | 1.6 |

TABLE 14 (cont.).

| Examples | Ceramic | Insulating substances | | | Electrical properties | | |
|---|---|---|---|---|---|---|---|
| | | PbO, wt.% | $Bi_2O_3$, wt.% | $B_2O_3$, wt.% | $\varepsilon$, $\times 10^4$ | tan $\delta$, % | $\rho$, $\times 10^{11}\,\Omega$-cm |
| 482 | Example 452 | 59 | 39 | 2 | 9.6 | 0.6 | 0.6 |
| 483 | Example 454 | 34 | 59 | 7 | 8.1 | 0.7 | 1.7 |
| 484 | Example 454 | 47 | 52 | 1 | 7.6 | 0.7 | 0.3 |
| 485 | Example 454 | 50 | 40 | 10 | 8.9 | 0.6 | 1.6 |
| 486 | Example 454 | 54 | 45 | 1 | 7.7 | 0.6 | 0.2 |
| 487 | Example 458 | 35 | 63 | 2 | 8.5 | 1.1 | 1.7 |
| 488 | Example 458 | 40 | 58 | 2 | 8.6 | 0.7 | 1.7 |
| 489 | Example 458 | 45 | 45 | 10 | 9.0 | 0.6 | 1.6 |
| 490 | Example 458 | 55 | 40 | 5 | 9.0 | 0.6 | 1.6 |
| 491 | Example 462 | 31 | 62 | 7 | 8.9 | 0.7 | 1.7 |
| 492 | Example 462 | 40 | 49 | 11 | 8.3 | 1.1 | 1.5 |
| 493 | Example 462 | 53 | 38 | 9 | 9.8 | 0.6 | 1.6 |
| 494 | Example 462 | 58 | 40 | 2 | 10.1 | 0.6 | 1.6 |
| 495 | Example 462 | 58 | 32 | 10 | 10.7 | 0.6 | 1.6 |
| 496 | Example 465 | 31 | 59 | 10 | 12.6 | 0.7 | 1.3 |
| 497 | Example 465 | 45 | 52 | 3 | 12.8 | 0.6 | 1.2 |
| 498 | Example 465 | 54 | 36 | 10 | 14.5 | 0.6 | 1.1 |
| 499 | Example 465 | 58 | 31 | 11 | 15.2 | 1.5 | 0.8 |
| 500 | Example 466 | 38 | 57 | 5 | 8.9 | 0.7 | 1.6 |
| 501 | Example 466 | 45 | 45 | 10 | 9.4 | 0.6 | 1.6 |
| 502 | Example 466 | 50 | 38 | 12 | 10.4 | 1.2 | 1.2 |
| 503 | Example 466 | 58 | 40 | 2 | 9.8 | 0.6 | 1.6 |
| 504 | Example 466 | 58 | 32 | 10 | 10.4 | 0.6 | 1.6 |

In Examples 472—477, 479—481, 483, 485, 488—491, 493—498, 500, 501, 503 and 504 of Table 14 the relative proportions of the insulating substances PbO, $Bi_2O_3$ and $B_2O_3$ are in the ranges from 31 to 58 percent, from 32 to 62 percent, and from two to 10 percent, respectively. The apparent relative dielectric constants of all these inventive Examples are sufficiently high, and their dielectric loss tangents and resistivities are also favorable. In Examples 471, 478, 482, 484, 486, 487, 492, 499 and 502, on the other hand, the relative proportions of PbO, $Bi_2O_3$ and $B_2O_3$ all fall outside the above ranges. The electrical properties of these noninventive Examples are unsatisfactory.

Thus, for the boundary layer ceramics composed principally of $SrTiO_3$, $WO_3$ and $CuO$ in accordance with our invention, the relative proportions of the three insulating substances, PbO, $Bi_2O_3$ and $B_2O_3$, should be in the ranges from about 31 to about 58 percent, from about 32 to about 62 percent, and from about two to 10 percent, respectively.

# 0 076 456

We measured the percentages of the insulating substances remaining diffused in the ceramic test discs of the above inventive Examples after the heat treatment. PbO remained at rates ranging from 0.06 to 1.81 percent, $Bi_2O_3$ at rates ranging from 0.21 to 2.74 percent, and $B_2O_3$ at rates ranging from 0.002 to 0.12 percent.

## Example 505

We sought to determine in this Example the percentages of the three insulating substances to remain diffused in the boundary layer ceramics composed principally of $SrTiO_3$, $WO_3$ and CuO, for the provision of capacitors of favorable electrical properties. The relative proportions of the insulating substances in use were within the desired ranges set forth in connection with Examples 471—504. The pasted mixture of the insulating substances was coated on uninsulated ceramic test discs in various amounts ranging from one to 15 wt.% of the test discs. The uninsulated ceramic test discs were composed mainly of $SrTiO_3$, $WO_3$ and CuO, with their relative proportions within the desired ranges specified in connection with Examples 437—470, and were prepared through the same procedure as in Examples 1—48. The above coated discs were heated at various temperatures ranging from 1150°C to 1300°C for various lengths of time ranging from one to four hours. Thus were prepared a number of insulated boundary layer ceramic test discs having the three insulating substances remaining diffused throughout their intergranular boundaries at various percentages. Then the test discs were processed into test capacitors through the same procedure as in Examples 1—48.

From among the thus prepared test capacitors we picked up those having an apparent relative dielectric constant of over 80,000, a dielectric loss tangent of not more than one percent, and a resistivity of not less than $1.0 \times 10^{11}$ ohm-centimeters. The PbO, $Bi_2O_3$ and $B_2O_3$ contents of these test capacitors with the favorable electrical properties ranged from 0.03 to 2.83 percent, from 0.10 to 4.30 percent, and from 0.001 to 0.18 percent, respectively, with respect to the weight of the uninsulated test discs composed of the primary ingredients $SrTiO_3$, $WO_3$ and CuO and the secondary ingredients $SiO_2$ and $Al_2O_3$.

## Examples 506—539

In these Examples we tested a combination of $SrTiO_3$, $Ta_2O_5$ and $GeO_2$ as the primary ingredients. Insulated boundary layer ceramic test capacitors were fabricated by use of these primary ingredients and the secondary ingredients $SiO_2$ and $Al_2O_3$, in various sets of proportions specified in Table 15, and of the insulating substances PbO, $Bi_2O_3$ and $B_2O_3$, through the same procedure as in Examples 1—48. Measured by the same methods as in Examples 1—48, the electrical properties of these test capacitors were as represented also in Table 15.

We also measured the percentages of the three insulating substances remaining diffused in the boundary layer ceramic test discs of the above compositions primarily comprising $SrTiO_3$, $Ta_2O_5$ and $GeO_2$. PbO, $Bi_2O_3$ and $B_2O_3$ remained at percentages ranging from 0.28 to 0.86, from 0.49 to 1.61, and from 0.01 to 0.06, respectively, with respect to the weight of the ceramic discs in the uninsulated state.

### TABLE 15

| | Primary ingredients (100 wt. parts) | | | Secondary ingredients | | | Electrical properties | | |
|---|---|---|---|---|---|---|---|---|---|
| Examples | $SrTiO_3$, wt.% | $Ta_2O_5$, wt.% | $GeO_2$, wt.% | $SiO_2$, wt. part | $Al_2O_3$, wt. part | $\dfrac{SiO_2}{Al_2O_3}$ | $\varepsilon$, $\times 10^4$ | tan δ, % | $\rho$, $\times 10^{11}$ Ω-cm |
| 506 | 96.40 | 1.60 | 2.00 | — | — | — | 7.0 | 0.7 | 2.0 |
| 507 | 95.67 | 0.33 | 4.00 | 0.024 | 0.028 | 0.9 | 6.6 | 0.9 | 2.0 |
| 508 | 95.87 | 4.08 | 0.05 | 0.020 | 0.020 | 1.0 | 6.4 | 0.8 | 2.0 |
| 509 | 97.40 | 2.50 | 0.10 | 0.040 | 0.030 | 1.3 | 7.0 | 0.8 | 2.0 |
| 510 | 96.52 | 2.10 | 1.38 | 0.024 | 0.018 | 1.3 | 6.8 | 0.8 | 2.0 |
| 511 | 99.62 | 0.33 | 0.05 | 0.034 | 0.025 | 1.4 | 6.9 | 0.8 | 2.0 |
| 512 | 91.92 | 4.08 | 4.00 | 0.015 | 0.010 | 1.5 | 6.8 | 0.7 | 2.0 |
| 513 | 97.40 | 2.50 | 0.10 | 0.021 | 0.014 | 1.5 | 9.5 | 0.7 | 1.8 |
| 514 | 91.92 | 4.08 | 4.00 | 0.030 | 0.020 | 1.5 | 9.1 | 0.7 | 1.9 |

## 0 076 456

TABLE 15 (cont.).

| Examples | Primary ingredients (100 wt. parts) | | | Secondary ingredients | | | Electrical properties | | |
|---|---|---|---|---|---|---|---|---|---|
| | $SrTiO_3$, wt.% | $Ta_2O_5$, wt.% | $GeO_2$, wt.% | $SiO_2$, wt. part | $Al_2O_3$, wt. part | $\dfrac{SiO_2}{Al_2O_3}$ | $\varepsilon$, $\times 10^4$ | tan $\delta$, % | $\rho$, $\times 10^{11}$ $\Omega$-cm |
| 515 | 95.67 | 0.33 | 4.00 | 0.045 | 0.030 | 1.5 | 9.7 | 0.7 | 1.8 |
| 516 | 97.60 | 0.40 | 2.00 | 0.040 | 0.025 | 1.6 | 10.4 | 0.7 | 1.8 |
| 517 | 99.62 | 0.33 | 0.05 | 0.060 | 0.035 | 1.7 | 6.9 | 0.8 | 2.0 |
| 518 | 96.40 | 1.60 | 2.00 | 0.052 | 0.028 | 1.9 | 10.9 | 0.7 | 1.7 |
| 519 | 99.30 | 0.55 | 0.15 | 0.020 | 0.010 | 2.0 | 9.9 | 0.6 | 1.8 |
| 520 | 95.87 | 4.08 | 0.05 | 0.043 | 0.020 | 2.2 | 9.8 | 0.6 | 1.8 |
| 521 | 99.62 | 0.33 | 0.05 | 0.070 | 0.030 | 2.3 | 10.7 | 0.7 | 1.7 |
| 522 | 96.40 | 1.60 | 2.00 | 0.078 | 0.031 | 2.5 | 7.1 | 0.8 | 1.9 |
| 523 | 95.67 | 0.33 | 4.00 | 0.032 | 0.012 | 2.7 | 9.4 | 0.6 | 1.8 |
| 524 | 99.30 | 0.55 | 0.15 | 0.095 | 0.035 | 2.7 | 6.9 | 0.8 | 2.0 |
| 525 | 91.92 | 4.08 | 4.00 | 0.060 | 0.020 | 3.0 | 10.1 | 0.6 | 1.7 |
| 526 | 96.52 | 2.10 | 1.38 | 0.090 | 0.028 | 3.2 | 10.7 | 0.7 | 1.7 |
| 527 | 97.40 | 2.50 | 0.10 | 0.100 | 0.030 | 3.3 | 10.0 | 0.7 | 1.7 |
| 528 | 95.67 | 0.33 | 4.00 | 0.102 | 0.026 | 3.9 | 6.6 | 0.7 | 2.0 |
| 529 | 96.52 | 2.10 | 1.38 | 0.020 | 0.005 | 4.0 | 6.8 | 0.7 | 2.0 |
| 530 | 95.87 | 4.08 | 0.05 | 0.040 | 0.010 | 4.0 | 10.0 | 0.6 | 1.7 |
| 531 | 99.62 | 0.33 | 0.05 | 0.080 | 0.020 | 4.0 | 11.2 | 0.6 | 1.5 |
| 532 | 96.40 | 1.60 | 2.00 | 0.070 | 0.015 | 4.7 | 15.5 | 0.6 | 1.2 |
| 533 | 99.30 | 0.55 | 0.15 | 0.040 | 0.008 | 5.0 | 6.8 | 0.6 | 2.0 |
| 534 | 97.60 | 0.40 | 2.00 | 0.050 | 0.010 | 5.0 | 15.7 | 0.6 | 1.1 |
| 535 | 96.52 | 2.10 | 1.38 | 0.100 | 0.020 | 5.0 | 10.4 | 0.7 | 1.7 |
| 536 | 97.40 | 2.50 | 0.10 | 0.080 | 0.015 | 5.3 | 16.8 | 1.1 | 0.1 |
| 537 | 97.60 | 0.40 | 2.00 | 0.055 | 0.010 | 5.5 | 17.3 | 1.2 | 0.1 |
| 538 | 91.92 | 4.08 | 4.00 | 0.090 | 0.015 | 6.0 | 10.5 | 1.1 | 0.2 |
| 539 | 95.87 | 4.08 | 0.05 | 0.095 | 0.012 | 7.9 | 8.4 | 1.0 | 0.9 |

Examples 513—516, 518—521, 523, 525—527, 530—532, 534 and 535 comply with the princples of our invention. The relative proportions of the three primary ingredients, $SrTiO_3$, $Ta_2O_5$ and $GeO_2$, in all these inventive Examples are in the ranges from 91.92 to 99.62 percent, from 0.33 to 4.08 percent, and from 0.05 to 4.00 percent, respectively. The $SiO_2$ and $Al_2O_3$ contents of the inventive Examples range from 0.02 to 0.10 part, and from 0.01 to 0.03 part, respectively, with respect to 100 parts of the primary ingredients, and the ratios in weight of $SiO_2$ to $Al_2O_3$ are in the range from 1.5 to 5.0.

The crystal grains of the above inventive Examples averaged in the range from 60 to 120 micrometers in diameter. The apparent relative dielectric constants of the Examples were in the range from 91,000 to 157,000, their dielectric loss tangents not more than 0.7 percent, and their resistivities over $1.1 \times 10^{11}$ ohm-centimeters.

Examples 506—512, 517, 522, 524, 528, 529, 533, and 536—539, on the other hand, fall outside the scope of our invention. As will be seen from these noninventive Examples, the apparent relative dielectric constant becomes less than 80,000 if the weight ratio of $SiO_2$ to $Al_2O_3$ is less than 1.5. If the weight ratio exceeds 5.0, on the other hand, then either the dielectric loss tangent becomes more than 1.0 percent, or the resistivity becomes less than $1.0 \times 10^{11}$ ohm-centimeters. Also the apparent relative dielectric constant does not become greater than 80,000 if the proportion of $SiO_2$ is less than 0.02 part or more than 0.10 part with respect to 100 parts of the primary ingredients. Similarly the apparent relative dielectric constant becomes low if the proportion of $Al_2O_3$ is less than 0.01 part or more than 0.03 part with respect to 100 parts of the primary ingredients.

We conclude from the above summarized results of Table 15 that, for the boundary layer ceramics composed principally of $SrTiO_3$, $Ta_2O_5$ and $GeO_2$ in accordance with our invention, the proportions of $SiO_2$ and $Al_2O_3$ should be from about 0.02 to about 0.10 part, and from about 0.01 to about 0.03 part, respectively, with respect to 100 parts of the primary ingredients. Further the weight ratio of $SiO_2$ to $Al_2O_3$ should be from about 1.5 to about 5.0. These conclusions presuppose, of course, that the relative proportions of the three primary ingredients are within the ranges of our invention.

We measured the temperature dependencies of the apparent relative dielectric constants of the above inventive Examples. The results were also as in the graph of Figure 2, with the percent variations of the dielectric constants of all the inventive Examples with temperatures falling within the hatched areas of the graph.

Examples 540—575

Uninsulated ceramic test discs were fabricated by use of the same ingredients, in the same proportions, as in Examples 515, 519, 521, 525, 527, 530, 534 and 535, and through the same procedure as in Examples 1—48. Then, in the various sets of proportions specified in Table 16, the insulating substances PbO, $Bi_2O_3$ and $B_2O_3$ were diffused throughout the intergranular boundaries of the test discs by the same method as in Examples 1—48. The insulated boundary layer ceramic test discs were then processed into test capacitors through the same procedure as in Examples 1—48.

Measured by the same methods as in Examples 1—48, the three electrical properties in question of the thus prepared test capacitors were as set forth in Table 16. The column labelled "Ceramic" in this table represents the uninsulated ceramics composed of the primary ingredients $SrTiO_3$, $Ta_2O_5$ and $GeO_2$ and the secondary ingredients $SiO_2$ and $Al_2O_3$.

TABLE 16

| | | Insulating substances | | | Electrical properties | | |
|---|---|---|---|---|---|---|---|
| Examples | Ceramic | PbO, wt.% | $Bi_2O_3$, wt.% | $B_2O_3$, wt.% | $\varepsilon$, $\times 10^4$ | tan $\delta$, % | $\rho$, $\times 10^{11}$ $\Omega$-cm |
| 540 | Same as: Example 515 | 26 | 64 | 10 | 7.9 | 1.1 | 2.0 |
| 541 | Example 515 | 35 | 63 | 2 | 8.9 | 0.8 | 1.9 |
| 542 | Example 515 | 45 | 47 | 8 | 9.3 | 0.7 | 1.8 |
| 543 | Example 515 | 58 | 40 | 2 | 9.9 | 0.7 | 1.8 |
| 544 | Example 519 | 27 | 63 | 10 | 8.8 | 0.9 | 1.9 |
| 545 | Example 519 | 40 | 58 | 2 | 9.2 | 0.7 | 1.8 |
| 546 | Example 519 | 56 | 34 | 10 | 10.5 | 0.6 | 1.7 |
| 547 | Example 519 | 59 | 39 | 2 | 10.4 | 0.6 | 1.7 |
| 548 | Example 521 | 34 | 64 | 2 | 9.6 | 1.1 | 1.8 |
| 549 | Example 521 | 39 | 52 | 9 | 10.3 | 0.7 | 1.7 |
| 550 | Example 521 | 45 | 52 | 3 | 10.0 | 0.7 | 1.7 |

## 0 076 456

TABLE 16 (cont.).

| Examples | Ceramic | Insulating substances | | | Electrical properties | | |
|---|---|---|---|---|---|---|---|
| | | PbO, wt.% | $Bi_2O_3$, wt.% | $B_2O_3$, wt.% | $\varepsilon$, $\times 10^4$ | tan $\delta$, % | $\rho$, $\times 10^{11}$ $\Omega$-cm |
| 551 | Example 521 | 50 | 40 | 10 | 10.9 | 0.7 | 1.7 |
| 552 | Example 521 | 58 | 34 | 8 | 11.4 | 0.7 | 1.7 |
| 553 | Example 525 | 30 | 60 | 10 | 9.2 | 0.7 | 1.8 |
| 554 | Example 525 | 38 | 57 | 5 | 9.4 | 0.6 | 1.7 |
| 555 | Example 525 | 40 | 59 | 1 | 8.2 | 0.7 | 0.3 |
| 556 | Example 525 | 54 | 36 | 10 | 10.6 | 0.6 | 1.7 |
| 557 | Example 525 | 59 | 34 | 7 | 10.9 | 0.6 | 0.7 |
| 558 | Example 527 | 27 | 63 | 10 | 8.5 | 0.8 | 1.8 |
| 559 | Example 527 | 35 | 58 | 7 | 9.3 | 0.7 | 1.7 |
| 560 | Example 527 | 54 | 44 | 2 | 9.8 | 0.7 | 1.7 |
| 561 | Example 527 | 57 | 33 | 10 | 10.8 | 0.7 | 0.5 |
| 562 | Example 530 | 34 | 59 | 7 | 9.1 | 0.7 | 1.7 |
| 563 | Example 530 | 40 | 49 | 11 | 8.4 | 1.2 | 1.7 |
| 564 | Example 530 | 53 | 38 | 9 | 9.9 | 0.6 | 1.7 |
| 565 | Example 530 | 58 | 40 | 2 | 10.2 | 0.6 | 1.7 |
| 566 | Example 534 | 35 | 55 | 10 | 14.9 | 0.6 | 1.2 |
| 567 | Example 534 | 45 | 52 | 3 | 14.6 | 0.6 | 1.1 |
| 568 | Example 534 | 45 | 45 | 10 | 15.4 | 0.6 | 1.1 |
| 569 | Example 534 | 50 | 38 | 12 | 17.0 | 1.3 | 1.0 |
| 570 | Example 534 | 55 | 40 | 5 | 15.4 | 0.6 | 1.1 |
| 571 | Example 535 | 35 | 63 | 2 | 9.6 | 0.8 | 1.8 |
| 572 | Example 535 | 38 | 57 | 5 | 9.7 | 0.7 | 1.7 |
| 573 | Example 535 | 50 | 40 | 10 | 10.6 | 0.7 | 1.7 |
| 574 | Example 535 | 54 | 45 | 1 | 9.3 | 0.7 | 0.3 |
| 575 | Example 535 | 56 | 34 | 10 | 11.0 | 0.7 | 1.6 |

In Examples 541—546, 549—554, 556, 558—560, 562, 564—568, 570—573 and 575 of Table 16 the relative proportions of PbO, $Bi_2O_3$ and $B_2O_3$ are in the ranges from 27 to 58 percent, from 34 to 63 percent, and from two to 10 percent, respectively. The apparent relative dielectric constants of all these inventive Examples are sufficiently high, and their dielectric loss tangents and resistivities are also favorable. In Examples 540, 547, 548, 555, 557, 561, 563, 569 and 574, on the other hand, the relative proportions of PbO, $Bi_2O_3$ and $B_2O_3$ all fall outside the above ranges. The electrical properties of these noninventive Examples are unsatisfactory.

Thus, for the boundary layer ceramics composed principally of $SrTiO_3$, $Ta_2O_5$ and $GeO_2$, the relative proportions of the three insulating substances, PbO, $Bi_2O_3$ and $B_2O_3$, should be in the ranges from about 27 to about 58 percent, from about 34 to about 63 percent, and from about two to about 10 percent, respectively.

We measured the percentages of the insulating substances remaining diffused in the ceramic test discs of the above inventive Examples after the heat treatment. PbO remained at rates ranging from 0.05 to 1.76 percent, $Bi_2O_3$ at rates ranging from 0.23 to 2.69 percent, and $B_2O_3$ at rates ranging from 0.002 to 0.12 percent.

Example 576

In this Example we ascertained the percentages of the three insulating substances to remain diffused in the boundary layer ceramics composed principally of $SrTiO_3$, $Ta_2O_5$ and $GeO_2$, for the provision of capacitors of favorable electrical properties. The relative proportions of the insulating substances in use were within the desired ranges set forth in connection with Examples 540—575. The pasted mixture of the insulating substances was coated on uninsulated ceramic test discs in various amounts ranging from one to 15 wt.% of the test discs. The uninsulated ceramic test discs were composed primarily of $SrTiO_3$, $Ta_2O_5$ and $GeO_2$, with their relative proportions within the desired ranges specified in connection with Examples 506—539, and were prepared through the same procedure as in Examples 1—48. The above coated discs were heated at various temperatures ranging from 1150°C to 1300°C for various lengths of time ranging from one to four hours. Thus were prepared a number of insulated boundary layer ceramic test discs having the three insulating substances remaining diffused throughout their intergranular boundaries at various percentages. Then the test discs were processed into test capacitors through the same procedure as in Examples 1—48.

From among the thus fabricated test capacitors we picked up those having an apparent relative dielectric constant of over 80,000, a dielectric loss tangent of not more than one percent, and a resistivity of not less than $1.0 \times 10^{11}$ ohm-centimeters. The PbO, $Bi_2O_3$ and $B_2O_3$ contents of these test capacitors with the favorable electrical properties ranged from 0.02 to 2.83 percent, from 0.11 to 4.33 percent, and from 0.001 to 0.18 percent, respectively, with respect to the weight of the uninsulated test discs composed of the primary ingredients $SrTiO_3$, $Ta_2O_5$ and $GeO_2$ and the secondary ingredients $SiO_2$ and $Al_2O_3$.

Examples 577—610

In these Examples we tried a combination of $SrTiO_3$, $Nb_2O_5$ and CuO as the primary ingredients. Insulated boundary layer ceramic test capacitors were fabricated by use of these primary ingredients and the auxiliary ingredients $SiO_2$ and $Al_2O_3$, in various sets of proportions specified in Table 17, and of the insulating substances PbO, $Bi_2O_3$ and $B_2O_3$, through the same procedure as in Examples 1—48. Measured by the same methods as in Examples 1—48, the electrical properties of these test capacitors were as represented also in Table 17.

We also measured the percentages of the three insulating substances remaining diffused in the boundary layer ceramic test discs of the above compositions primarily comprising $SrTiO_3$, $Nb_2O_5$ and CuO. PbO, $Bi_2O_3$ and $B_2O_3$ remained at percentages ranging from 0.28 to 0.86, from 0.49 to 1.50, and from 0.01 to 0.06, respectively, with respect to the weight of the ceramic discs in the uninsulated state.

TABLE 17

| | Primary ingredients | | | Secondary ingredients | | | Electrical properties | | |
|---|---|---|---|---|---|---|---|---|---|
| Examples | $SrTiO_3$, wt.% | $Nb_2O_5$, wt.% | CuO, wt.% | $SiO_2$, wt. part | $Al_2O_3$ wt. part | $\dfrac{SiO_2}{Al_2O_3}$ | $\varepsilon$, $\times 10^4$ | tan δ, % | $\rho$, $\times 10^{11}$ Ω-cm |
| 577 | 98.80 | 0.70 | 0.50 | — | — | — | 6.4 | 0.3 | 1.7 |
| 578 | 98.37 | 0.13 | 1.50 | 0.024 | 0.028 | 0.9 | 6.0 | 0.6 | 1.7 |
| 579 | 97.25 | 2.70 | 0.05 | 0.020 | 0.020 | 1.0 | 6.3 | 0.5 | 1.7 |
| 580 | 99.85 | 0.13 | 0.02 | 0.040 | 0.030 | 1.3 | 5.9 | 0.6 | 1.7 |
| 581 | 94.66 | 5.32 | 0.02 | 0.024 | 0.018 | 1.3 | 6.0 | 0.5 | 1.7 |
| 582 | 98.30 | 0.30 | 1.40 | 0.034 | 0.025 | 1.4 | 6.1 | 0.5 | 1.7 |
| 583 | 93.18 | 5.32 | 1.50 | 0.015 | 0.010 | 1.5 | 6.0 | 0.3 | 1.7 |
| 584 | 99.70 | 0.25 | 0.05 | 0.021 | 0.014 | 1.5 | 8.2 | 0.3 | 1.6 |

TABLE 17 (cont.).

| Examples | Primary ingredients | | | Secondary ingredients | | | Electrical properties | | |
|---|---|---|---|---|---|---|---|---|---|
| | $SrTiO_3$, wt.% | $Nb_2O_5$, wt.% | CuO, wt.%. | $SiO_2$, wt. part | $Al_2O_3$ wt. part | $\dfrac{SiO_2}{Al_2O_3}$ | $\varepsilon$, $\times 10^4$ | tan $\delta$, % | $\rho$, $\times 10^{11}$ $\Omega$-cm |
| 585 | 98.37 | 0.13 | 1.50 | 0.030 | 0.020 | 1.5 | 8.6 | 0.4 | 1.6 |
| 586 | 94.66 | 5.32 | 0.02 | 0.045 | 0.030 | 1.5 | 8.3 | 0.5 | 1.6 |
| 587 | 98.80 | 0.70 | 0.50 | 0.040 | 0.025 | 1.6 | 9.7 | 0.5 | 1.5 |
| 588 | 94.75 | 4.50 | 0.75 | 0.060 | 0.035 | 1.7 | 6.4 | 0.6 | 1.7 |
| 589 | 99.85 | 0.13 | 0.02 | 0.052 | 0.028 | 1.9 | 8.9 | 0.5 | 1.6 |
| 590 | 93.18 | 5.32 | 1.50 | 0.020 | 0.010 | 2.0 | 8.4 | 0.3 | 1.6 |
| 591 | 94.75 | 4.50 | 0.75 | 0.043 | 0.020 | 2.2 | 9.8 | 0.3 | 1.5 |
| 592 | 97.25 | 2.70 | 0.05 | 0.070 | 0.030 | 2.3 | 9.7 | 0.4 | 1.5 |
| 593 | 98.37 | 0.13 | 1.50 | 0.078 | 0.031 | 2.5 | 5.7 | 0.6 | 1.7 |
| 594 | 94.66 | 5.32 | 0.02 | 0.032 | 0.012 | 2.7 | 8.4 | 0.4 | 1.6 |
| 595 | 93.18 | 5.32 | 1.50 | 0.095 | 0.035 | 2.7 | 5.9 | 0.6 | 1.7 |
| 596 | 99.70 | 0.25 | 0.05 | 0.060 | 0.020 | 3.0 | 10.1 | 0.4 | 1:5 |
| 597 | 99.85 | 0.13 | 0.02 | 0.090 | 0.028 | 3.2 | 9.3 | 0.5 | 1.5 |
| 598 | 94.75 | 4.50 | 0.75 | 0.100 | 0.030 | 3.3 | 9.1 | 0.5 | 1.5 |
| 599 | 94.66 | 5.32 | 0.02 | 0.102 | 0.026 | 3.9 | 6.0 | 0.6 | 1.7 |
| 600 | 98.80 | 0.70 | 0.50 | 0.020 | 0.005 | 4.0 | 6.5 | 0.4 | 1.7 |
| 601 | 97.25 | 2.70 | 0.05 | 0.040 | 0.010 | 4.0 | 9.9 | 0.4 | 1.5 |
| 602 | 93.18 | 5.32 | 1.50 | 0.080 | 0.020 | 4.0 | 9.5 | 0.5 | 1.5 |
| 603 | 98.37 | 0.13 | 1.50 | 0.070 | 0.015 | 4.7 | 12.3 | 0.5 | 1.3 |
| 604 | 97.25 | 2.70 | 0.05 | 0.040 | 0.008 | 5.0 | 6.3 | 0.4 | 1.7 |
| 605 | 98.30 | 0.30 | 1.40 | 0.050 | 0.010 | 5.0 | 13.2 | 0.5 | 1.5 |
| 606 | 98.80 | 0.70 | 0.50 | 0.100 | 0.020 | 5.0 | 9.7 | 0.5 | 1.5 |
| 607 | 99.70 | 0.25 | 0.05 | 0.080 | 0.015 | 5.3 | 14.6 | 1.1 | 0.1 |
| 608 | 93.18 | 5.32 | 1.50 | 0.055 | 0.010 | 5.5 | 14.1 | 1.2 | 0.1 |
| 609 | 94.66 | 5.32 | 0.02 | 0.090 | 0.015 | 6.0 | 10.1 | 1.0 | 0.7 |
| 610 | 94.75 | 4.50 | 0.75 | 0.095 | 0.012 | 7.9 | 8.3 | 0.9 | 0.8 |

Examples 584—587, 589—592, 594, 596—598, 601—603, 605 and 606 comply with the teachings of our invention. The relative proportions of the three primary ingredients, $SrTiO_3$, $Nb_2O_5$ and CuO, in all these inventive Examples are in the ranges from 93.18 to 99.85 percent, from 0.13 to 5.32 percent, and from 0.12 to 1.50 percent, respectively. The $SiO_2$ and $Al_2O_3$ contents of the inventive Examples range from 0.02 to 0.10 part, and from 0.01 to 0.03 part, respectively, with respect to 100 parts of the primary ingredients, and the ratios in weight of $SiO_2$ to $Al_2O_3$ are in the range from 1.5 to 5.0.

The crystal grains of these inventive Examples averaged in the range from 60 to 120 micrometers in diameter. The apparent relative dielectric constants of the Examples were in the range from 82,000 to 132,000, their dielectric loss tangents not more than 0.5 percent, and their resistivities over $1.3 \times 10^{11}$ ohm-centimeters.

Examples 577—583, 588, 593, 595, 599, 600, 604, and 607—610, on the other hand, fall outside the scope of our invention. As will be noted from these noninventive Examples, the apparent relative dielectric constant does not exceed 80,000 if the weight ratio of $SiO_2$ to $Al_2O_3$ is less than 1.5. If the weight ratio of $SiO_2$ to $Al_2O_3$ is greater than 5.0, on the other hand, then either the dielectric loss tangent becomes more than 1.0 percent, or the resistivity becomes less than $1.0 \times 10^{11}$ ohm-centimeters. Also the apparent relative dielectric constant does not become greater than 80,000 if the proportion of $SiO_2$ is less than 0.02 part or more than 0.10 part with respect to 100 parts of the primary ingredients. Similarly the apparent relative dielectric constant becomes low if the proportion of $Al_2O_3$ is less than 0.01 part or more than 0.03 part with respect to 100 parts of the primary ingredients.

We conclude from the above summarized results of Table 17 that, for the boundary layer ceramics composed primarily of $SrTiO_3$, $Nb_2O_5$ and $CuO$ in accordance with our invention, the proportions of $SiO_2$ and $Al_2O_3$ should be from 0.02 to about 0.10 part, and from about 0.01 to about 0.03 part, respectively, with respect to 100 parts of the primary ingredients. Further the ratio in weight of $SiO_2$ to $Al_2O_3$ should be from about 1.5 to about 5.0. These conclusions presuppose, of course, that the relative proportions of the three primary ingredients are within the ranges of our invention.

We measured the temperature dependencies of the apparent relative dielectric constants of the above inventive Examples. The results were also as in the graph of Figure 2, with the percent variations of the dielectric constants of all the inventive Examples with temperatures falling within the hatched areas of the graph.

Examples 611—646

Uninsulated ceramic test discs were fabricated by the use of the same ingredients, in the same proportions, as in Examples 585, 586, 590, 596, 597, 598, 605 and 606, and through the same procedure as in Examples 1—48. Then, in the various sets of proportions specified in Table 18, the three insulating substances $PbO$, $Bi_2O_3$ and $B_2O_3$ were diffused throughout the intergranular boundaries of the test discs by the same method as in Examples 1—48. The insulated ceramic test discs were then processed into test capacitors through the same procedure as in Examples 1—48.

Measured by the same methods as in Examples 1—48, the electrical properties of the thus prepared test capacitors were as given in Table 18. The column labelled "Ceramic" in this table represents the uninsulated ceramics composed of the primary ingredients $SrTiO_3$, $Nb_2O_5$ and $CuO$ and the secondary ingredients $SiO_2$ and $Al_2O_3$.

TABLE 18

| | | Insulating substances | | | Electrical properties | | |
|---|---|---|---|---|---|---|---|
| Examples | Ceramic | PbO, wt.% | $Bi_2O_3$, wt.% | $B_2O_3$, wt.% | $\varepsilon$, $\times 10^4$ | tan δ, % | $\rho$, $\times 10^{11}$ Ω-cm |
| | Same as: | | | | | | |
| 611 | Example 585 | 34 | 56 | 10 | 7.9 | 0.6 | 1.7 |
| 612 | Example 585 | 38 | 57 | 5 | 8.0 | 0.6 | 1.7 |
| 613 | Example 585 | 45 | 45 | 10 | 9.0 | 0.5 | 1.6 |
| 614 | Example 585 | 54 | 44 | 2 | 9.9 | 0.5 | 1.6 |
| 615 | Example 586 | 35 | 58 | 7 | 8.0 | 0.7 | 1.7 |
| 616 | Example 586 | 39 | 52 | 9 | 8.2 | 0.6 | 1.7 |
| 617 | Example 586 | 47 | 52 | 1 | 8.5 | 0.7 | 0.5 |
| 618 | Example 586 | 50 | 40 | 10 | 8.6 | 0.6 | 1.6 |
| 619 | Example 590 | 35 | 55 | 10 | 8.0 | 0.6 | 1.7 |
| 620 | Example 590 | 40 | 59 | 1 | 8.0 | 1.1 | 0.6 |

38

# 0 076 456

TABLE 18 (cont.).

| Examples | Ceramic | Insulating substances | | | Electrical properties | | |
|---|---|---|---|---|---|---|---|
| | | PbO, wt.% | $Bi_2O_3$, wt.% | $B_2O_3$, wt.% | $\varepsilon$, $\times 10^4$ | $\tan \delta$, % | $\rho$, $\times 10^{11}$ $\Omega$-cm |
| 621 | Example 590 | 45 | 47 | 8 | 8.1 | 0.5 | 1.6 |
| 622 | Example 590 | 54 | 40 | 6 | 8.3 | 0.4 | 1.6 |
| 623 | Example 596 | 35 | 58 | 7 | 9.4 | 0.5 | 1.6 |
| 624 | Example 596 | 45 | 52 | 3 | 10.2 | 0.5 | 1.5 |
| 625 | Example 596 | 50 | 40 | 10 | 10.4 | 0.4 | 1.5 |
| 626 | Example 596 | 52 | 43 | 5 | 9.9 | 0.4 | 1.5 |
| 627 | Example 596 | 55 | 40 | 5 | 10.1 | 0.5 | 0.8 |
| 628 | Example 597 | 34 | 59 | 7 | 7.9 | 1.1 | 1.7 |
| 629 | Example 597 | 40 | 58 | 2 | 8.6 | 0.6 | 1.6 |
| 630 | Example 597 | 45 | 45 | 10 | 9.6 | 0.5 | 1.5 |
| 631 | Example 597 | 54 | 44 | 2 | 8.8 | 0.6 | 1.6 |
| 632 | Example 598 | 38 | 57 | 5 | 8.5 | 0.7 | 1.7 |
| 633 | Example 598 | 40 | 49 | 11 | 9.3 | 1.2 | 1.3 |
| 634 | Example 598 | 45 | 52 | 3 | 8.5 | 0.1 | 1.6 |
| 635 | Example 598 | 50 | 40 | 10 | 8.6 | 0.5 | 1.6 |
| 636 | Example 598 | 54 | 40 | 6 | 9.0 | 0.5 | 1.5 |
| 637 | Example 605 | 35 | 55 | 10 | 12.5 | 0.6 | 1.6 |
| 638 | Example 605 | 40 | 58 | 2 | 12.3 | 0.7 | 1.6 |
| 639 | Example 605 | 45 | 47 | 8 | 12.7 | 0.5 | 1.5 |
| 640 | Example 605 | 52 | 43 | 5 | 12.9 | 0.5 | 1.5 |
| 641 | Example 605 | 54 | 45 | 1 | 11.7 | 0.8 | 0.3 |
| 642 | Example 606 | 35 | 59 | 6 | 8.8 | 1.3 | 1.5 |
| 643 | Example 606 | 35 | 55 | 10 | 9.2 | 0.6 | 1.5 |
| 644 | Example 606 | 45 | 52 | 3 | 9.0 | 0.5 | 1.5 |
| 645 | Example 606 | 52 | 43 | 5 | 9.5 | 0.5 | 1.5 |
| 646 | Example 606 | 51 | 39 | 10 | 9.6 | 0.6 | 0.6 |

In Examples 612—616, 618, 619, 621—626, 629—632, 634—640, and 643—645 of Table 18 the relative proportions of PbO, $Bi_2O_3$ and $B_2O_3$ are in the ranges from 35 to 54 percent, from 40 to 58 percent, and from two to 10 percent, respectively. The apparent relative dielectric constants of all these inventive Examples are sufficiently high, and their dielectric loss tangents and resistivities are also favorable. In Examples 611, 617, 620, 627, 628, 633, 641, 642 and 646, on the other hand, the relative proportions of PbO, $Bi_2O_3$ and $B_2O_3$

39

all fall outside the above ranges. The electrical properties of these noninventive Examples are unsatisfactory.

Thus, for the boundary layer ceramics composed principally of $SrTiO_3$, $Nb_2O_5$ and CuO in accordance with our invention, the relative proportions of the insulating substances PbO, $Bi_2O_3$ and $B_2O_3$ should be in the ranges from about 35 to about 54 percent, from about 40 to about 58 percent, and from about two to about 10 percent, respectively.

We measured the percentages of the insulating substances remaining diffused in the ceramic test discs of the above inventive Examples after the heat treatment. PbO remained at rates ranging from 0.07 to 1.76 percent, $Bi_2O_3$ at rates ranging from 0.24 to 2.70 percent, and $B_2O_3$ at rates ranging from 0.002 to 0.12 percent.

Example 647

We sought to determine in this Example the percentages of the three insulating substances to remain diffused in the boundary layer ceramics composed primarily of $SrTiO_3$, $Nb_2O_5$ and CuO, for the provision of capacitors of favorable electrical properties. The relative proportions of the insulating substances in use were within the desired ranges set forth in connection with Examples 611—646. The pasted mixture of the insulating substances was coated on uninsulated ceramic test discs in various amounts ranging from one to 15 wt.% of the test discs. The uninsulated ceramic test discs were composed principally of $SrTiO_3$, $Nb_2O_5$ and CuO, with their relative proportions within the desired ranges specified in connection with Examples 577—610, and were prepared through the same procedure as in Examples 1—48. The above coated discs were heated at various temperatures from 1150°C to 1300°C for various lengths of time from one to four hours. Thus were prepared a number of insulated boundary layer ceramic test discs having the three insulating substances remaining diffused throughout their intergranular boundaries at various percentages. These test discs were then processed into test capacitors through the same procedure as in Examples 1—48.

From among the thus prepared test capacitors we picked up those having an apparent relative dielectric constant of over 80,000, a dielectric loss tangent of not more than one percent, and a resistivity of not less than $1.0 \times 10^{11}$ ohm-centimeters. The PbO, $Bi_2O_3$ and $B_2O_3$ contents of these test capacitors with the favorable electrical properties ranged from 0.03 to 2.75 percent, from 0.12 to 4.23 percent, and from 0.001 to 0.18 percent, respectively, with respect to the weight of the uninsulated test discs composed of the primary ingredients $SrTiO_3$, $Nb_2O_5$ and CuO and the secondary ingredients $SiO_2$ and $Al_2O_3$.

Although we have disclosed the boundary layer ceramics of our invention and the method of their preparation in terms of specific Examples, we understand that these are meant purely to illustrate or explain and not to impose limitations upon the invention, since a variety of modifications or variations will readily occur to the ceramics specialist on the basis of this disclosure. The following is a brief list of such modifications and variations:

1. The insulating substances PbO, $Bi_2O_3$ and $B_2O_3$ may not necessarily be used as starting substances in the manufacture of the boundary layer ceramics in accordance with our invention, all that is required being that they exist as such in the intergranular boundaries of the completed ceramics. Other substances may therefore be adopted as well, only if they become PbO, $Bi_2O_3$ and $B_2O_3$ on being heated for diffusion in the intergranular boundaries. Examples include red lead oxide ($Pb_3O_4$), lead fluoride ($PbF_2$), lead borate ($Pb(BO_2)_2 \cdot H_2O$), and bismuth trifluoride ($BiF_3$).

2. As another method of diffusing the insulating substances in the intergranular boundaries, there may be prepared a mixture of substances that will be thermally converted into PbO, $Bi_2O_3$ and $B_2O_3$ in the desired ranges of proportions. This mixture may be fired at, for instance, 1000°C to provide the required insulating substances, then pulverized, pasted, and coated on uninsulated ceramic bodies.

3. The insulating substances may not necessarily be coated on uninsulated ceramic bodies but may be otherwise layered thereon as by vacuum deposition or by immersion of the bodies therein.

4. The primary ingredients $SrTiO_3$, $Nb_2O_5$, $WO_3$, $Ta_2O_5$, $GeO_2$, ZnO and CuO and the auxiliary ingredients $SiO_2$ and $Al_2O_3$ are also required to exist as such only in the completed ceramics; starting substances may be different. Thus, for example, strontium carbonate and titanium oxide may be used as starting substances to provide $SrTiO_3$ in the completed ceramics.

5. Not only one but two or all of $Nb_2O_5$, $WO_3$ and $Ta_2O_5$ may be used in a total amount ranging from about 0.07 to about 5.32 percent.

6. Not only one but two or all of $GeO_2$, ZnO and CuO may be used in a total amount ranging from about 0.02 to about 4.00 percent.

Additional modifications and variations of our invention may be resorted to without departing from the scope of the appended claims.

**Claims**

1. An insulated boundary layer ceramic having dielectric constants of not less than 80,000, dielectric loss tangents of not more than one percent and a resistivity of not less than $1.0 \times 10^{11}$ ohm-centimeters, and having primary and secondary ingredients forming in combination a polycrystalline ceramic proper, and insulating substances dispersed throughout the intergranular boundaries of the ceramic proper, the primary ingredients comprising, in relative proportions, from about 90.68 to about 99.88 percent by weight $SrTiO_3$, from about 0.07 to about 5.32 percent by weight of at least one of $Nb_2O_5$, $WO_3$ and $Ta_2O_5$, and from about 0.02 to about 4.00 percent by weight of at least one of $GeO_2$, ZnO and CuO, the secondary ingredients comprising from about 0.02 to about 0.10 part by weight $SiO_2$ and from about 0.01 to about 0.03 part by weight $Al_2O_3$ with respect to 100 parts by weight of the primary ingredients, the ratio in weight of $SiO_2$ to $Al_2O_3$ being from about 1.5 to about 5.0, and the insulating substances comprising from about 0.02 to about 2.90 percent by weight PbO, from about 0.10 to about 4.38 percent by weight $Bi_2O_3$, and from about 0.001 to about 0.18 percent by weight $B_2O_3$, the percentages of the insulating substances being all with respect to the total weight of the primary and the secondary ingredients.

2. An insulated boundary layer ceramic as claimed in Claim 1, wherein the primary ingredients comprise, in relative proportions, from about 90.68 to about 99.88 percent by weight $SrTiO_3$, from about 0.07 to about 5.32 percent by weight $Nb_2O_5$, and from about 0.05 to about 4.00 percent by weight $GeO_2$, and wherein the insulating substances comprise from about 0.03 to about 2.90 percent by weight PbO, from about 0.11 to about 4.34 percent by weight $Bi_2O_3$, and from about 0.001 to about 0.18 percent by weight $B_2O_3$, with respect to the total weight of the primary and the secondary ingredients.

3. An insulated boundary layer ceramic as claimed in Claim 1, wherein the primary ingredients comprise, in relative proportions, from about 95.20 to about 99.80 percent by weight $SrTiO_3$, from about 0.15 to about 2.30 percent by weight $WO_3$, and from about 0.05 to about 2.50 percent by weight ZnO, and wherein the insulating substances comprise from about 0.03 to about 2.75 percent by weight PbO, from about 0.11 to about 4.23 percent by weight $Bi_2O_3$, and from about 0.001 to about 0.18 percent by weight $B_2O_3$, with respect to the total weight of the primary and the secondary ingredients.

4. An insulated boundary layer ceramic as claimed in Claim 1, wherein the primary ingredients comprise, in relative proportions, from about 95.18 to about 99.65 percent by weight $SrTiO_3$, from about 0.33 to about 3.32 percent by weight $Ta_2O_5$, and from about 0.02 to about 1.50 by weight CuO, and wherein the insulating substances comprise from about 0.03 to about 2.75 percent by weight PbO, from about 0.11 to about 4.22 percent by weight $Bi_2O_3$, and from about 0.001 to about 0.18 percent by weight $B_2O_3$, with respect to the total weight of the primary and the secondary ingredients.

5. An insulated boundary layer ceramic as claimed in Claim 1, wherein the primary ingredients comprise, in relative proportions, from about 94.50 to about 99.82 percent by weight $SrTiO_3$, from about 0.13 to about 2.50 percent by weight $WO_3$, and from about 0.05 to about 3.00 percent by weight $GeO_2$, and wherein the insulating substances comprise from about 0.03 to about 2.90 percent by weight PbO, from about 0.10 to about 4.28 percent by weight $Bi_2O_3$, and from about 0.001 to about 0.18 percent by weight $B_2O_3$, with respect to the total weight of the primary and the secondary ingredients.

6. An insulated boundary layer ceramic as claimed in Claim 1, wherein the primary ingredients comprise, in relative proportions, from about 91.18 to about 99.82 percent by weight $SrTiO_3$, from about 0.13 to about 5.32 percent by weight $Nb_2O_5$, and from about 0.05 to about 3.50 percent by weight ZnO, and wherein the insulating substances comprise from about 0.03 to about 2.90 percent by weight PbO, from about 0.11 to about 4.28 percent by weight $Bi_2O_3$, and from about 0.001 to about 0.18 percent by weight $B_2O_3$, with respect to the total weight of the primary and the secondary ingredients.

7. An insulated boundary layer ceramic as claimed in Claim 1, wherein the primary ingredients comprise, in relative proportions, from about 94.50 to about 99.62 percent by weight $SrTiO_3$, from about 0.33 to about 3.00 percent by weight $Ta_2O_5$, and from about 0.05 to about 2.50 percent by weight ZnO, and wherein the insulating substances comprise from about 0.03 to about 2.80 percent by weight PbO, from about 0.11 to about 4.38 percent by weight $Bi_2O_3$, and from about 0.001 to about 0.18 percent by weight $B_2O_3$, with respect to the total weight of the primary and the secondary ingredients.

8. An insulated boundary layer ceramic as claimed in Claim 1, wherein the primary ingredients comprise, in relative proportions, from about 96.70 to about 99.83 percent by weight $SrTiO_3$, from about 0.15 to about 2.30 percent by weight $WO_3$, and from about 0.02 to about 1.00 percent by weight CuO, and wherein the insulating substances comprise from about 0.03 to about 2.83 percent by weight PbO, from about 0.10 to about 4.30 percent by weight $Bi_2O_3$, and from about 0.001 to about 0.18 percent by weight $B_2O_3$, with respect to the total weight of the primary and the secondary ingredients.

9. An insulated boundary layer ceramic as claimed in Claim 1, wherein the primary ingredients comprise, in relative proportions, from about 91.92 to about 99.62 percent by weight $SrTiO_3$, from about 0.33 to about 4.08 percent by weight $Ta_2O_5$, and from about 0.05 to about 4.00 percent by weight $GeO_2$, and wherein the insulating substances comprise from about 0.02 to about 2.83 percent by weight PbO, from about 0.11 to about 4.33 percent by weight $Bi_2O_3$, and from about 0.001 to about 0.18 percent by weight $B_2O_3$, with respect to the total weight of the primary and the secondary ingredients.

10. An insulated boundary layer ceramic as claimed in Claim 1, wherein the primary ingredients comprise, in relative proportions, from about 93.18 to about 99.85 percent by weight $SrTiO_3$, from about 0.13 to about 5.32 percent by weight $Nb_2O_5$, and from about 0.02 to about 1.50 percent by weight CuO, and wherein the insulating substances comprise from about 0.03 to about 2.75 percent by weight PbO, from about 0.12 to about 4.23 percent by weight $Bi_2O_3$, and from about 0.001 to about 0.18 percent by weight $B_2O_3$, with respect to the total weight of the primary and the secondary ingredients.

11. A process for the fabrication of insulated boundary layer ceramic bodies having dielectric constants of not less than 80,000 dielectric loss tangents of not more than one percent and a resistivity of not less than

$1.0 \times 10^{11}$ ohm-centimeters, which comprises the steps of preparing uninsulated, polycrystalline ceramic bodies composed of primary and secondary ingredients, the primary ingredients comprising, in relative proportions, from about 90.68 to about 99.88 percent by weight $SrTiO_3$, from about 0.07 to about 5.32 percent by weight of at least one of $Nb_2O_5$, $WO_3$ and $Ta_2O_5$, and from about 0.02 to about 4.00 percent by weight of at least one of $GeO_2$, ZnO and CuO, and the secondary ingredients comprising from about 0.02 to about 0.10 part by weight $SiO_2$ and from about 0.01 to about 0.03 part by weight $Al_2O_3$ with respect to 100 parts by weight of the primary ingredients, the ratio in weight of $SiO_2$ to $Al_2O_3$ being from about 1.5 to about 5.0, forming on the uninsulated ceramic bodies layers of insulating substances essentially comprising PbO, $Bi_2O_3$ and $B_2O_3$ in relative proportions of from about 27 to about 61 percent by weight, from about 32 to about 66 percent by weight, and from about two to about 10 percent by weight, respectively, the layers of insulating substances being from about one to about 15 parts by weight with respect to 100 parts of the uninsulated ceramic bodies, and heating the ceramic bodies, together with the layers of insulating substances thereon, thereby causing diffusion of the insulating substances throughout the intergranular boundaries of the ceramic bodies.

12. A process for the fabrication of insulated boundary layer ceramic bodies as claimed in Claim 11, wherein the uninsulated, polycrystalline ceramic bodies are prepared by firing moldings of a mixture of the primary and secondary ingredients in a reductive atmosphere.

13. A process for the fabrication of insulated boundary layer ceramic bodies as claimed in Claim 11 or 12, wherein the primary ingredients comprise, in relative proportions, from about 90.68 to about 99.88 percent by weight $SrTiO_3$, from about 0.07 to about 5.32 percent by weight $Nb_2O_5$, and from about 0.05 to about 4.00 percent by weight $GeO_2$, and wherein the insulating substances layered on the uninsulated ceramic bodies comprise, in relative proportions, from about 32 to about 61 percent by weight PbO, from about 34 to about 64 percent by weight $Bi_2O_3$, and from about two to about 10 percent by weight $B_2O_3$.

14. A process for the fabrication of insulated boundary layer ceramic bodies as claimed in Claim 11 or 12, wherein the primary ingredients comprise, in relative proportions, from about 95.20 to about 99.80 percent by weight $SrTiO_3$, from about 0.15 to about 2.30 percent by weight $WO_3$, and from about 0.05 to about 2.50 percent by weight ZnO, and wherein the insulating substances layered on the uninsulated ceramic bodies comprise, in relative proportions, from about 35 to about 54 percent by weight PbO, from about 36 to about 58 percent by weight $Bi_2O_3$, and from about two to about 10 percent by weight $B_2O_3$.

15. A process for the fabrication of insulated boundary layer ceramic bodies as claimed in Claim 11 or 12, wherein the primary ingredients comprise, in relative proportions, from about 95.18 to about 99.65 percent by weight $SrTiO_3$, from about 0.33 to about 3.32 percent by weight $Ta_2O_5$, and from about 0.02 to about 1.50 percent by weight CuO, and wherein the insulating substances layered on the uninsulated ceramic bodies comprise, in relative proportions, from about 35 to about 54 percent by weight PbO, from about 37 to about 58 percent by weight $Bi_2O_3$, and from about two to about 10 percent by weight $B_2O_3$.

16. A process for the fabrication of insulated boundary layer ceramic bodies as claimed in Claim 11 or 12, wherein the primary ingredients comprise, in relative proportions, from about 94.50 to about 99.82 percent by weight $SrTiO_3$, from about 0.13 to about 2.50 percent by weight $WO_3$, and from about 0.05 to about 3.00 percent by weight $GeO_2$, and wherein the insulating substances layered on the uninsulated ceramic bodies comprise, in relative proportions, from about 32 to about 61 percent by weight PbO, from about 32 to about 60 percent by weight $Bi_2O_3$, and from about two to about 10 percent by weight $B_2O_3$.

17. A process for the fabrication of insulated boundary layer ceramic bodies as claimed in Claim 11 or 12, wherein the primary ingredients comprise, in relative proportions, from about 91.18 to about 99.82 percent by weight $SrTiO_3$, from about 0.13 to about 5.32 percent by weight $Nb_2O_5$, and from about 0.05 to about 3.50 percent by weight ZnO, and wherein the insulating substances layered on the uninsulated ceramic bodies comprise, in relative proportions, from about 30 to about 61 percent by weight PbO, from about 35 to about 60 percent by weight $Bi_2O_3$, and from about two to about 10 percent by weight $B_2O_3$.

18. A process for the fabrication of insulated boundary layer ceramic bodies as claimed in Claim 11 or 12, wherein the primary ingredients comprise, in relative proportions, from about 94.50 to about 99.62 percent by weight $SrTiO_3$, from about 0.33 to about 3.00 percent by weight $Ta_2O_5$, and from about 0.05 to about 2.50 percent by weight ZnO, and wherein the insulating substances layered on the uninsulated ceramic bodies comprise, in relative proportions, from about 31 to about 56 percent by weight PbO, from about 34 to about 66 percent by weight $Bi_2O_3$, and from about two to about 10 percent by weight $B_2O_3$.

19. A process for the fabrication of insulated boundary layer ceramic bodies as claimed in Claim 11 or 12, wherein the primary ingredients comprise, in relative proportions, from about 96.70 to about 99.83 percent by weight $SrTiO_3$, from about 0.15 to about 2.30 percent by weight $WO_3$, and from about 0.02 to about 1.00 percent by weight CuO, and wherein the insulating substances layered on the uninsulated ceramic bodies comprise, in relative proportions, from about 31 to about 58 percent by weight PbO, from about 32 to about 62 percent by weight $Bi_2O_3$, and from about two to about 10 percent by weight $B_2O_3$.

20. A process for the fabrication of insulated boundary layer ceramic bodies as claimed in Claim 11 or 12, wherein the primary ingredients comprise, in relative proportions, from about 91.92 to about 99.62 percent by weight $SrTiO_3$, from about 0.33 to about 4.08 percent by weight $Ta_2O_5$, and from about 0.05 to about 4.00 percent by weight $GeO_2$, and wherein the insulating substances layered on the uninsulated ceramic bodies comprise, in relative proportions, from about 27 to about 58 percent by weight PbO, from about 34 to about 63 percent by weight $Bi_2O_3$, and from about two to about 10 percent by weight $B_2O_3$.

21. A process for the fabrication of insulated boundary layer ceramic bodies as claimed in Claim 11 or 12, wherein the primary ingredients comprise, in relative proportions, from about 93.18 to about 99.85 percent by weight SrTiO$_3$, from about 0.13 to about 5.32 percent by weight Nb$_2$O$_5$, and from about 0.02 to about 1.50 percent by weight CuO, and wherein the insulating substances layered on the uninsulated ceramic bodies comprise, in relative proportions, from about 35 to about 54 percent by weight PbO, from about 40 to about 58 percent by weight Bi$_2$O$_3$, and from about two to about 10 percent by weight B$_2$O$_3$.

**Patentansprüche**

1. Keramisches Material mit isolierenden Schichten an der Kristallkorngrenze mit Dielektrizitätskonstanten von nicht weniger als 80 000, mit Verlustwinkel-Tangenswerten von nicht mehr als 1 Prozent und einem spezifischen Widerstand von nicht weniger als $1,0 \times 10^{11}$ Ohm-cm, und mit primären und sekundären Bestandteilen, die in Kombination den eigentlichen polykristallinen keramischen Körper bilden, und mit isolierenden Substanzen, die über die gesamten Kristallkorngrenzen des eigentlichen keramischen Körpers dispergiert sind, wobei die primären Bestandteile, in relativen Anteilen, aus etwa 90,68 bis etwa 99,88 Gew.-% SrTiO$_3$, aus etwa 0,07 bis etwa 5,32 Gew.-% mindestens einer Verbindung der Gruppe Nb$_2$O$_5$, WO$_3$ und Ta$_2$O$_5$ und aus etwa 0,02 bis etwa 4,00 Gew.-% mindestens einer Verbindung der Gruppe GeO$_2$, ZnO und CuO bestehen, und wobei die sekundären Bestandteile aus etwa 0,02 bis etwa 0,10 Gewichtsteilen SiO$_2$ und aus etwa 0,01 bis etwa 0,03 Gewichtsteilen Al$_2$O$_3$, bezogen auf 100 Gewichtsteile der primären Bestandteile, bestehen, und wobei das Gewichtsverhältnis von SiO$_2$ zu Al$_2$O$_3$ etwa 1,5 bis etwa 5,0 beträgt, und wobei die isolierenden Substanzen aus etwa 0,02 bis etwa 2,90 Gew.-% PbO, aus etwa 0,10 bis etwa 4,38 Gew.-% Bi$_2$O$_3$ und aus etwa 0,001 bis etwa 0,18 Gew.-% B$_2$O$_3$ bestehen, wobei die Prozentsätze der isolierenden Substanzen sämtlich auf das Gesamtgewicht von primären und sekundären Bestandteilen bezogen sind.

2. Keramisches Material mit isolierenden Schichten an der Kristallkorngrenze nach Anspruch 1, wobei die primären Bestandteile, in relativen Anteilen, aus etwa 90,68 bis etwa 99,88 Gew.-% SrTiO$_3$, aus etwa 0,07 bis etwa 5,32 Gew.-% Nb$_2$O$_5$ und aus etwa 0,05 bis etwa 4,00 Gew.-% GeO$_2$ bestehen und wobei die isolierenden Substanzen aus etwa 0,03 bis etwa 2,90 Gew.-% PbO, etwa 0,11 bis etwa 4,34 Gew.-% Bi$_2$O$_3$ und etwa 0,001 bis etwa 0,18 Gew.-% B$_2$O$_3$ bestehen, bezogen auf das Gesamtgewicht von primären und sekundären Bestandteilen.

3. Keramisches Material mit isolierenden Schichten an der Kristallkorngrenze nach Anspruch 1, wobei die primären Bestandteile, in relativen Anteilen, aus etwa 95,20 bis etwa 99,80 Gew.-% SrTiO$_3$, aus etwa 0,15 bis etwa 2,30 Gew.-% WO$_3$ und aus etwa 0,05 bis etwa 2,50 Gew.-% ZnO bestehen und wobei die isolierenden Substanzen aus etwa 0,03 bis etwa 2,75 Gew.-% PbO, aus etwa 0,11 bis etwa 4,23 Gew.-% Bi$_2$O$_3$ und aus etwa 0,001 bis etwa 0,18 Gew.-% B$_2$O$_3$, bezogen auf das Gesamtgewicht von primären und sekundären Bestandteilen, bestehen.

4. Keramisches Material mit isolierenden Schichten an der Kristallkorngrenze nach Anspruch 1, wobei die primären Bestandteile, in relativen Anteilen, aus etwa 95,18 bis etwa 99,65 Gew.-% SrTiO$_3$, aus etwa 0,33 bis etwa 3,32 Gew.-% Ta$_2$O$_5$ und aus etwa 0,02 bis etwa 1,50 Gew.-% CuO bestehen und wobei die isolierenden Substanzen aus etwa 0,03 bis etwa 2,75 Gew.-% PbO, aus etwa 0,11 bis etwa 4,22 Gew.-% Bi$_2$O$_3$ und aus etwa 0,001 bis etwa 0,18 Gew.-% B$_2$O$_3$, bezogen auf das Gesamtgewicht von primären und sekundären Bestandteilen, bestehen.

5. Keramisches Material mit isolierenden Schichten an der Kristallkorngrenze nach Anspruch 1, wobei die primären Bestandteil, in relativen Anteilen, aus etwa 94,50 bis etwa 99,82 Gew.-% SrTiO$_3$, aus etwa 0,13 bis etwa 2,50 Gew.-% WO$_3$ und aus etwa 0,05 bis etwa 3,00 Gew.-% GeO$_2$ bestehen und wobei die isolierenden Substanzen aus etwa 0,03 bis etwa 2,90 Gew.-% PbO, aus etwa 0,10 bis etwa 4,28 Gew.-% Bi$_2$O$_3$ und aus etwa 0,001 bis etwa 0,18 Gew.-% B$_2$O$_3$, bezogen auf das Gesamtgewicht von primären und sekundären Bestandteilen, bestehen.

6. Keramisches Material mit isolierenden Schichten an der Kristallkorngrenze nach Anspruch 1, wobei die primären Bestandteile, in relativen Anteilen, aus etwa 91,18 bis etwa 99,82 Gew.-% SrTiO$_3$, aus etwa 0,13 bis etwa 5,32 Gew.-% Nb$_2$O$_5$ und aus etwa 0,05 bis etwa 3,50 Gew.-% ZnO bestehen und wobei die isolierenden Substanzen aus etwa 0,03 bis etwa 2,90 Gew.-% PbO, aus etwa 0,11 bis etwa 4,28 Gew.-% Bi$_2$O$_3$ und aus etwa 0,001 bis etwa 0,18 Gew.-% B$_2$O$_3$, bezogen auf das Gesamtgewicht der primären und der sekundären Bestandteile, bestehen.

7. Keramisches Material mit isolierenden Schichten an der Kristallkorngrenze nach Anspruch 1, wobei die primären Bestandteile, in relativen Anteilen, aus etwa 94,50 bis etwa 99,62 Gew.-% SrTiO$_3$, aus etwa 0,33 bis etwa 3,00 Gew.-% Ta$_2$O$_5$ und aus etwa 0,05 bis etwa 2,50 Gew.-% ZnO bestehen und wobei die isolierenden Substanzen aus etwa 0,03 bis etwa 2,80 Gew.-% PbO, aus etwa 0,11 bis etwa 4,38 Gew.-% Bi$_2$O$_3$ und aus etwa 0,001 bis etwa 0,18 Gew.-% B$_2$O$_3$, bezogen auf das Gesamtgewicht der primären und der sekundären Bestandteile, bestehen.

8. Keramisches Material mit isolierenden Schichten an der Kristallkorngrenze nach Anspruch 1, wobei die primären Bestandteile, in relativen Anteilen, aus etwa 96,70 bis etwa 99,83 Gew.-% SrTiO$_3$, aus etwa 0,15 bis etwa 2,30 Gew.-% WO$_3$ und aus etwa 0,02 bis etwa 1,00 Gew.-% CuO bestehen und wobei die isolierenden Substanzen aus etwa 0,03 bis etwa 2,83 Gew.-% PbO, aus etwa 0,10 bis etwa 4,30 Gew.-%

$Bi_2O_3$ und aus etwa 0,001 bis etwa 0,18 Gew.-% $B_2O_3$, bezogen auf das Gesamtgewicht der primären und der sekundären Bestandteile, bestehen.

9. Keramisches Material mit isolierenden Schichten an der Kristallkorngrenze nach Anspruch 1, wobei die primären Bestandteile, in relativen Anteilen, aus etwa 91,92 bis etwa 99,62 Gew.-% $SrTiO_3$, aus etwa 0,33 bis etwa 4,08 Gew.-% $Ta_2O_5$ und aus etwa 0,05 bis etwa 4,00 Gew.-% $GeO_2$ bestehen und wobei die isolierenden Substanzen aus etwa 0,02 bis etwa 2,83 Gew.-% PbO, aus etwa 0,11 bis etwa 4,33 Gew.-% $Bi_2O_3$ und aus etwa 0,001 bis etwa 0,18 Gew.-% $B_2O_3$, bezogen auf das Gesamtgewicht der primären und der sekundären Bestandteile, bestehen.

10. Keramisches Material mit isolierenden Schichten an der Kristallkorngrenze nach Anspruch 1, wobei die primären Bestandteile, in relativen Anteilen, aus etwa 93,18 bis etwa 99,85 Gew.-% $SrTiO_3$, aus etwa 0,13 bis etwa 5,32 Gew.-% $Nb_2O_5$ und aus etwa 0,02 bis etwa 1,50 Gew.-% CuO bestehen und wobei die isolierenden Substanzen aus etwa 0,03 bis etwa 2,75 Gew.-% PbO, aus etwa 0,12 bis etwa 4,23 Gew.-% $Bi_2O_3$ und aus etwa 0,001 bis etwa 0,18 Gew.-% $B_2O_3$, bezogen auf das Gesamtgewicht der primären und der sekundären Bestandteile, bestehen.

11. Verfahren zur Herstellung von keramischen Körpen mit isolierenden Schichten an der Kristallkorngrenze mit Dielektrizitätskonstanten von nicht wenigen als 80 000, mit Verlustwinkel-Tangenswerten von nicht mehr als 1 Prozent und mit einem spezifischen Widerstand von nicht weniger als $1,0 \times 10^{11}$ Ohm-cm, wobei die Verfahrensstufen daraus bestehen, daß nichtisolierte, polykristalline keramische Körper hergestellt werden, die aus primären und sekundären Bestandteilen bestehen, wobei die primären Bestandteile, in relativen Anteilen, aus etwa 90,68 bis etwa 99,88 Gew.-% $SrTiO_3$, aus etwa 0,07 bis etwa 5,32 Gew.-% mindestens einer Verbindung der Gruppe $Nb_2O_5$, $WO_3$ und $Ta_2O_5$ und aus etwa 0,02 bis etwa 4,00 Gew.-% mindestens einer Verbindung der Gruppe, $GeO_2$, ZnO und CuO bestehen und wobei die sekundären Bestandteile aus etwa 0,02 bis etwa 0,10 Gewichtsteilen $SiO_2$ und aus etwa 0,01 bis etwa 0,03 Gewichtsteilen $Al_2O_3$ bestehen, bezogen auf 100 Gewichtsteile der primären Bestandteile, und wobei das Gewichtsverhältnis von $SiO_2$ zu $Al_2O_3$ von etwa 1,5 bis etwa 5,0 beträgt, daß auf den nichtisolierten keramischen Körpern Schichten aus isolierenden Substanzen ausgebildet werden, die im wesentlichen aus PbO, $Bi_2O_3$ und $B_2O_3$ in relativen Anteilen von etwa 27 bis etwa 61 Gew.-%, aus etwa 32 bis etwa 66 Gew.-% bzw. aus etwa 2 bis etwa 10 Gew.-% bestehen, wobei die Schichten aus isolierenden Substanzen etwa 1 bis etwa 15 Gewichtsteile, bezogen auf 100 Teile der nichtisolierten keramischen Körper, ausmachen, und daß die keramischen Körper zusammen mit den darauf befindlichen Schichten aus isolierenden Substanzen erhitzt werden, um so eine Diffusion der isolierenden Substanzen über die gesamten Kristallkorngrenzen der keramischen Körper zu bewirken.

12. Verfahren zur Herstellung von keramischen Körpen mit isolierenden Schichten an der Kristallkorngrenze nach Anspruch 11, wobei die nichtisolierten, polykristallinen keramischen Körper durch Brennen von Formkörpern aus einem Gemisch aus den primären und sekundären Bestandteilen in einer reduzierenden Atmosphäre hergestellt werden.

13. Verfahren zur Herstellung von keramischen Körpern mit isolierenden Schichten an der Kristallkorngrenze nach Anspruch 11 oder 12, wobei die primären Bestandteile, in relativen Anteilen, aus etwa 90,68 bis etwa 99,88 Gew.-% $SrTiO_3$, aus etwa 0,07 bis etwa 5,32 Gew.-% $Nb_2O_5$ und aus etwa 0,05 bis etwa 4,00 Gew.-% $GeO_2$ bestehen und wobei die isolierenden Substanzen, mit denen die nichtisolierten keramischen Körper beschichtet sind, in relativen Anteilen aus etwa 32 bis etwa 61 Gew.-% PbO, aus etwa 34 bis etwa 64 Gew.-% $Bi_2O_3$ und aus etwa 2 bis etwa 10 Gew.-% $B_2O_3$ bestehen.

14. Verfahren zur Herstellung von keramischen Körpern mit isolierenden Schichten an der Kristallkorngrenze nach Anspruch 11 oder 12, wobei die primären Bestandteile, in relativen Anteilen, aus etwa 95,20 bis etwa 99,80 Gew.-% $SrTiO_3$, aus etwa 0,15 bis etwa 2,30 Gew.-% $WO_3$ und aus etwa 0,05 bis etwa 2,50 Gew.-% ZnO bestehen und wobei die isolierenden Substanzen, mit denen die nichtisolierten keramischen Körper beschichtet sind, in relativen Anteilen aus etwa 35 bis etwa 54 Gew.-% PbO, aus etwa 36 bis etwa 58 Gew.-% $Bi_2O_3$ und aus etwa 2 bis etwa 10 Gew.-% $B_2O_3$ bestehen.

15. Verfahren zur Herstellung von keramischen Körpern mit isolierenden Schichten an der Kristallkorngrenze nach Anspruch 11 oder 12, wobei die primären Bestandteile, in relativen Anteilen, aus etwa 95,18 bis etwa 99,65 Gew.-% $SrTiO_3$, aus etwa 0,33 bis etwa 3,32 Gew.-% $Ta_2O_5$ und aus etwa 0,02 bis etwa 1,50 Gew.-% CuO bestehen und wobei die isolierenden Substanzen, mit denen die nichtisolierten keramischen Körper beschichtet sind, in relativen Anteilen aus etwa 35 bis etwa 54 Gew.-% PbO, aus etwa 37 bis etwa 58 Gew.-% $Bi_2O_3$ und aus etwa 2 bis etwa 10 Gew.-% $B_2O_3$ bestehen.

16. Verfahren zur Herstellung von keramischen Körpern mit isolierenden Schichten an der Kristallkorngrenze nach Anspruch 11 oder 12, wobei die primären Bestandteile, in relativen Anteilen, aus etwa 94,50 bis etwa 99,82 Gew.-% $SrTiO_3$, aus etwa 0,13 bis etwa 2,50 Gew.-% $WO_3$ und aus etwa 0,05 bis etwa 3,00 Gew.-% $GeO_2$ bestehen und wobei die isolierenden Substanzen, mit denen die nichtisolierten keramischen Körper beschichtet sind, in relativen Anteilen aus etwa 32 bis etwa 61 Gew.-% PbO, aus etwa 32 bis etwa 60 Gew.-% $Bi_2O_3$ und aus etwa 2 bis etwa 10 Gew.-% $B_2O_3$ bestehen.

17. Verfahren zur Herstellung von keramischen Körpern mit isolierenden Schichten an der Kristallkorngrenze nach Anspruch 11 oder 12, wobei die primären Bestandteile, in relativen Anteilen, aus etwa 91,18 bis etwa 99,82 Gew.-% $SrTiO_3$, aus etwa 0,13 bis etwa 5,32 Gew.-% $Nb_2O_5$ und aus etwa 0,05 bis etwa 3,50 Gew.-% ZnO bestehen und wobei die isolierenden Substanzen, mit denen die nichtisolierten keramischen Körper beschichtet sind, in relativen Anteilen aus etwa 30 bis etwa 61 Gew.-% PbO, aus etwa 35 bis etwa 60 Gew.-% Bi$_2$O$_3$ und aus etwa 2 bis etwa 10 Gew.-% B$_2$O$_3$ bestehen.

18. Verfahren zur Herstellung von keramischen Körpern mit isolierenden Schichten an der Kristallkorngrenze nach Anspruch 11 oder 12, wobei die primären Bestandteile, in relativen Anteilen, aus etwa 94,50 bis etwa 99,62 Gew.-% SrTiO$_3$, aus etwa 0,33 bis etwa 3,00 Gew.-% Ta$_2$O$_5$ und aus etwa 0,05 bis etwa 2,50 Gew.-% ZnO bestehen und wobei die isolierenden Substanzen, mit denen die nichtisolierten keramischen Körper beschichtet sind, in relativen Anteilen aus etwa 31 bis etwa 56 Gew.-% PbO, aus etwa 34 bis etwa 66 Gew.-% Bi$_2$O$_3$ und aus etwa 2 bis etwa 10 Gew.-% B$_2$O$_3$ bestehen.

19. Verfahren zur Herstellung von keramischen Körpern mit isolierenden Schichten an der Kristallkorngrenze nach Anspruch 11 oder 12, wobei die primären Bestandteile, in relativen Anteilen, aus etwa· 96,70 bis etwa 99,83 Gew.-% SrTiO$_3$, aus etwa 0,15 bis etwa 2,30 Gew.-% WO$_3$ und aus etwa 0,02 bis etwa 1,00 Gew.-% CuO bestehen und wobei die isolierenden Substanzen, mit denen die nichtisolierten keramischen Körper beschichtet sind, in relativen Anteilen aus etwa 31 bis etwa 58 Gew.-% PbO, aus etwa 32 bis etwa 62 Gew.-% Bi$_2$O$_3$ und aus etwa 2 bis etwa 10 Gew.-% B$_2$O$_3$ bestehen.

20. Verfahren zur Herstellung von keramischen Körpern mit isolierenden Schichten an der Kristallkorngrenze nach Anspruch 11 oder 12, wobei die primären Bestandteile, in relativen Anteilen, aus etwa 91,92 bis etwa 99,62 Gew.-% SrTiO$_3$, aus etwa 0,33 bis etwa 4,08 Gew.-% Ta$_2$O$_5$ und aus etwa 0,05 bis etwa 4,00 Gew.-% GeO$_2$ bestehen und wobei die isolierenden Substanzen, mit denen die nichtisolierten keramischen Körper beschichtet sind, in relativen Anteilen aus etwa 27 bis etwa 58 Gew.-% PbO, aus etwa 34 bis etwa 63 Gew.-% Bi$_2$O$_3$ und aus etwa 2 bis etwa 10 Gew.-% B$_2$O$_3$ bestehen.

21. Verfahren zur Herstellung von keramischen Körpern mit isolierenden Schichten an der Kristallkorngrenze nach Anspruch 11 oder 12, wobei die primären Bestandteile, in relativen Anteilen, aus etwa 93,18 bis etwa 99,85 Gew.-% SrTiO$_3$, aus etwa 0,13 bis etwa 5,32 Gew.-% Nb$_2$O$_5$ und aus etwa 0,02 bis etwa 1,50 Gew.-% CuO bestehen und wobei die isolierenden Substanzen, mit denen die nichtisolierten keramischen Körper beschichtet sind, in relativen Anteilen aus etwa 35 bis etwa 54 Gew.-% PbO, aus etwa 40 bis etwa 58 Gew.-% Bi$_2$O$_3$ und aus etwa 2 bis etwa 10 Gew.-% B$_2$O$_3$ bestehen.

**Revendications**

1. Céramique à couche limite isolée ayant une constante diélectrique non inférieure à 80 000, une tangente des pertes diélectriques non supérieure à un pourcent et une résistivité non inférieure à $1,0 \times 10^{11}$ ohms-centimètre, et comportant des ingrédients primaires et secondaires formant en combinaison une céramique polycrystalline appropriée, et des substances isolantes dispersées dans la totalité des frontières intergranulaires de la céramique même, les ingrédients-primaires comprenant, en proportions relatives, entre environ 90,68 et environ 99,88% en poids de SrTiO$_3$, entre environ 0,07 et environ 5,32% en poids d'au moins une des substances suivantes Nb$_2$O$_5$, WO$_3$ et Ta$_2$O$_5$ et entre environ 0,02 et environ 4,00% en poids d'au moins l'une des substances suivantes GeO$_2$, ZnO et CuO, les ingrédients secondaires comprenant entre environ 0,02 et environ 0,10 partie en poids de SiO$_2$ et entre environ 0,01 et environ 0,03 partie en poids d'Al$_2$O$_3$ par rapport à 100 parties en poids des ingrédients primaires, le rapport en poids de SiO$_2$ et Al$_2$O$_3$ étant compris entre environ 1,5 et environ 5,0, et les substances isolantes comprenant entre environ 0,02 et environ 2,90% en poids de PbO, entre environ 0,10 et environ 4,38% en poids de Bi$_2$O$_3$ et entre environ 0,001 et environ 0,18% en poids de B$_2$O$_3$, les pourcentages des substances isolantes s'entendant tous par rapport au poids total des ingrédients primaires et secondaires.

2. Céramique à couche limite isolée selon la revendication 1, caractérisée en ce que les ingrédients primaires comprennent, en proportions relatives, entre environ 90,68 et environ 99,88% en poids de SrTiO$_3$, entre environ 0,07 et environ 5,32% en poids de Nb$_2$O$_5$ et entre environ 0,05 et environ 4,00% en poids de GeO$_2$, et en ce que les substances isolantes comprennent entre environ 0,03 et environ 2,90% en poids de PbO, entre environ 0,11 et environ 4,34% en poids de Bi$_2$O$_3$ et entre environ 0,001 et environ 0,18% en poids de B$_2$O$_3$, par rapport au poids total des ingrédients primaires et secondaires.

3. Céramique à couche limite isolée selon la revendication 1, caractérisée en ce que les ingrédients primaires comprennent, en proportions relatives, entre environ 95,20 et environ 99,80% en poids de SrTiO$_3$, entre environ 0,15 et environ 2,30% en poids de WO$_3$ et entre environ 0,05 et environ 2,50% en poids de ZnO, et en ce que les substances isolantes comprennent entre environ 0,03 et environ 2,75% en poids de PbO, entre environ 0,11 et environ 4,23% en poids de Bi$_2$O$_3$, et entre environ 0,001 et environ 0,18% en poids de B$_2$O$_3$, par rapport au poids total des ingrédients primaires et secondaires.

4. Céramique à couche limite isolée selon la revendication 1, caractérisée en ce que les ingrédients primaires comprennent, en proportions relatives, entre environ 95,18 et environ 99,65% en poids de SrTiO$_3$, entre environ 0,33 et environ 3,32% en poids de Ta$_2$O$_5$ et entre environ 0,02 et environ 1,50% en poids de CuO, et en ce que les substances isolantes comprennent entre environ 0,03 et environ 2,75% en poids de PbO, entre environ 0,11 et environ 4,22% en poids de Bi$_2$O$_3$ et entre environ 0,001 et environ 0,18% en poids de B$_2$O$_3$ par rapport au poids total des ingrédients primaires et secondaires.

5. Céramique à couche limite isolée selon la revendication 1, caractérisée en ce que les ingrédients primaires comprennent, en proportions relatives, entre environ 94,50 et environ 99,82% en poids de SrTiO$_3$, entre environ 0,13 et environ 2,50% en poids de WO$_3$, et entre environ 0,05 et environ 3,00% en poids de GeO$_2$, et en ce que les substances isolantes comprennent entre environ 0,03 et environ 2,90% en

**0 076 456**

poids de PbO, entre environ 0,10 et environ 4,28% en poids de $Bi_2O_3$ et entre environ 0,001 et environ 0,18% en poids de $B_2O_3$, par rapport au poids total des ingrédients primaires et secondaires.

6. Céramique à couche limite isolée selon la revendication 1, caractérisée en ce que les ingrédients primaires comprennent, en proportions relatives, entre environ 91,18 et environ 99,82% en poids de $SrTiO_3$, entre environ 0,13 et environ 5,32% en poids de $Nb_2O_5$ et entre environ 0,05 et environ 3,50% en poids de ZnO, et en ce que les substances isolantes comprennent entre environ 0,03 et environ 2,90% en poids de PbO, entre environ 0,11 et environ 4,28% en poids de $Bi_2O_3$ et entre environ 0,001 et environ 0,18% en poids de $B_2O_3$, part rapport au poids total des ingrédients primaires et secondaires.

7. Céramique à couche limite isolée selon la revendication 1, caractérisée en ce que les ingrédients primaires comprennent, en proportions relatives, entre environ 94,50 et environ 99,62% en poids de $SrTiO_3$, entre environ 0,33 et environ 3,00% en poids de $Ta_2O_5$, et entre environ 0,05 et environ 2,50% en poids de ZnO, et en ce que les substances isolantes comprennent entre environ 0,03 et environ 2,80% en poids de PbO, entre environ 0,11 et environ 4,38% en poids de $Bi_2O_3$ et entre environ 0,001 et environ 0,18% en poids de $B_2O_3$, par rapport au poids total des ingrédients primaires et secondaires.

8. Céramique à couche limite isolée selon la revendication 1, caractérisée en ce que les ingrédients primaires comprennent, en proportions relatives, entre environ 96,70 et environ 99,83% en poids de $SrTiO_3$, entre environ 0,15 et environ 2,30% en poids de $WO_3$ et entre environ 0,02 et environ 1,00% en poids de CuO, et en ce que les substances isolantes comprennent entre environ 0,03 et environ 2,83% en poids de PbO, entre environ 0,10 et environ 4,30% en poids de $Bi_2O_3$, et entre environ 0,001 et environ 0,18% en poids de $B_2O_3$, par rapport au poids total des ingrédients primaires et secondaires.

9. Céramique à couche limite isolée selon la revendication 1, caractérisée en ce que les ingrédients primaires comprennent, en proportions relatives, entre environ 91,92 et environ 99,62% en poids de $SrTiO_3$, entre environ 0,33 et environ 4,08% en poids de $Ta_2O_5$, et entre environ 0,05 et environ 4,00% en poids de $GeO_2$, et en ce que les substances isolantes comprennent entre environ 0,02 et environ 2,83% en poids de PbO, entre environ 0,11 et environ 4,33% en poids de $Bi_2O_3$ et entre environ 0,001 et environ 0,18% en poids de $B_2O_3$, par rapport au poids total des ingrédients primaires et secondaires.

10. Céramique à couche limite isolée selon la revendication 1, caractérisée en ce que les ingrédients primaires comprennent, en proportions relatives, entre environ 93,18 et environ 99,85% en poids de $SrTiO_3$, entre environ 0,13 et environ 5,32% en poids de $Nb_2O_5$ et entre environ 0,02 et environ 1,50% en poids de CuO, et en ce que les substances isolantes comprennent entre environ 0,03 et environ 2,75% en poids de PbO, entre environ 0,12 et environ 4,23% en poids de $Bi_2O_3$ et entre environ 0,001 et environ 0,18% en poids de $B_2O_3$, par rapport au poids total des ingrédients primaires et secondaires.

11. Procédé de fabrication de corps en céramique à couche limite isolée ayant des constantes diélectriques non inférieures à 80 000, des tangentes de pertes diélectriques ne dépassant pas 1% et une résistivité non inférieure à $1,0 \times 10^{11}$ ohms-centimètre, qui comprend les étapes consistant à préparer des corps en céramique polycrystalline non isolée, constitués d'ingrédients primaires et secondaires, les ingrédients primaires comprenant, en proportions relatives entre environ 90,68 et environ 99,88% en poids de $SrTiO_3$, entre environ 0,07 et environ 5,32% en poids d'au moins l'une des substances suivantes $Nb_2O_5$, $WO_3$ et $Ta_2O_5$ et entre environ 0,02 et environ 4,00% en poids d'au moins l'une des substances suivantes $GeO_2$, ZnO et CuO, et les ingrédients secondaires comprenant entre environ 0,02 et environ 0,10 partie en poids de $SiO_2$ et entre environ 0,01 et environ 0,03 partie en poids de $Al_2O_3$ par rapport à 100 parties en poids des ingrédients primaires, le rapport en poids entre $SiO_2$ et $Al_2O_3$ étant compris entre environ 1,5 et environ 5,0, à former sur les corps en céramique non isolée des couches de substances isolées constituées essentiellement de PbO, $Bi_2O_3$ et $B_2O_3$ dans des proportions relatives entre environ 27 et environ 61% en poids, entre environ 32 et environ 66% en poids, et entre environ deux et environ 10% en poids, respectivement, les couches de substances isolantes étant comprises entre environ un et environ 15 parties en poids par rapport à 100 parties en poids des corps en céramique non isolée, et à chauffer les corps en céramique, en même temps que les couches des substances isolantes sur leur dessus, ce qui a pour effet de provoquer la diffusion des substances isolantes à travers les frontières intergranulaires des corps en céramique.

12. Procédé de fabrication de corps en céramique à couche limite isolée, selon la revendication 11, caractérisé en ce que les corps en céramique polycrystalline non isolée sont préparés en cuisant des moulages d'un mélange des ingrédients primaires et secondaires dans une atmosphère réductrice.

13. Procédé de fabrication de corps en céramique à couche limite isolée selon la revendication 11 ou la revendication 12, caractérisé en ce que les ingrédients primaires comprennent, en proportions relatives, entre environ 90,68 et environ 99,88% en poids de $SrTiO_3$, entre environ 0,07 et environ 5,32% en poids de $Nb_2O_5$ et entre environ 0,05 et environ 4,00% en poids de $GeO_2$, et en ce que les substances isolantes placées en couches sur les corps en céramique non isolée comprennent, en proportions relatives, entre environ 32 et environ 61% en poids de PbO, entre environ 34 et environ 64% en poids de $Bi_2O_3$ et entre environ 2 et environ 10% en poids de $B_2O_3$.

14. Procédé de fabrication de corps en céramique à couche limite isolée selon la revendication 11 ou la revendication 12, caractérisé en ce que les ingrédients primaires comprennent, en proportions relatives, entre environ 95,20 et environ 99,80% en poids de $SrTiO_3$, entre environ 0,15 et environ 2,30% en poids de $WO_3$ et entre environ 0,05 et environ 2,50% en poids de ZnO, et en ce que les substances isolantes placées en couche sur les corps en céramique non isolée comprennent, en proprtions relatives, entre environ 35 et

46

environ 54% en poids de PbO, entre environ 36 et environ 58% en poids de $Bi_2O_3$ et entre environ 2 et environ 10% en poids de $B_2O_3$.

15. Procédé de fabrication de corps en céramique à couche limite isolée selon la revendication 11 ou la revendication 12, caractérisé en ce que les ingrédients primaires comprennent, en proportions relatives, entre environ 95,18 et environ 99,65% en poids de $SrTiO_3$, entre environ 0,33 et environ 3,32% en poids de $Ta_2O_5$, et entre environ 0,02 et environ 1,50% en poids de CuO, et en ce que les substances isolantes placées en couches sur les corps en céramique non isolée comprennent, en proportions relatives, entre environ 35 et environ 54% en poids de PbO, entre environ 37 et environ 58% en poids de $Bi_2O_3$ et entre environ 2 et environ 10% en poids de $B_2O_3$.

16. Procédé de fabrication de corps en céramique à couche limite isolée selon la revendication 11 ou la revendication 12, caractérisé en ce que les ingrédients primaires comprennent, en proportions relatives, entre environ 94,50 et environ 99,82% en poids de $SrTiO_3$, entre environ 0,13 et environ 2,50% en poids de $WO_3$, et entre environ 0,05 et environ 3,00% en poids de $GeO_2$, et en ce que les substances isolantes placées en couches, sur les corps en céramique non isolée comprennent, en proportions relatives, entre environ 32 .et environ 61% en poids de PbO, entre environ 32 et environ 60% en poids de $Bi_2O_3$ et entre environ 2 et environ 10% en poids de $B_2O_3$.

17. Procédé de fabrication de corps en céramique à couche limite isolée selon la revendication 11 ou la revendication 12, caractérisé en ce que les ingrédients primaires comprennent, en proportions relatives, entre environ 91,18 et environ 99,82% en poids de $SrTiO_3$, entre environ 0,13 et environ 5,32% en poids de $Nb_2O_5$ et entre environ 0,05 et environ 3,50% en poids de ZnO, et en ce que les substances isolantes placées en couches sur les corps en céramique non isolée comprennent, en proportions relatives, entre environ 30 et environ 61% en poids de PbO, entre environ·35 et environ 60% en poids de $Bi_2O_3$ et entre environ 2 et environ 10% en poids de $B_2O_3$.

18. Procédé de fabrication de corps en céramique à couche limite isolée selon la revendication 11 ou la revendication 12, caractérisé en ce que les ingrédients primaires comprennent, en proportions relatives, entre environ 94,50 et environ 99,62% en poids de $SrTiO_3$, entre environ 0,33 et environ 3,00% en poids de $Ta_2O_5$, et entre environ 0,05 et environ 2,50% en poids de ZnO, et en ce que les substances isolantes placées en couches sur les corps en céramique non isolée comprennent, en proportions relatives, entre environ 31 et environ 56% en poids de PbO, entre environ 34 et environ 66% en poids de $Bi_2O_3$ et entre environ 2 et environ 10% en poids de $B_2O_3$.

19. Procédé de fabrication de corps en céramique à couche limite isolée selon la revendication 11 ou la revendication 12, caractérisé en ce que les ingrédients primaires comprennent, en proportions relatives, entre environ 96,70 et environ 99,83% en poids de $SrTiO_3$, entre environ 0,15 et environ 2,30% en poids de $WO_3$ et entre environ 0,02 et environ 1,00% en poids de CuO, et en ce que les substances isolantes placées en couches sur les corps en céramique non isolé comprennent en proportions relatives, entre environ 31 à environ 58% en poids de PbO, entre environ 32 et environ 62% en poids de $Bi_2O_3$ et entre environ 2 et environ 10% en poids de $B_2O_3$.

20. Procédé de fabrication de corps en céramique à couche limite isolée selon la revendication 11 ou la revendication 12, caractérisé en ce que les ingrédients primaires comprennent, en proportions relatives, entre environ 91,92 et environ 99,62% en poids de $SrTiO_3$, entre environ 0,33 et environ 4,08% en poids de $Ta_2O_5$ et entre environ 0,05 et environ 4,00% en poids de $GeO_2$, et en ce que les substances isolantes placées en couches sur les corps en céramique non isolée comprennent, en proportions relatives, entre environ 27 et environ 58% en poids de PbO, entre environ 34 et environ 63% en poids de $Bi_2O_3$ et entre environ 2 et environ 10% en poids de $B_2O_3$.

21. Procédé de fabrication de corps en céramique à couche limite isolée selon la revendication 11 ou la revendication 12, caractérisé en ce que les ingrédients primaires comprennent, en proportions relatives, entre environ 93,18 et environ 99,85% en poids de $SrTiO_3$, entre environ 0,13 et environ 5,32% en poids de $Nb_2O_5$ et entre environ 0,02 et environ 1,50% en poids de CuO, et en ce que les substances isolantes placées en couches sur les corps en céramique non isolée comprennent, en proportions relatives, entre environ 35 et environ 54% en poids de PbO, entre environ 40 et environ 58% en poids de $Bi_2O_3$ et entre environ 2 et environ 10% en poids de $B_2O_3$.

# FIG.1

# FIG.2